# EUROPEAN PATENT SPECIFICATION

(11) **EP 4 510 763 B1**
(45) Date of publication and mention of the grant of the patent: **28.10.2026**
(21) Application number: 23778077.0
(22) Date of filing: 27.03.2023
(51) Int. Cl.: H04L 65/1063, H04L 65/1073, H04W 76/00, G06F 9/48, H04L 65/40, H04L 67/51, H04L 67/52, H04L 67/63, H04W 36/00, H04W 60/04, H04L 67/10

(54) **APPLICATION CONTEXT TRANSFER SCENARIO DETERMINATION METHOD AND COMMUNICATION APPARATUS**
VERFAHREN ZUR BESTIMMUNG EINES ANWENDUNGSKONTEXTÜBERTRAGUNGSSZENARIOS UND KOMMUNIKATIONSVORRICHTUNG
PROCÉDÉ DE DÉTERMINATION DE SCÉNARIO DE TRANSFERT DE CONTEXTE D'APPLICATION ET APPAREIL DE COMMUNICATION

(30) Priority: 29.03.2022 CN 202210323867; 16.06.2022 CN 202210689587
(43) Date of publication of application: 19.02.2025
(73) Proprietor: Huawei Technologies Co., Ltd., Shenzhen, Guangdong 518129 (CN)
(72) Inventor: ZHANG, Jian, Shenzhen, Guangdong 518129 (CN); YANG, Yanmei, Shenzhen, Guangdong 518129 (CN); HU, Yajie, Shenzhen, Guangdong 518129 (CN)
(74) Representative: Körber, Martin Hans
(86) International application number: PCT/CN2023/084010
(87) International publication number: WO 2023/185710

(56) References cited:
- WO-A1-2021/137579
- WO-A1-2021/137579
- WO-A1-2021/204510
- KR-A- 20210 087 881
- KR-A- 20210 087 881
- US-A1- 2022 015 018
- US-A1- 2022 015 018
- US-A1- 2023 053 805
- ANONYMOUS: "3 Generation Partnership Project; Technical Specification Group Services and System Aspects; Study on application architecture for enabling Edge Applications; (Release 17)", vol. SA WG6, no. V17.0.0, 19 December 2019 (2019-12-19), pages 1 - 113, XP051840754, Retrieved from the Internet <URL:ftp://ftp.3gpp.org/Specs/archive/23_series/23.758/23758-h00.zip 23758-h00.doc> [retrieved on 20191219]
- SAMSUNG ELECTRONICS: "Informing EES of the selected EAS", 3GPP DRAFT; S6-201812 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. e-meeting; 20201012 - 20201020, 7 October 2020 (2020-10-07), XP051950853, [retrieved on 20201007]
- SAMSUNG ELECTRONICS: "Informing EES of the selected EAS", 3GPP TSG-SA WG6 MEETING #39-BIS-E, S6-201970, 17 October 2020 (2020-10-17), XP051940395

## Description

### TECHNICAL FIELD

This application relates to the field of communication technologies, and in particular, to a method for determining an application context relocation scenario, a communication apparatus, a computer-readable storage medium and a computer program product.

### BACKGROUND

Multi-access edge computing (multi-access edge computing, MEC) means that a service and a cloud computing function required by an internet technology (internet technology, IT) are provided for a user nearby over a wireless access network, to create a carrier-grade service environment with high performance, low latency, and high bandwidth.

In the MEC, an application client (application client, AC) may be served by a plurality of edge application servers (edge application server, EAS). Correspondingly, each EAS stores an application context corresponding to the AC. When an EAS in the plurality of EASs performs application context relocation, a service provided for the AC may be interrupted.

How to avoid a service interruption during application context relocation is a technical problem to be urgently resolved currently.

WO 2021/137579 A1 and US 2023/0053805 A1 disclose a communication system, and a method for enabling a terminal to use a low-latency or broadband service. A MEC in which a terminal establishes a connection with an edge data network positioned close thereto, and accesses an application server running in an edge computing platform or an edge hosting environment operating in an edge enabler server (EES) of the corresponding edge data network to use a data service.

"3 Generation Partnership Project; Technical Specification Group Services and System Aspects; Study on application architecture for enabling Edge Applications; (Release 17)", 3GPP STANDARD; TECHNICAL REPORT; 3GPP TR 23.758, 3RD GENERATION PARTNERSHIP PROJECT (3GPP), MOBILE COMPETENCE CENTRE; FRANCE, vol. SA WG6, no. V17.0.0, pages 1-113, discloses application architectures for enabling edge applications over 3GPP networks, including identifying architecture requirements, supporting application layer functional model and corresponding solutions to enable the deployment of applications on the edge of 3GPP networks, with no impact to edge-unaware applications on the UE and minimal impact to edge-aware applications on the UE.

US 2022/0015018 A1 discloses systems and methods for user equipment (UE) triggered edge computing application context relocation in an edge computing application architecture.

### SUMMARY

The invention is defined by the appended claims. This application provides a method for determining an application context relocation scenario and a communication apparatus, to relocate application contexts in a plurality of EASs together, and avoid a service interruption during application context relocation. The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect, this application provides a method for determining an application context relocation scenario, including: A first entity determines, based on first information, whether a plurality of application context relocation scenarios include an EAS-decided application context relocation scenario, where the first information indicates that application contexts in a plurality of first EASs need to be relocated together. The first entity may select a target application context relocation scenario from the plurality of application context relocation scenarios.

In a possible implementation, that a first entity determines, based on first information, whether a plurality of application context relocation scenarios include an EAS-decided application context relocation scenario may be specifically: The first entity determines, based on the first information, that the plurality of application context relocation scenarios do not include an EAS-decided application context relocation scenario.

In the foregoing technical solution, when the plurality of application context relocation scenarios do not include an EAS-decided application context relocation scenario, the first entity may select the target application context relocation scenario from other application context relocation scenarios than an EAS-decided application context relocation scenario. Application contexts in the plurality of first EASs can be relocated together by using an application context relocation scenario decided by an edge enabler client (edge enabler client, EEC), an AC, or an edge enabler server (edge enabler server, EES), to avoid a service interruption during application context relocation.

In a possible implementation, the first entity may further receive first information.

In a specific implementation, an AC may send the first information to the first entity, and correspondingly, the first entity may receive the first information from the AC. The AC may be served by a plurality of second EASs, and the plurality of first EASs are a part or all of the plurality of second EASs.

In a specific implementation, that the first entity receives the first information from the AC may be specifically: The first entity receives AC configuration information (AC profile) from the AC, where the AC configuration information includes the first information.

In a possible implementation, the first information includes identifiers of the plurality of first EASs and/or a first indication, and the first indication indicates that the application contexts in the plurality of first EASs need to be relocated together.

In a possible implementation, the first entity may further receive second information, where the second information indicates whether a third EAS exists in the plurality of first EASs, and the third EAS has a capability of relocating the application contexts in the plurality of first EASs together, or it is considered that the third EAS has a capability of discovering another EAS different from the third EAS in the plurality of first EASs, or the third EAS has a capability of notifying another EAS different from the third EAS in the plurality of first EASs of application context relocation.

In a possible implementation, that a first entity determines, based on first information, whether a plurality of application context relocation scenarios include an EAS-decided application context relocation scenario may be specifically: The first entity determines, based on the first information and the second information, whether the plurality of application context relocation scenarios include an EAS-decided application context relocation scenario.

Specifically, when the third EAS does not exist in the plurality of first EASs, the plurality of application context relocation scenarios do not include an EAS-decided application context relocation scenario; or when the third EAS exists in the plurality of first EASs, the plurality of application context relocation scenarios include an EAS-decided application context relocation scenario.

In the foregoing technical solution, when the plurality of application context relocation scenarios do not include an EAS-decided application context relocation scenario, the first entity may select the target application context relocation scenario from other application context relocation scenarios than an EAS-decided application context relocation scenario. In this way, the application contexts in the plurality of first EASs are relocated together by using an application context relocation scenario decided by the EEC, the AC, or the EES, to avoid a service interruption during application context relocation.

When the plurality of application context relocation scenarios include an EAS-decided application context relocation scenario, the first entity may select the target application context relocation scenario from the plurality of application context relocation scenarios. Further, when the target application context relocation scenario selected by the first entity is the application context relocation scenario decided by the EEC, the AC, or the EES, the application contexts in the plurality of first EASs can be relocated together. When the target application context relocation scenario selected by the first entity is an EAS-decided application context relocation scenario, the third EAS may execute the decision, that is, discover or notify another EAS different from the third EAS in the plurality of first EASs, so that the application contexts in the plurality of first EASs are relocated together. This helps avoid a service interruption during application context relocation.

In a possible implementation, the first entity is an EEC or an EES.

Specifically, when the first entity is the EEC, the first information is preconfigured in the AC, and the EEC receives the first information from the AC; or the first information is preconfigured in the EEC. The EEC receives, from an EES, the second information forwarded by the EES.

Specifically, when the first entity is the EES, the first information is preconfigured in the AC, and the EES receives, from an EEC, the first information forwarded by the EEC. Alternatively, the first information is preconfigured in the EEC, and the EES receives the first information from the EEC. The EES receives the second information from the third EAS.

In a possible implementation, the AC may further send the identifiers of the plurality of first EASs to the third EAS. In this way, the third EAS can send the second information to the first entity based on the received identifiers of the plurality of first EASs.

According to a second aspect, this application provides a method for determining an application context relocation scenario, including: A first entity receives first information, where the first information indicates that application contexts in a plurality of first EASs need to be relocated together. The first entity sends identifiers of the plurality of first EASs to a third EAS based on the first information, where the third EAS is one or more of the plurality of first EASs.

In the foregoing technical solution, the first entity sends the identifiers of the plurality of first EASs to the third EAS. Correspondingly, after obtaining the identifiers of the plurality of first EASs, the third EAS may have a capability of relocating the application contexts in the plurality of first EASs together. When selecting a target application context relocation scenario, the first entity may select an application context relocation scenario decided by an EEC, an AC, or an EES, so that the application contexts in the plurality of first EASs are relocated together. Alternatively, the first entity may further select an EAS-decided application context relocation scenario. Correspondingly, the third EAS may discover or notify another EAS different from the third EAS in the plurality of first EASs based on the identifiers of the plurality of first EASs, so that the application contexts in the plurality of first EASs are relocated together. This helps avoid a service interruption during application context relocation.

In a possible implementation, the first entity may further determine a target application context relocation scenario. That the first entity sends identifiers of the plurality of first EASs to a third EAS based on the first information may be specifically: When the target application context relocation scenario includes an EAS-decided application context relocation scenario, the first entity sends the identifiers of the plurality of first EASs to the third EAS based on the first information. In the foregoing technical solution, after determining that the target application context relocation scenario includes an EAS-decided application context relocation scenario, the first entity may send the identifiers of the plurality of first EASs to the third EAS based on the first information. This helps avoid unnecessary signaling transmission.

In a possible implementation, that a first entity receives first information may be specifically: The AC sends the first information to the first entity, and correspondingly, the first entity receives the first information from the AC. The AC is served by a plurality of second EASs, and the plurality of first EASs are a part or all of the plurality of second EASs.

In a specific implementation, that the first entity receives the first information from the AC may be specifically: The first entity receives AC configuration information from the AC, where the AC configuration information includes the first information.

In a possible implementation, the first information includes the identifiers of the plurality of first EASs and/or a first indication, and the first indication indicates that the application contexts in the plurality of first EASs need to be relocated together.

In a possible implementation, the first entity is an EEC or an EES.

Specifically, when the first entity is the EEC, the first information is preconfigured in the AC, and the EEC may receive the first information from the AC. Alternatively, the first information is preconfigured in the EEC. Further, the EEC may send the identifiers of the plurality of first EASs to the third EAS through an EES.

When the first entity is the EES, the first information is preconfigured in the AC, and the EES receives, from an EEC, the first information forwarded by the EEC. Alternatively, the first information is preconfigured in the EEC, and the EES receives the first information from the EEC. Further, the EES may send the identifiers of the plurality of first EASs to the third EAS.

According to a third aspect, this application provides a method for determining an application context relocation scenario, including: An EAS determines, based on first information, that an application context relocation scenario supported by the EAS does not include an EAS-decided application context relocation scenario, where the first information indicates that application contexts in a plurality of first EASs need to be relocated together. The EAS sends the application context relocation scenario supported by the EAS. The EAS herein may be specifically a fourth EAS in this application.

In this way, a first entity can select an application context relocation scenario other than an EAS-decided application context relocation scenario as a target application context relocation scenario. That is, when the target application context relocation scenario selected by the first entity is an application context relocation scenario decided by an EEC, an AC, or an EES, this helps relocate the application contexts in the plurality of first EASs together, to avoid a service interruption during application context relocation.

In a possible implementation, the application context relocation scenario supported by the EAS may be used to determine the target application context relocation scenario.

In a possible implementation, that the EAS sends an application context relocation scenario supported by the EAS may be specifically: The EAS sends the application context relocation scenario supported by the EAS to the first entity. Correspondingly, the first entity receives the application context relocation scenario supported by the EAS, and determines the target application context relocation scenario based on the application context relocation scenario supported by the EAS. The first entity may be an EEC or an EES. Specifically, when the first entity is the EEC, the EAS sends the application context relocation scenario supported by the EAS to the EEC through an EES.

In a possible implementation, the first information may be preconfigured in the EAS, or the first information is received by the EAS from the AC or the EEC.

In a possible implementation, that the EAS receives the first information from the AC may be specifically: The AC sends AC configuration information to the EAS, where the AC configuration information includes the first information.

According to a fourth aspect, this application provides a method for determining an application context relocation scenario, including: A first entity obtains capability information of a plurality of first EASs. The first entity determines corresponding target application context relocation scenarios for the plurality of first EASs based on the capability information of the plurality of first EASs. The plurality of first EASs are associated EASs, and application contexts in the associated EASs need to be relocated together. The capability information of the first EAS indicates whether the first EAS has a capability of processing relocation of the application contexts in the associated EASs together.

In a possible implementation, when the first entity determines the corresponding target application context relocation scenarios for the plurality of first EASs based on the capability information of the plurality of first EASs, specifically, the first entity determines, based on the capability information of the plurality of first EASs, whether the target application context relocation scenarios include an application context relocation scenario decided by one of the plurality of first EASs.

In the foregoing technical solution, the capability information of the first EAS indicates whether the first EAS has the capability of processing relocation of the application contexts in the associated EASs together. Therefore, the first entity determines, based on the capability information of the plurality of first EASs, whether a first EAS having the capability of processing relocation of the application contexts in the associated EASs together exists in the plurality of first EASs, and further determines the corresponding target application context relocation scenarios for the plurality of first EASs. In this way, when the first EAS having the capability of processing relocation of the application contexts in the associated EASs together exists in the plurality of first EASs, the first entity may use the application context relocation scenario decided by the first EAS as the target application context relocation scenario. Therefore, in the application context relocation scenario decided by the first EAS, the first EAS may indicate another EAS (that is, another first EAS) in the plurality of first EASs to perform application context relocation together, to avoid a service interruption during application context relocation.

In a possible implementation, when the first entity determines, based on the capability information of the plurality of first EASs, that one of the plurality of first EASs has the capability of processing relocation of the application contexts in the associated EASs together, the first entity determines that the target application context relocation scenarios include an application context relocation scenario decided by one of the plurality of first EASs. When the first entity determines, based on the capability information of the plurality of first EASs, that none of the plurality of first EASs has the capability of processing relocation of the application contexts in the associated EASs together, the first entity determines that the target application context relocation scenarios do not include the application context relocation scenario decided by the first EAS.

In a possible implementation, that the first entity determines, based on the capability information of the first EAS, whether the first EAS has the capability of processing relocation of the application contexts in the associated EASs together may be specifically: The first entity determines, based on the capability information of the first EAS, whether the first EAS supports one or more of the following capability 1 to capability 4:
the capability 1: a capability of obtaining identifiers of the plurality of first EASs;
the capability 2: a capability of sending a relocation notification to another EAS different from the first EAS in the plurality of first EASs;
the capability 3: a capability of receiving a relocation notification from another EAS different from the first EAS in the plurality of first EASs; and
the capability 4: supporting the application context relocation scenario decided by the first EAS.

The relocation notifications in the capability 2 and the capability 3 are used to trigger application context relocation.

In a specific implementation, when determining that the first EAS has a first capability, the first entity determines that the first EAS has the capability of processing relocation of the application contexts in the associated EASs together. When determining that the first EAS does not have the first capability, the first entity determines that the first EAS does not have the capability of processing relocation of the application contexts in the associated EASs together. The first capability is one of the capability 1, the capability 2, and the capability 4.

In a specific implementation, when determining that the first EAS has a first capability group, the first entity determines that the first EAS has the capability of processing relocation of the application contexts in the associated EASs together. When determining that the first EAS has no capability in the first capability group, the first entity determines that the first EAS does not have the capability of processing relocation of the application contexts in the associated EASs together. The first capability group is a combination of a plurality of capabilities in the capability 1, the capability 2, and the capability 4.

In addition, when determining that a first EAS has the capability of processing relocation of the application contexts in the associated EASs together, the first entity may further determine that another first EAS different from the first EAS in the plurality of first EASs has the capability 3, and determine that the target application context relocation scenarios include the application context relocation scenario decided by the one of the plurality of first EASs.

In a possible implementation, if the first entity is an EEC, the EEC further receives, from an EES, the capability information of the plurality of first EASs forwarded by the EES. Alternatively, when the first entity is an EES, the EES further receives capability information of each of the plurality of first EASs from the first EAS, to obtain the capability information of the plurality of first EASs. In this way, based on different first entities, an implementation in which the first entity obtains the capability information of the plurality of first EASs is provided.

In a possible implementation, the first entity further receives first information, where the first information indicates that the plurality of first EASs are associated EASs. In this way, after receiving the first information, the first entity determines that the plurality of first EASs are associated EASs, that is, determines that application contexts in the plurality of first EASs need to be relocated together.

Specifically, when the first entity is the EEC, the first information is preconfigured in the AC, and the EEC receives the first information from the AC; or the first information is preconfigured in the EEC.

Specifically, when the first entity is the EES, the first information is preconfigured in the AC, and the EES receives, from an EEC, the first information forwarded by the EEC. Alternatively, the first information is preconfigured in the EEC, and the EES receives the first information from the EEC.

According to a fifth aspect, this application provides a method for determining an application context relocation scenario, including: A first entity obtains capability information of a second entity. The first entity determines a corresponding target application context relocation scenario for at least one of a plurality of first EASs based on the capability information of the second entity. The plurality of first EASs are associated EASs, and application contexts in the associated EASs need to be relocated together. The capability information of the second entity indicates whether the second entity has a capability of processing relocation of the application contexts in the associated EASs together.

In a possible implementation, there may be one or more second entities. For example, there is one second entity, and the second entity is an AC, an EEC, or an EES. There are two second entities, and the two second entities are respectively an AC and an EEC, or an AC and an EES, or an EEC and an EES. There are three second entities, and the three second entities are respectively an AC, an EEC, and an EES. In addition, when the plurality of second entities include an EES, the plurality of second entities may include a plurality of EESs. For example, there are five second entities, and the five second entities are respectively an AC, an EEC, and three EESs, or the five second entities are respectively an AC and four EESs, or the five second entities are five EESs.

In a possible implementation, when the first entity determines the corresponding target application context relocation scenario for at least one of the plurality of first EASs based on the capability information of the second entity, specifically, when the capability information of the one or more second entities indicates that one of the second entities has the capability of processing relocation of the application contexts in the associated EASs together, the first entity determines that the target application context relocation scenario includes an application context relocation scenario decided by one of the at least one first EAS. In addition, when the capability information of the one or more second entities indicates that none of the one or more second entities has the capability of processing relocation of the application contexts in the associated EASs together, the first entity determines that the target application context relocation scenario does not include the application context relocation scenario decided by the first EAS.

In the foregoing technical solution, the first entity determines, based on the capability information of the one or more second entities, whether a second entity having the capability of processing relocation of the application contexts in the associated EASs together exists in the one or more second entities. When it is determined that the second entity having the capability of processing relocation of the application contexts in the associated EASs together exists, a corresponding target application context relocation scenario is further determined for at least one of the plurality of first EASs. In this way, if a second entity has the capability of processing relocation of the application contexts in the associated EASs together, the first entity may use the application context relocation scenario decided by the first EAS as the target application context relocation scenario corresponding to at least one of the plurality of first EASs. Therefore, in the application context relocation scenario decided by the first EAS, the second entity may be configured to trigger, as indicated by one of the plurality of first EASs, another EAS in the plurality of first EASs to perform application context relocation together, to avoid a service interruption during application context relocation.

In a possible implementation, the capability information of the second entity indicates whether the second entity supports one or more of the following capabilities:
a capability a: a capability of obtaining identifiers of the plurality of first EASs;
a capability b: supporting the application context relocation scenario decided by the first EAS; and
a capability c: a capability of receiving a relocation notification trigger indication from one of the plurality of first EASs, and sending a relocation notification to another first EAS in the plurality of first EASs based on the relocation notification trigger indication, where
the relocation notification is used to trigger application context relocation.

In a specific implementation, when determining that the second entity has a second capability, the first entity determines that the second entity has the capability of processing relocation of the application contexts in the associated EASs together. When determining that the second entity does not have the second capability, the first entity determines that the second entity does not have the capability of processing relocation of the application contexts in the associated EASs together. The second capability is one of the capability a, the capability b, and the capability c.

In another specific implementation, when determining that the second entity has a second capability group, the first entity determines that the second entity has the capability of processing relocation of the application contexts in the associated EASs together. When determining that the second entity has no capability in the second capability group, the first entity determines that the second entity does not have the capability of processing relocation of the application contexts in the associated EASs together. The second capability group is a combination of a plurality of capabilities in the capability a, the capability b, and the capability c.

In a possible implementation, an application context relocation scenario supported by one of the plurality of first EASs includes the application context relocation scenario decided by the first EAS. That the first EAS supports the application context relocation scenario decided by the first EAS may be understood as: The first EAS can detect triggering and make decision about application context relocation, and when determining that application context relocation is required, the first EAS can send a relocation notification trigger indication to the second entity, to indicate the second entity to send a relocation notification to another EAS different from the first EAS in the plurality of first EASs.

In a possible implementation, an application context relocation scenario supported by another EAS different from one of the plurality of first EASs includes an application context relocation scenario detected and triggered by the second entity. That the another EAS supports an application context relocation scenario detected and triggered by the second entity may be understood as: The another EAS can receive a relocation notification from the second entity, and perform application context relocation in response to the relocation notification.

As described above, the first entity determines the target application context relocation scenario for at least one of the plurality of first EASs based on the capability information of the second entity and application context relocation scenarios supported by the plurality of first EASs. The target application context relocation scenario includes the application context relocation scenario decided by the first EAS, and a service interruption can be avoided during application context relocation by using the application context relocation scenario decided by the first EAS.

In a possible implementation, the first entity is an EEC or an EES.

When the first entity is the EEC, the second entity may be an AC or an EES. When the second entity is the AC, the EEC further receives capability information of the AC from the AC; and/or when the second entity is the EES, the EEC further receives capability information of the EES from the EES. In addition, when there are a plurality of second entities, for example, there are two second entities, and the two second entities are an AC and an EES respectively, the EEC further receives capability information of the AC from the AC, and receives capability information of the EES from the EES.

Alternatively,
when the first entity is the EES, the second entity may be an AC or an EEC. When the second entity is the AC, the EEC further receives capability information of the AC from the AC; and/or when the second entity is the EEC, the EES further receives capability information of the EEC from the EEC. In addition, when there are a plurality of second entities, for example, there are two second entities, and the two second entities are an AC and an EES respectively, the EEC further receives capability information of the AC from the AC, and receives capability information of the EES from the EES.

In this way, based on different first entities and second entities, an implementation in which the first entity obtains the capability information of the second entity is provided.

In a possible implementation, the first entity further receives first information, where the first information indicates that the plurality of first EASs are associated EASs. In this way, after receiving the first information, the first entity determines that the plurality of first EASs are associated EASs, that is, determines that application contexts in the plurality of first EASs need to be relocated together.

Specifically, when the first entity is the EEC, the first information is preconfigured in the AC, and the EEC receives the first information from the AC; or the first information is preconfigured in the EEC.

Specifically, when the first entity is the EES, the first information is preconfigured in the AC, and the EES receives, from an EEC, the first information forwarded by the EEC. Alternatively, the first information is preconfigured in the EEC, and the EES receives the first information from the EEC.

In a possible implementation, when the plurality of second entities include a plurality of EESs, that is, when the plurality of first EASs are registered with the plurality of EESs, the first entity may obtain capability information of the plurality of EESs. Capability information of each EES may indicate whether the EES has the capability of processing relocation of the application contexts in the associated EASs together.

An EES (denoted as a first EES) in the plurality of EESs is used for description. Capability information of the first EES indicates whether the first EES supports one or more of the following capabilities:
a capability A: a capability of obtaining the identifiers of the plurality of first EASs;
a capability B: a capability of obtaining an identifier of at least one first EAS registered with the first EES, where the at least one first EAS registered with the first EES is at least one of the plurality of first EASs (associated EASs);
a capability C, a capability of obtaining identifiers of the plurality of EESs; and
a capability D, a capability of receiving a relocation notification trigger indication from one of the plurality of first EASs, and sending a relocation notification to another EAS different from the first EAS in the plurality of first EASs.

For example, the capability D may further include one or more of the following capabilities D1 to D3:
the capability D1: a capability of receiving a relocation notification trigger indication from the first EAS registered with the first EES, and sending a relocation notification to another EAS (that is, another first EAS) registered with the first EES;
the capability D2: a capability of receiving a relocation notification trigger indication from another EES different from the first EES in the plurality of EESs, and sending, based on the relocation notification trigger indication, a relocation notification to at least one first EAS registered with the first EES; and
a capability D3: a capability of receiving a relocation notification trigger indication from one first EAS registered with the first EES, and sending the relocation notification trigger indication to another EES different from the first EES in the plurality of EESs, so that the another EES sends a relocation notification to at least one first EAS registered with the another EES.

The relocation notification is used to trigger application context relocation.

In a specific implementation, when determining that the first EES has a third capability, the first entity determines that the first EES has the capability of processing relocation of the application contexts in the associated EASs together. When determining that the first EES does not have the third capability, the first entity determines that the first EES does not have the capability of processing relocation of the application contexts in the associated EASs together. The third capability is one of the capability A, the capability B, the capability C, and the capability D. Further, the third capability may be one or more of the capability D1 to the capability D3.

In another specific implementation, when determining that the first EES has a third capability group, the first entity determines that the first EES has the capability of processing relocation of the application contexts in the associated EASs together. When determining that the first EES has no capability in the third capability group, the first entity determines that the first EES does not have the capability of processing relocation of the application contexts in the associated EASs together. The third capability group is a combination of a plurality of capabilities in the capability A, the capability B, the capability C, and the capability D. Further, the third capability group is a combination of a plurality of capabilities in the capability A, the capability B, the capability C, the capability D1, the capability D2, and the capability D3.

In a possible implementation, when the first entity determines the corresponding target application context relocation scenario for the at least one of the plurality of first EASs based on the capability information of the second entity, specifically, when the first entity is the EEC, the EEC determines corresponding target application context relocation scenarios for all of the plurality of first EASs based on the capability information of the second entity. When the first entity is the first EES, the first EES determines corresponding target application context relocation scenarios for all of the plurality of first EASs based on the capability information of the second entity, or the first EES determines corresponding target application context relocation scenarios for a part of the plurality of first EASs based on the capability information of the second entity, where the part of the first EASs are specifically at least one first EAS that is in the plurality of first EASs and that is registered with the first EES.

In a possible implementation, when the first entity determines the corresponding target application context relocation scenario for the at least one of the plurality of first EASs based on the capability information of the second entity, specifically, when the first entity is the first EES, the first EES determines corresponding target application context relocation scenarios for all (that is, the plurality of first EASs) of the plurality of first EASs based on the capability information of the second entity. The first EAS may be referred to as a main EAS, and the first EES is an EES that is in the plurality of EESs and that is specified by the AC or the EEC; or a third indication is preconfigured in the first EES, and the third indication indicates that the first EES is an EES that is in the plurality of EESs and that is configured to determine the corresponding target application context relocation scenarios for the plurality of first EASs; or the first EES is an EES that is in the plurality of EESs and with which a specified EAS is registered. The specified EAS may be referred to as a main EAS, and the specified EAS may be specifically an EAS that is in the plurality of first EASs and that is specified by the AC or the EEC, or a fourth indication is preconfigured in the specified EAS, where the fourth indication indicates that the EAS is a main EAS.

In a possible implementation, when the first entity is the first EES, and the second entity is another EES in the plurality of EESs, the first EES further receives capability information of the another EES from the another EES.

According to a sixth aspect, an embodiment of this application provides a communication apparatus.

The apparatus implements a function of the first entity in any one of the first aspect or the possible implementations of the first aspect, or a function of the first entity in any one of the second aspect or the possible implementations of the second aspect, or a function of the first entity in any one of the fourth aspect or the possible implementations of the fourth aspect, or a function of the first entity in any one of the fifth aspect or the possible implementations of the fifth aspect. The apparatus may be specifically an EEC or an EES.

The apparatus implements a function of the AC in any one of the first aspect or the possible implementations of the first aspect, a function of the AC in any one of the second aspect or the possible implementations of the second aspect, or a function of the AC in any one of the third aspect or the possible implementations of the third aspect, or a function of the AC in any one of the fourth aspect or the possible implementations of the fourth aspect, or a function of the AC in any one of the fifth aspect or the possible implementations of the fifth aspect.

The apparatus implements a function of the EAS in any one of the third aspect or the possible implementations of the third aspect.

The apparatus implements a function of the second entity in any one of the fifth aspect or the possible implementations of the fifth aspect. The apparatus may be specifically an EEC, an EES, or an AC.

Functions of the foregoing communication apparatus may be implemented by hardware, or may be implemented by hardware executing corresponding software. The hardware or the software includes one or more modules, units, or means (means) corresponding to the foregoing functions.

In a possible implementation, a structure of the apparatus includes a processing module and a transceiver module.

The processing module is configured to support the apparatus in performing the function of the first entity in any one of the first aspect or the possible implementations of the first aspect, or in any one of the second aspect or the possible implementations of the second aspect, or the function of the first entity in any one of the fourth aspect or the possible implementations of the fourth aspect, or the function of the first entity in any one of the fifth aspect or the possible implementations of the fifth aspect, where the first entity may be specifically an EEC or an EES; or
the processing module is configured to support the apparatus in performing the function of the AC in any one of the first aspect or the possible implementations of the first aspect, or in any one of the second aspect or the possible implementations of the second aspect, or in any one of the third aspect or the possible implementations of the third aspect, or the function of the AC in any one of the fourth aspect or the possible implementations of the fourth aspect, or the function of the AC in any one of the fifth aspect or the possible implementations of the fifth aspect; or
the processing module is configured to support the apparatus in performing the function of the EAS in any one of the third aspect or the possible implementations of the third aspect; or
the processing module is configured to support the apparatus in performing the function of the second entity in any one of the fifth aspect or the possible implementations of the fifth aspect, where the second entity may be specifically an EEC, an EES, or an AC.

The transceiver module is configured to support communication between the apparatus and another communication device. For example, when the apparatus is a first entity, the transceiver module is configured to receive first information from an AC. The communication apparatus may further include a storage module. The storage module is coupled to the processing module, and stores program instructions and data that are necessary for the apparatus. In an example, the processing module may be a processor, the communication module may be a transceiver, the storage module may be a memory, and the memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, so that the apparatus performs the method according to any one of the first aspect or the possible implementations of the first aspect, performs the method according to any one of the second aspect or the possible implementations of the second aspect, performs the method according to any one of the third aspect or the possible implementations of the third aspect, performs the method according to any one of the fourth aspect or the possible implementations of the fourth aspect, or performs the method according to any one of the fifth aspect or the possible implementations of the fifth aspect.

Optionally, the apparatus further includes a communication interface, and the processor is coupled to the communication interface. When the apparatus is a network device or a terminal device, the communication interface may be a transceiver or an input/output interface. When the apparatus is a chip included in the network device or a chip included in the terminal device, the communication interface may be an input/output interface of the chip. Optionally, the transceiver may be a transceiver circuit, and the input/output interface may be an input/output circuit.

According to a seventh aspect, an embodiment of this application provides a chip system, including a processor. The processor is coupled to a memory, and the memory is configured to store a program or instructions. When the program or the instructions are executed by the processor, the chip system is enabled to implement the method according to any one of the first aspect or the possible implementations of the first aspect, implement the method according to any one of the second aspect or the possible implementations of the second aspect, implement the method according to any one of the third aspect or the possible implementations of the third aspect, implement the method according to any one of the fourth aspect or the possible implementations of the fourth aspect, or implement the method according to any one of the fifth aspect or the possible implementations of the fifth aspect.

Optionally, the chip system further includes an interface circuit, and the interface circuit is configured to exchange a code or instructions with the processor.

Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be disposed on different chips respectively.

According to an eighth aspect, an embodiment of this application provides a computer-readable storage medium. The computer-readable storage medium stores a computer program or instructions, and when the computer program or the instructions are executed, a computer is enabled to perform the method according to any one of the first aspect or the possible implementations of the first aspect, perform the method according to any one of the second aspect or the possible implementations of the second aspect, perform the method according to any one of the third aspect or the possible implementations of the third aspect, perform the method according to any one of the fourth aspect or the possible implementations of the fourth aspect, or perform the method according to any one of the fifth aspect or the possible implementations of the fifth aspect.

According to a ninth aspect, an embodiment of this application provides a computer program product. When a computer reads and executes the computer program product, the computer is enabled to perform the method according to any one of the first aspect or the possible implementations of the first aspect, or perform the method according to any one of the second aspect or the possible implementations of the second aspect, or perform the method according to any one of the third aspect or the possible implementations of the third aspect, or perform the method according to any one of the fourth aspect or the possible implementations of the fourth aspect, or perform the method according to any one of the fifth aspect or the possible implementations of the fifth aspect.

According to a tenth aspect, an embodiment of this application provides a communication system. The communication system includes one or more of the first entity, the AC, or the third EAS in the first aspect; or includes one or more of the first entity, the AC, or the third EAS in the second aspect; or includes one or more of the first entity, the AC, or the EAS in the third aspect; or includes one or more of the first entity, the AC, or the EAS in the fourth aspect; or includes one or more of the first entity, the second entity, or the EAS in the fifth aspect. The first entity may be specifically an EEC or an EES; and the second entity may be specifically an EEC, an EES, or the AC.

For technical effects that can be achieved in any one of the sixth aspect to the tenth aspect, refer to descriptions of the beneficial effects in the first aspect to the fifth aspect. Details are not described herein again.

### BRIEF DESCRIPTION OF DRAWINGS

FIG. 1 is a diagram of an edge application architecture according to this application;
FIG. 2 is a schematic flowchart of discovering an EES and an EAS by an EEC according to this application;
FIG. 3 to FIG. 6 are schematic flowcharts of methods for determining an application context relocation scenario in Implementation 1 according to this application;
FIG. 7 to FIG. 9 are schematic flowcharts of methods for determining an application context relocation scenario in Implementation 2 according to this application;
FIG. 10 and FIG. 11 are schematic flowcharts of methods for determining an application context relocation scenario in Implementation 3 according to this application;
FIG. 12 to FIG. 16 are schematic flowcharts of methods for determining an application context relocation scenario in specific scenarios according to this application;
FIG. 17 is a schematic flowchart of a method for determining an application context relocation scenario in Implementation (1) according to this application;
FIG. 18 is a schematic flowchart of a method for determining an application context relocation scenario in Implementation (2) according to this application;
FIG. 19 is a schematic flowchart of a method for determining an application context relocation scenario in Implementation (1) in a specific scenario according to this application;
FIG. 20A and FIG. 20B to FIG. 22A to FIG. 22C are schematic flowcharts of a method for determining an application context relocation scenario in Implementation (2) in specific scenarios according to this application;
FIG. 23 is a diagram of a communication apparatus according to this application; and
FIG. 24 is a diagram of another communication apparatus according to this application.

### DESCRIPTION OF EMBODIMENTS

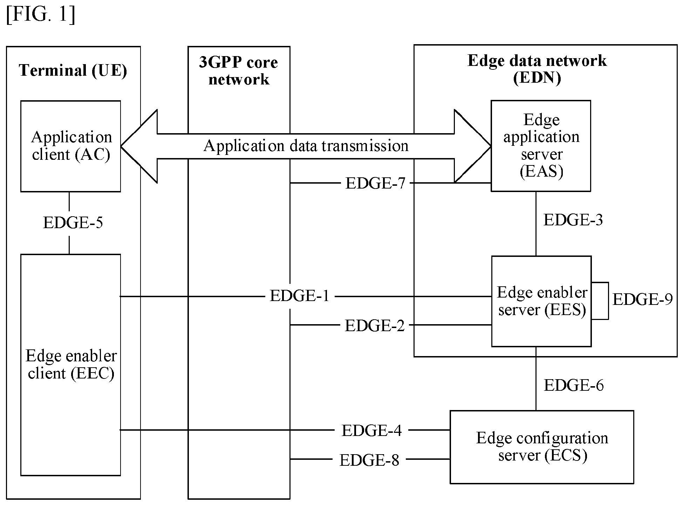

The 3rd generation partnership project (the 3rd generation partnership project, 3GPP) is researching application-enabled multi-access edge computing (multi-access edge computing, MEC) and defines an edge (edge) application architecture shown in FIG. 1.

The application architecture includes terminals, an edge data network (edge data network, EDN), and an edge configuration server (edge configuration server, ECS). The terminals may include an application client (application client, AC) and an edge enabler client (edge enabler client, EEC). The edge data network (edge data network, EDN) may include an edge application server (edge application server, EAS) and an edge enabler server (edge enabler server, EES).

The terminal may alternatively be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle to everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The AC is a client program of an edge application on a terminal side. The AC is used by a user (user) to obtain an application service from an application server (application server, AS). Specifically, the AC may be connected to an AS on a cloud to obtain an application service, or may be connected to an EAS deployed and run on one or more EDNs to obtain an application service.

The EEC is a peer entity of the EES on the terminal side. The EEC may be a middleware layer of the terminal, and may be specifically located in an operating system, or located between the AC and the operating system. The EEC is configured to register information about the EEC and information about the AC with the EES, perform security authentication and authorization, obtain an internet protocol (internet protocol, IP) address of the EAS from the EES, provide an edge computing enabler capability for the AC, and the like. For example, the EEC may provide an edge enabler service for the AC through an application programming interface (application programming interface, API).

The EDN is a special local data network (local data network, LDN). The EDN has an edge enabler function, and the EDN may be identified by a data network access point identifier (data network access identifier, DNAI) and a data network name (data network name, DNN). It may be understood that the EDN is a local data center (a geographical location concept), and may include a plurality of local data networks (local DNs). The local data network is an access point (access point) of a data network that is very close to an attachment point (attachment point) of a user.

The EAS is an application deployed in the EDN. The EAS is specifically an instance (instance) deployed and run for a server application (for example, social media software, augmented reality (augmented reality, AR), or virtual reality (virtual reality, VR)) on the EDN. One or more EASs may be deployed for one application on one or more EDNs. EASs deployed and run on different EDNs may be considered as different EASs of one application. The different EASs may share one domain name, and use one IP address or use different IP addresses. The EAS may also be referred to as an edge application (service), an application instance, an edge application instance, an MEC application (service), an EAS function, or the like.

The EES may also be referred to as an MEC platform or an edge platform. The EES is deployed in the EDN, and one or more EESs may be deployed in one EDN. The EES is configured to provide some enabler capabilities for the EAS deployed on the EDN, to better support deployment of an application in the MEC. Specifically, the EES may support registration of the edge application, authentication and authorization on the terminal, providing IP address information of the EAS for the terminal, providing an identifier and the IP address information of the EAS for the ECS, and the like. Generally, the EAS is registered with one EES, or information about one EAS is configured on one EES by using a management system. The EES is referred to as an EES associated with the EAS. The EES controls/manages the EAS registered with/configured on the EES.

The ECS may also be referred to as an EDN configuration server (edge data network configuration server, EDN CS). The ECS may be responsible for EDN configuration, for example, providing information about the EES for the terminal, providing information about the EAS for the terminal, interacting with a domain name system (domain name system, DNS) of an application to obtain information about the EAS, and obtaining and saving information about the EAS and an IP address from another functional entity.

In this application, a connection may be established between the terminal and the EDN, to transmit application data. The AC, the EEC, the EAS, the EES, and the ECS may be collectively referred to as entities. Two entities may be connected through an interface corresponding to an edge (edge) application architecture. For example, the AC is connected to the EEC through EDGE-5, for another example, the EEC is connected to the ECS through EDGE-4.

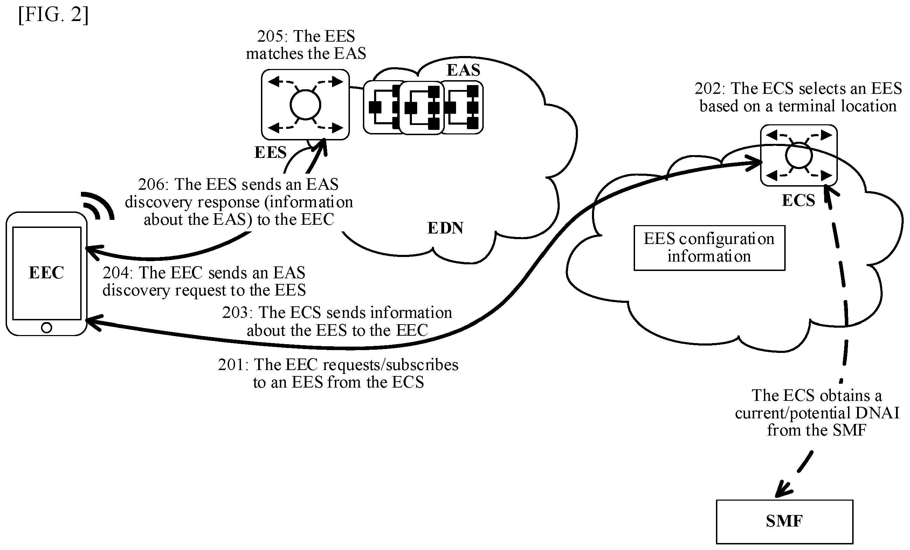

With reference to the structure in FIG. 1, the following explains a process in which the EEC discovers the EES and the EAS. For the process, refer to FIG. 2. Step 201 to step 203 are an EES discovery process, and step 204 to step 206 are an EAS discovery process.

### EES discovery process:

Step 201: The EEC requests/subscribes to the EES from the ECS.

For example, the EEC sends an EES discovery request to the ECS. Correspondingly, the ECS receives the EES discovery request from the EEC. The EES discovery request may include a terminal location.

Step 202: The ECS selects an EES based on the terminal location.

Specifically, the ECS may determine, based on the terminal location, a DNAI of a data network that a terminal needs to access. Then, the ECS selects a corresponding EES for the EEC based on a plurality of pieces of EES configuration information (EES profile), DNAIs, and fully qualified domain names (fully qualified domain name, FQDN) recorded by the ECS. Optionally, before selecting the EES, the ECS may first obtain a current/potential DNAI from a session management function (session management function, SMF).

Step 203: The ECS sends information about the EES to the EEC.

### EAS discovery process:

Step 204: The EEC sends an EAS discovery request to the EES. The EAS discovery request may include a filter (filter) parameter, and the filter parameter may include one or more of an identifier of the AC and an identifier of the terminal.

Step 205: The EES matches a registered EAS.

The EES locally records configuration information (EAS profile) of one or more registered/online EASs. The EES may determine, based on the filter parameter and the locally recorded configuration information of the one or more EASs, an EAS that meets the request from the EEC. Optionally, the EES may find one or more EASs that meet the request from the EEC.

Step 206: The EES sends an EAS discovery response to the EEC. The EAS discovery response may include information about the EAS that is discovered by the EES and that meets the request from the EEC.

Further, the EEC may provide the information about the EAS for the AC, so that the AC can be connected to the EAS based on the information about the EAS. In this way, the EAS can provide a related service for the AC.

It may be considered that an EAS (which may be denoted as a source EAS, a source-EAS, or an S-EAS) that currently provides a service for the AC has a specific service range geographically. When the AC (or the terminal in which the AC is located) moves, for example, the AC moves from a current EDN to another EDN, the source EAS may be unable to continue to provide a service for the AC, or the source EAS is no longer an optimal EAS that provides a service for the AC. In this case, a new EAS (which may be denoted as a target EAS, a target-EAS, or a T-EAS) is required to provide a service for the AC, and the target EAS replaces the source EAS.

Further, the EES with which the source EAS is registered may be denoted as a source EES, a source-EES, or an S-EES, and the EES with which the target EAS is registered may be denoted as a target EES, a target-EES, or a T-EES. In some examples, the source EAS and the target EAS may be registered with a same EES. In this case, the source EES and the target EES are the same.

In a process of replacing the source EAS with the target EAS, both the target EAS and the source EAS need to perform application context relocation (application context relocation, ACR). To be specific, the source EAS relocates a locally stored application context (application context, AC) to the target EAS, to minimize impact of an application running interruption.

The application context is running status information related to the user. The application context may include a context subscribed by the source EAS and a core network, for example, a subscription transaction identifier, or include a context of the user in the EES, for example, a subscription transaction identifier of the source EAS for the user.

The application context relocation procedure may include the following four steps.

### Step 1: Detection process.

For example, a change status of the terminal location may be detected, or whether a user plane path of the terminal is updated may be detected, to obtain a detection result.

The detection process may be performed by one or more of the source EAS, the source EES, the EEC, and the AC.

### Step 2: Decision process.

Determine, based on the detection result, whether application context relocation is required. The decision process may be performed by one or more of the source EAS, the source EES, the EEC, and the AC.

### Step 3: Execution process.

The execution process may include a discovery process of the target EAS, and the discovery process may be performed by one or more of the source EAS, the source EES, the EEC, and the AC.

The execution process may further include an application context relocation process. Specifically, the source EAS may relocate an application context in the source EAS to the target EAS, and the relocation process may be initiated by the source EAS, the target EAS, or the EEC.

In addition, after relocating the application context in the source EAS to the target EAS, the source EAS may notify the terminal or a network of information about the target EAS; or after obtaining the application context from the source EAS, the target EAS may notify the terminal or the network of the information about the target EAS. The information about the target EAS may include address information (such as an IP address and an FQDN) of the target EAS, N6 routing information corresponding to the target EAS, and the like.

### Step 4: Cleanup process:

After the application context is relocated from the source EAS to the target EAS, a plurality of entities perform application context relocation cleanup. For example, the AC may initiate a new socket (socket) connection to the target EAS.

This application provides the following plurality of application context relocation scenarios (application context relocation scenario, ACR scenario). In this application, the application context relocation scenario may also be referred to as an application context relocation mode, an application context relocation manner, an application context relocation method, or the like.

Application context relocation scenario 1: an EEC or AC-decided application context relocation scenario.

The detection process for application context relocation is performed by the EEC.

The decision process for application context relocation is performed by the EEC or the AC.

The execution process for application context relocation may be specifically as follows: The EEC discovers the target EES and the target EAS, the EEC requests the source EES to initiate a user plane path change, and the EEC and the AC initiate application context relocation.

The cleanup process for application context relocation is performed by a plurality of entities.

Application context relocation scenario 2: an EEC-decided application context relocation scenario. Further, the EEC executes an application context relocation scenario by using the source EES.

The detection process for application context relocation is performed by the EEC.

The decision process for application context relocation is also performed by the EEC.

The execution process for application context relocation may be specifically as follows: The EEC discovers the target EES and the target EAS, the EEC requests the source EES to initiate a user plane path change, and then the source EES indicates the source EAS to initiate application context relocation.

The cleanup process for application context relocation is performed by a plurality of entities.

Application context relocation scenario 3: an EEC-decided application context relocation scenario. Further, the EEC executes application context relocation by using the target EES.

The detection process for application context relocation is performed by the EEC.

The decision process for application context relocation is also performed by the EEC.

The execution process for application context relocation may be specifically as follows: The EEC discovers the target EES and the target EAS, the EEC requests the target EES to initiate a user plane path change, and the target EES indicates the target EAS to initiate application context relocation.

The cleanup process for application context relocation is performed by a plurality of entities.

Application context relocation scenario 4: an EAS-decided application context relocation scenario.

The detection process for application context relocation may be specifically as follows: The source EES detects and notifies the source EAS that application context relocation is required, or the source EAS detects and determines that application context relocation is required.

The decision process for application context relocation is also performed by the source EAS.

The execution process for application context relocation may be specifically as follows: The source EAS discovers the target EES and the target EAS, and the source EAS initiates a user plane path change, and initiates application context relocation.

The cleanup process for application context relocation is performed by a plurality of entities.

Application context relocation scenario 5: a source EES-decided application context relocation scenario.

The detection process for application context relocation may be performed by one or more of the source EES, the source EAS, and the EEC.

The decision process for application context relocation is also performed by the source EES. Specifically, the source EES may decide, based on a detection result of the foregoing detection entity (that is, one or more of the source EES, the source EAS, and the EEC), to perform application context relocation.

The execution process for application context relocation may be specifically as follows: The source EES discovers the target EES and the target EAS, the source EES initiates a user plane path change, and indicates the source EAS to initiate application context relocation.

The cleanup process for application context relocation is performed by a plurality of entities.

Application context relocation scenario 6: a source EES-decided application context relocation scenario.

The detection process for application context relocation is performed by the source EES.

The decision process for application context relocation is also performed by the source EES.

The execution process for application context relocation may be specifically as follows: The source EES discovers the target EES and the target EAS, and the source EES initiates a user plane path change, and initiates application context relocation.

The cleanup process for application context relocation is performed by a plurality of entities.

An AC may be served by a plurality of EASs. For example, a game AC needs to be served by two EASs in total: a graphics rendering EAS and a chat function EAS. For another example, a road traffic prediction AC may need to be served by two EASs in total: a road monitoring EAS and a weather forecast EAS.

It may be considered that application contexts of the AC in the plurality of EASs are associated. This is equivalent to: the application contexts of the AC in the plurality of EASs need to be relocated together. This helps ensure continuity of services provided by the plurality of EASs for the AC. In this application, EASs in which application contexts need to be relocated together may be referred to as first EASs.

With reference to the foregoing example of the game AC, the two first EASs that serve the game AC are respectively represented as a graphics rendering EAS 11 and a chat function EAS 12. An application context 1 in the graphics rendering EAS 11 and an application context 2 in the chat function EAS 12 need to be relocated together. Specifically, the graphics rendering EAS 11 relocates the application context 1 in the graphics rendering EAS 11 to a graphics rendering EAS 12, and the chat function EAS 12 relocates the application context 2 in the chat function EAS 12 to a chat function EAS 22. In this way, the graphics rendering EAS 21 and the chat function EAS 22 may continue to serve the game AC based on application contexts obtained through respective relocation.

In the foregoing plurality of application context relocation scenarios.

Both the EEC and the AC are located in the terminal, and the EEC and the AC may obtain identifiers of the plurality of first EASs. That is, in the EEC-decided application context relocation scenario or the AC-decided application context relocation scenario, the EEC or the AC may indicate, based on the identifiers of the plurality of first EASs, the plurality of first EASs to perform application context relocation together.

Configuration information of the plurality of first EASs is registered with the EES, and the EES may also obtain the identifiers of the plurality of first EASs. In the EES-decided application context relocation scenario, the EES may indicate, based on the identifiers of the plurality of first EASs, the plurality of first EASs to perform application context relocation together. In this application, the configuration information may be specifically a profile (profile).

However, for one of the plurality of first EASs, the first EAS can obtain only configuration information of the first EAS, and cannot obtain identifiers of another first EAS different from the first EAS in the plurality of first EASs. Therefore, the first EAS cannot indicate the another first EAS different from the first EAS in the plurality of first EASs to perform application context relocation together. For example, in the foregoing example of the game AC, the graphics rendering EAS 11 may relocate the application context 1 to the graphics rendering EAS 12, but cannot indicate the chat function EAS 12 to relocate the application context 2 to the graphics rendering EAS 22. That is, in the application context relocation scenario decided by the first EAS, there is a case in which the plurality of first EASs cannot relocate application contexts together, resulting in a service interruption during application context relocation.

In this application, an identifier of a first EAS may be specifically address information of the first EAS, for example, an IP address and/or an FQDN of the first EAS.

Therefore, this application provides implementations of a plurality of methods for determining an application context relocation scenario, to determine an appropriate target application context relocation scenario, so as to avoid a service interruption during application context relocation. For example:

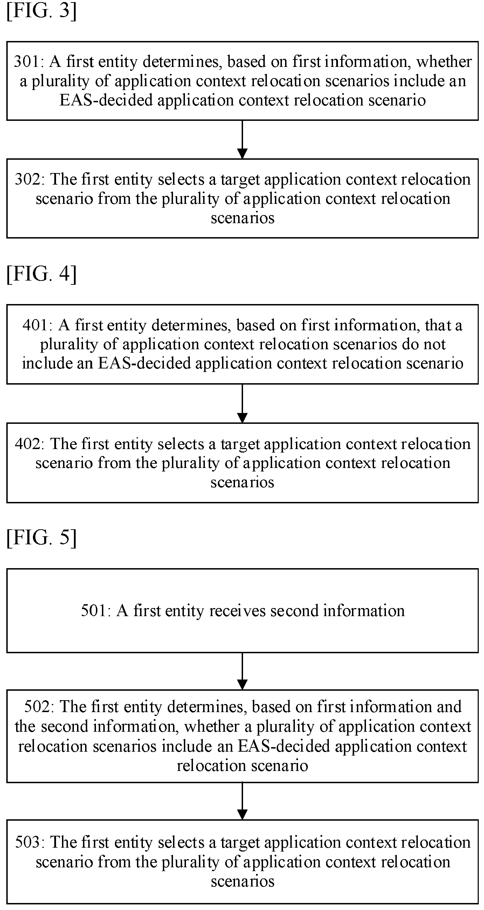

In Implementation 1, a first entity may determine whether a plurality of application context relocation scenarios include an EAS-decided application context relocation scenario, and further select a target application context relocation scenario from the plurality of application context relocation scenarios. For details of Implementation 1, refer to descriptions in the embodiments related to FIG. 3 to FIG. 6, FIG. 12, and FIG. 13.

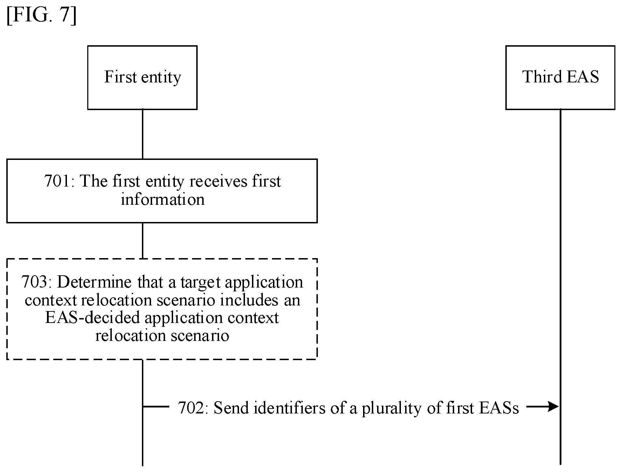

In Implementation 2, a first entity sends identifiers of a plurality of first EASs to a third EAS in the plurality of first EASs, so that the third EAS has a capability of relocating application contexts in the plurality of first EASs together. The first entity further selects a target application context relocation scenario from the plurality of application context relocation scenarios (including an EAS-decided application context relocation scenario). For details of Implementation 2, refer to descriptions in the embodiments related to FIG. 7 to FIG. 9, FIG. 14, and FIG. 15.

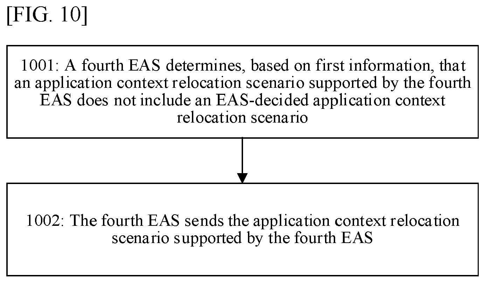

In Implementation 3, after obtaining an indication that application contexts in a plurality of first EASs need to be relocated together, a fourth EAS in the plurality of first EASs determines that an application context relocation scenario supported by the fourth EAS does not include an application context relocation scenario decided by the EAS, and sends the application context relocation scenario supported by the fourth EAS to a first entity. For details of Implementation 3, refer to descriptions in the embodiments related to FIG. 10, FIG. 11, and FIG. 16.

The first entity is an EEC or an EES. For details, refer to descriptions in each implementation.

In Implementation 1 and Implementation 2, the plurality of application context relocation scenarios may be considered as a plurality of candidate application context relocation scenarios. Further, the first entity selects a target application context relocation scenario from the plurality of application context relocation scenarios. The target application context relocation scenario is specifically an application context relocation scenario that is selected by the first entity for at least one of plurality of first EASs and that corresponds to the at least one first EAS.

The following describes Implementation 1 to Implementation 3 provided in this application with reference to the flowcharts.

### Implementation 1

FIG. 3 is a schematic flowchart of a first method for determining an application context relocation scenario in Implementation 1 according to this application.

Step 301: A first entity determines, based on first information, whether a plurality of application context relocation scenarios include an EAS-decided application context relocation scenario.

The first entity may be an EEC or an EES.

The first information indicates that application contexts in a plurality of first EASs need to be relocated together. In other words, the first information indicates that the application contexts in the plurality of first EASs are associated, or the plurality of first EASs are associated. That the application contexts in the plurality of first EASs need (or are required) to be relocated together may also mean that the application contexts in the plurality of first EASs are to be relocated together.

In Example 1, the first information includes identifiers of the plurality of first EASs, and the identifiers of the plurality of first EASs indicate that the application contexts in the plurality of first EASs need to be relocated together. With reference to the foregoing example of the game AC, the first information may include identifiers of two first EAS in total: the graphics rendering EAS 11 and the chat function EAS 12.

In Example 2, the first information includes a first indication, and the first indication may indicate that the application contexts in the plurality of first EASs need to be relocated together. For example, the first indication occupies 1 bit, and when a value of the bit is 1, it indicates that the application contexts in the plurality of first EASs need to be relocated together. For another example, the first indication is a field "yes", and the field "yes" indicates that the application contexts in the plurality of first EASs need to be relocated together.

In Example 3, the first information includes the identifiers of the plurality of first EASs and the first indication. For the identifiers of the plurality of first EASs, refer to the descriptions in Example 1, and for the first indication, refer to the descriptions in Example 2.

In addition, one of the following cases may alternatively be present in this application: The first information is the identifiers of the plurality of first EASs; the first information is the first indication; or the first information is a combination of the identifiers of the plurality of first EASs and the first indication.

Optionally, the first entity may receive the first information from an AC. Specifically, the first information is preconfigured in the AC. When the first entity is an EEC, the EEC may receive the first information from the AC. To be specific, the AC sends the first information to the EEC. When the first entity is an EES, the EES may receive, from an EEC, the first information forwarded by the EEC. To be specific, the AC sends the first information to the EEC, and then the EEC sends the first information to the EES.

In addition, the first information may be preconfigured in the EEC. In this case, if the first entity is the EEC, the EEC may further obtain the first information from a local preconfiguration. If the first entity is the EES, the EES may obtain the first information from an EEC.

After determining, based on the first information, that the application contexts in the plurality of first EASs need to be relocated together, the first entity needs to further determine whether the plurality of application context relocation scenarios do not include an EAS-decided application context relocation scenario.

The first entity may determine whether the plurality of application context relocation scenarios do not include an EAS-decided application context relocation scenario in the following two cases.

Case 1: The first entity determines that the plurality of application context relocation scenarios do not include an EAS-decided application context relocation scenario. For example, an EAS-decided application context relocation scenario is an application context relocation scenario 4. The first entity determines that the plurality of application context relocation scenarios do not include the application context relocation scenario 4. To be specific, the first entity may determine that the plurality of application context relocation scenarios include an application context relocation scenario 1 to an application context relocation scenario 3, an application context relocation scenario 5, and an application context relocation scenario 6.

Case 2: The first entity receives second information, and determines, based on the first information and the second information, whether the plurality of application context relocation scenarios include an EAS-decided application context relocation scenario.

The second information indicates whether a third EAS exists in the plurality of first EASs.

The third EAS has a capability of relocating the application contexts in plurality of first EASs together. It may also be understood that the third EAS has a capability of discovering another EAS different from the third EAS in the plurality of first EASs, or the third EAS has a capability of notifying another EAS different from the third EAS in the plurality of first EASs of application context relocation.

In a specific implementation, that the third EAS has a capability of relocating the application contexts in the plurality of first EASs together may be that the third EAS may store the identifiers of the plurality of first EASs. Optionally, the third EAS may receive the identifiers of the plurality of first EASs from the AC, or receive the identifiers of the plurality of first EASs from the EEC, or is preconfigured with the identifiers of the plurality of first EASs.

When the third EAS receives the identifiers of the plurality of first EASs from the AC, the AC may establish a connection to the third EAS, and the AC sends the identifiers of the plurality of first EASs to the third EAS through the established connection. For example, the AC may send the identifiers of the plurality of first EASs to each of the plurality of first EASs, and a first EAS having a decision-making function in the plurality of first EASs may store the identifiers of the plurality of first EASs, that is, is used as the third EAS.

The first EAS having the decision-making function is, for example, an EAS that supports an EAS-decided application context relocation scenario (for example, the application context relocation scenario 4).

Further, the third EAS may be all or a part of the plurality of first EASs. To be specific, if each of the plurality of first EASs has the capability of relocating the application contexts in the plurality of first EASs together, each first EAS is a third EAS. If a part of first EASs in the plurality of first EASs have the capability of relocating the application contexts in the plurality of first EASs together, the part of first EASs are third EASs.

In a possible manner, the first entity may receive second information sent by each of the plurality of first EASs, where the second information indicates whether the first EAS that sends the second information is the third EAS. The first entity determines, based on the second information from each of the plurality of first EASs, whether the third EAS exists in the plurality of first EASs.

For example, the second information may include a first option or a second option, and the first option indicates that a first EAS that sends the second information stores the identifiers of the plurality of first EASs. That is, the first EAS that sends the first option is the third EAS. The second option indicates that a first EAS that sends the second information does not store the identifiers of the plurality of first EASs. That is, the first EAS that sends the second option is not the third EAS.

For example, the second information may be the first option or the second option. For example, the second information may occupy 1 bit. The first option is that a value of the bit is 1, and the second option is that a value of the bit is 0.

In another possible manner, the first entity may receive the second information sent by the third EAS in the plurality of first EASs. Specifically, after receiving second information from a first EAS, the first entity may determine that the first EAS that sends the second information is the third EAS. For example, the second information may include the first option, or the second information is the first option. For another example, the second information includes the identifiers of the plurality of first EASs, or the second information is the identifiers of the plurality of first EASs.

In a possible manner of Case 2, when no third EAS exists in the plurality of first EASs, the plurality of application context relocation scenarios do not include an EAS-decided application context relocation scenario.

Specifically, if the first entity determines, based on the first information, that the application contexts in the plurality of first EASs need to be relocated together, and determines, based on the second information, that no third EAS exists in the plurality of first EASs, the first entity may further determine that the plurality of application context relocation scenarios do not include an EAS-decided application context relocation scenario. For example, an EAS-decided application context relocation scenario is the application context relocation scenario 4. The first entity determines that the plurality of application context relocation scenarios do not include the application context relocation scenario 4, to be specific, determines that the plurality of application context relocation scenarios include the application context relocation scenario 1 to the application context relocation scenario 3, the application context relocation scenario 5, and the application context relocation scenario 6.

In another possible manner of Case 2, when the third EAS exists in the plurality of first EASs, the plurality of application context relocation scenarios include an EAS-decided application context relocation scenario.

Specifically, if the first entity determines, based on the first information, that the application contexts in the plurality of first EASs need to be relocated together, and determines, based on the second information, that the third EAS exists in the plurality of first EASs, the first entity may determine that the plurality of application context relocation scenarios include an EAS-decided application context relocation scenario. For example, an EAS-decided application context relocation scenario is the application context relocation scenario 4. The first entity determines that the plurality of application context relocation scenarios include the application context relocation scenario 4, to be specific, determines that the plurality of application context relocation scenarios include the application context relocation scenario 1 to the application context relocation scenario 6.

Step 302: The first entity selects a target application context relocation scenario from the plurality of application context relocation scenarios.

In a possible manner, the plurality of application context relocation scenarios do not include an EAS-decided application context relocation scenario, and the first entity may select the target application context relocation scenario from other application context relocation scenarios than an EAS-decided application context relocation scenario. In this way, the application contexts in the plurality of first EASs are relocated together by using an application context relocation scenario decided by the EEC, the AC, or the EES, to avoid a service interruption during application context relocation.

In another possible manner, the plurality of application context relocation scenarios include an EAS-decided application context relocation scenario, and the first entity may select the target application context relocation scenario from the plurality of application context relocation scenarios. Further, when the target application context relocation scenario selected by the first entity is the application context relocation scenario decided by the EEC, the AC, or the EES, the application contexts in the plurality of first EASs can be relocated together. When the target application context relocation scenario selected by the first entity is an EAS-decided application context relocation scenario, the third EAS may execute the decision, that is, discover or notify another EAS different from the third EAS in the plurality of first EASs, so that the application contexts in the plurality of first EASs are relocated together. This helps avoid a service interruption during application context relocation.

FIG. 4 is a schematic flowchart of a second method for determining an application context relocation scenario in Implementation 1 according to this application. The method for determining an application context relocation scenario shown in FIG. 4 is a specific implementation of the method for determining an application context relocation scenario shown in FIG. 3. For a technical solution that is not described in detail in the embodiment related to FIG. 4, refer to the descriptions in the embodiment related to FIG. 3.

Step 401: A first entity determines, based on first information, that a plurality of application context relocation scenarios do not include an EAS-decided application context relocation scenario.

For the first information, refer to the descriptions of the first information in step 301.

Optionally, the first entity determines, based on the first information, that the plurality of application context relocation scenarios do not include an EAS-decided application context relocation scenario. For a specific implementation, refer to the descriptions of Case 1 in step 301.

Step 402: The first entity selects a target application context relocation scenario from the plurality of application context relocation scenarios.

Specifically, the first entity selects the target application context relocation scenario from other application context relocation scenarios than an EAS-decided application context relocation scenario.

In this way, application contexts in a plurality of first EASs are relocated together by using an application context relocation scenario decided by an EEC, an AC, or an EES, to avoid a service interruption during application context relocation.

FIG. 5 is a schematic flowchart of a third method for determining an application context relocation scenario in Implementation 1 according to this application. The method for determining an application context relocation scenario shown in FIG. 5 is another specific implementation of the method for determining an application context relocation scenario shown in FIG. 3. For a technical solution that is not described in detail in the embodiment related to FIG. 5, refer to the descriptions in the embodiment related to FIG. 3.

Step 501: A first entity receives second information.

For the second information, refer to the descriptions of the second information in step 301.

Step 502: The first entity determines, based on first information and the second information, whether a plurality of application context relocation scenarios include an EAS-decided application context relocation scenario.

For the first information, refer to the descriptions of the first information in step 301.

Optionally, the first entity determines, based on the first information and the second information, that the plurality of application context relocation scenarios do not include an EAS-decided application context relocation scenario. For a specific implementation, refer to the descriptions that the plurality of first EASs do not include the third EAS in Case 2 in step 301.

Optionally, the first entity determines, based on the first information and the second information, that the plurality of application context relocation scenarios include an EAS-decided application context relocation scenario. For a specific implementation, refer to the descriptions that the plurality of first EASs include the third EAS in Case 2 in step 301.

Step 503: The first entity selects a target application context relocation scenario from the plurality of application context relocation scenarios.

For a specific implementation, refer to the descriptions in step 302.

It should be added that, before the first entity determines, based on the first information, whether the plurality of application context relocation scenarios include an EAS-decided application context relocation scenario in step 301, the first entity may further perform the following operations.

The first entity may obtain application context relocation scenarios respectively supported by entities: the EES, the AC, the plurality of first EASs, and the EEC, and then determine, based on the application context relocation scenarios respectively supported by the entities, an application context relocation scenario jointly supported by the plurality of entities. The first entity further determines, based on the application context relocation scenario jointly supported by the plurality of entities and the first information, whether the plurality of application context relocation scenarios include an EAS-decided application context relocation scenario.

For example, the EES, the AC, and the EEC all support the application context relocation scenario 1 to the application context relocation scenario 6, and the plurality of first EASs all support the application context relocation scenario 1 to the application context relocation scenario 4. Correspondingly, the first entity may use the application context relocation scenario 1 to the application context relocation scenario 4 that are jointly supported by the plurality of entities as the plurality of application context relocation scenarios. The first entity further determines whether the plurality of application context relocation scenarios include the application context relocation scenario 4. If the plurality of application context relocation scenarios include the application context relocation scenario 4, the first entity may select the target application context relocation scenario from the application context relocation scenario 1 to the application context relocation scenario 4. If the plurality of application context relocation scenarios do not include the application context relocation scenario 4, the first entity may select the target application context relocation scenario from the application context relocation scenario 1 to the application context relocation scenario 3.

Similarly, before step 401 and before step 502, the first entity may obtain the application context relocation scenarios respectively supported by entities: the EES, the AC, the plurality of first EASs, and the EEC, then determine, based on the application context relocation scenarios respectively supported by the entities, an application context relocation scenario jointly supported by the plurality of entities, and further determine whether the plurality of application context relocation scenarios include an EAS-decided application context relocation scenario.

Optionally, after the first entity selects the target application context relocation scenario from the plurality of application context relocation scenarios, the first entity may further send the target application context relocation scenario.

Specifically, when the first entity is the EES, the EES may separately send the target application context relocation scenario to the AC, the plurality of first EASs, and the EEC. When the EES sends the target application context relocation scenario to the AC, specifically, the EES may send the target application context relocation scenario to the EEC, and then the EEC sends the target application context relocation scenario to the AC. Correspondingly, the EES, the AC, the plurality of first EASs, and the EEC may perform related actions in application context relocation based on the target application context relocation scenario.

When the first entity is the EEC, the EEC may separately send the target application context relocation scenario to the EES, the AC, and the plurality of first EASs. When the EEC sends the target application context relocation scenario to a first EAS, specifically, the EEC may send the target application context relocation scenario to the EES, and then the EES sends the target application context relocation scenario to the first EAS. Correspondingly, the EES, the AC, the plurality of first EASs, and the EEC may perform related actions in application context relocation based on the target application context relocation scenario.

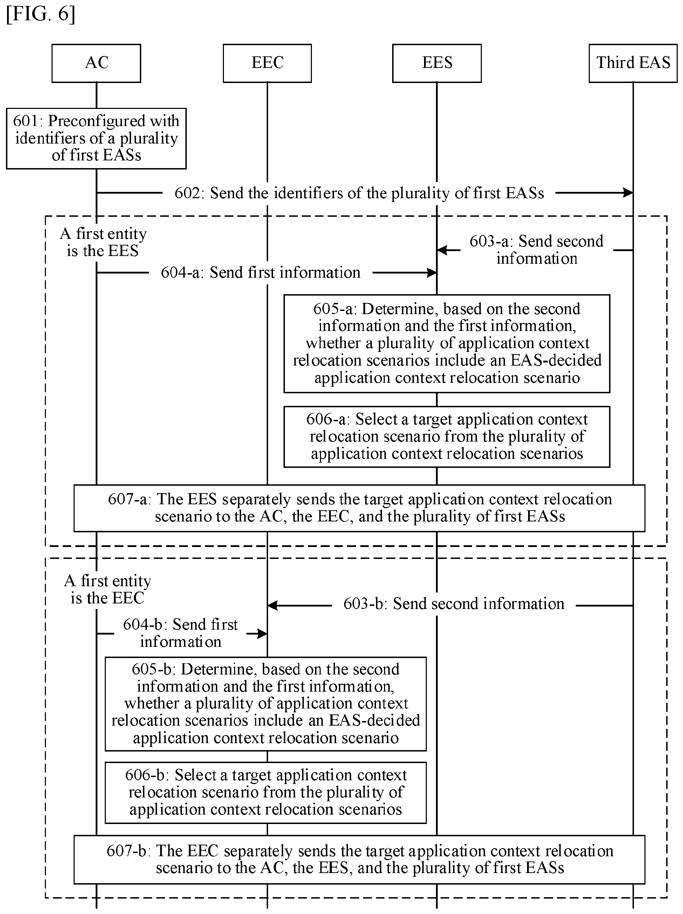

FIG. 6 is a schematic flowchart of a fourth method for determining an application context relocation scenario in Implementation 1 according to this application. The method for determining an application context relocation scenario shown in FIG. 6 is a specific implementation of the method for determining an application context relocation scenario shown in FIG. 5. The specific implementation may be implemented through interaction between an AC, an EEC, an EES, and a third EAS. For a technical solution that is not described in detail in the embodiment related to FIG. 6, refer to the descriptions in the embodiment related to FIG. 5, or further refer to the descriptions in the embodiment related to FIG. 3.

Step 601: The AC is preconfigured with identifiers of a plurality of first EASs.

Optionally, AC configuration information (AC profile) includes a first EAS list (EAS list), and the first EAS list may be a list including the identifiers of the plurality of first EASs.

The AC configuration information may further include an AC identifier (AC ID), an application context relocation scenario supported by the AC, and the like.

Step 602: The AC sends the identifiers of the plurality of first EASs (or referred to as the first EAS list) to the third EAS.

For a specific implementation, refer to the descriptions about sending the identifiers of the plurality of first EASs by the AC to the third EAS in Case 2 in step 301.

When the first entity is the EES, reference may be made to step 603-a to step 607-a.

Step 603-a: The third EAS sends second information to the EES.

For example, the EES may obtain the second information from the third EAS in an EAS registration procedure. Specifically, the third EAS sends an EAS registration request (EAS registration request) to the EES. The EAS registration request includes EAS configuration information (EAS profile), and the EAS configuration information includes the second information. Correspondingly, the EES sends an EAS registration response (EAS registration response) to the third EAS. Optionally, the EAS configuration information further includes an identifier (EAS ID) of the third EAS and an application context relocation scenario supported by the third EAS.

In addition, the EAS registration procedure may be alternatively replaced with an EAS update procedure. To be specific, the EAS registration request is replaced with an EAS update request (EAS update request), and the EAS registration response is replaced with an EAS update response (EAS update response).

Step 604-a: The AC sends first information to the EES.

For example, the EES may obtain the first information from the AC based on an AC registration procedure and an EEC registration procedure. Specifically, the AC sends an AC registration request (AC registration request) to the EEC. The AC registration request includes the AC configuration information, and the AC configuration information includes the first information. Optionally, the AC configuration information further includes an application context relocation scenario supported by the AC. Correspondingly, the EEC sends an AC registration response (AC registration request) to the AC.

The EEC further sends an EEC registration request (EEC registration request) to the EES. The EEC registration request includes the AC configuration information, that is, includes the first information. Correspondingly, the EES sends an EEC registration response (EEC registration response) to the EEC.

In addition, the AC registration procedure may be alternatively replaced with an AC update procedure. To be specific, the AC registration request is replaced with an AC update request (AC update request), and the AC registration response is replaced with an AC update response (AC update response). Similarly, the EEC registration procedure may be alternatively replaced with an EEC update procedure. To be specific, the EEC registration request is replaced with an EEC update request (EEC update request), and the EEC registration response is replaced with an EEC update response (EEC update response).

In this application, a sequence of step 603-a and step 604-a is not limited.

Step 605-a: The EES determines, based on the second information and the first information, whether a plurality of application context relocation scenarios include an EAS-decided application context relocation scenario.

Step 606-a: The EES selects a target application context relocation scenario from the plurality of application context relocation scenarios.

Step 607-a: The EES separately sends the target application context relocation scenario to the AC, the EEC, and the plurality of first EASs.

The EES may send the target application context relocation scenario to the AC through the EEC. To be specific, the EES first sends the target application context relocation scenario to the EEC, and then the EEC sends the target application context relocation scenario to the AC.

For a specific implementation of step 603-a to step 607-a, further refer to the descriptions in step 502, or refer to the descriptions in Case 2 in step 301.

When the first entity is the EEC, reference may be made to step 603-b to step 607-b.

Step 603-b: The third EAS sends second information to the EEC.

Specifically, the third EAS may send the second information to the EEC through the EES. To be specific, the third EAS first sends the second information to the EES, and then the EES sends the second information to the EEC.

For example, the EEC may obtain the second information based on an EAS registration procedure and an EEC registration procedure. For example, the third EAS sends an EAS registration request to the EES. The EAS registration request includes EAS configuration information, and the EAS configuration information includes the second information. Optionally, the EAS configuration information further includes an identifier of the third EAS and an application context relocation scenario supported by the third EAS. Correspondingly, the EES sends an EAS registration response to the third EAS.

Further, the EES receives an EEC registration request from the EEC, and sends an EEC registration response to the EEC. The EEC registration response includes the second information. Optionally, the EEC registration response further includes an application context relocation scenario supported by the EES, the identifier of the third EAS, and the application context relocation scenario supported by the third EAS.

In addition, the EAS registration procedure may be alternatively replaced with an EAS update procedure. To be specific, the EAS registration request is replaced with an EAS update request, and the EAS registration response is replaced with an EAS update response. Similarly, the EEC registration procedure may be alternatively replaced with an EEC update procedure. To be specific, the EEC registration request is replaced with an EEC update request, and the EEC registration response is replaced with an EEC update response.

Step 604-b: The AC sends first information to the EEC.

For example, the EEC may obtain the first information from the AC in an AC registration procedure. Specifically, the AC sends an AC registration request to the EEC. The AC registration request includes the AC configuration information, and the AC configuration information includes the first information. Correspondingly, the EEC sends an AC registration response to the AC. In addition, the AC registration procedure may be alternatively replaced with an AC update procedure. To be specific, the AC registration request is replaced with an AC update request, and the AC registration response is replaced with an AC update response.

In this application, a sequence of step 603-b and step 604-b is not limited.

Step 605-b: The EEC determines, based on the second information and the first information, whether a plurality of application context relocation scenarios include an EAS-decided application context relocation scenario.

Step 606-b: The EEC selects a target application context relocation scenario from the plurality of application context relocation scenarios.

Step 607-b: The EEC separately sends the target application context relocation scenario to the AC, the EEC, and the plurality of first EASs.

The EEC may send the target application context relocation scenario to a first EAS through the EES. To be specific, the EEC first sends the target application context relocation scenario to the EES, and then the EES sends the target application context relocation scenario to the first EAS.

For a specific implementation of step 603-b to step 607-b, refer to the descriptions in step 502, or refer to the descriptions in Case 2 in step 301.

### Implementation 2

FIG. 7 is a schematic flowchart of a first method for determining an application context relocation scenario in Implementation 2 according to this application. For a term and a technical solution that are not described in detail in the method for determining an application context relocation scenario shown in FIG. 7, refer to descriptions in a related embodiment in Implementation 1.

Step 701: A first entity receives first information.

For the first information and descriptions of receiving the first information by the first entity, refer to descriptions in step 301, step 604-a, or step 604-b.

When the first information includes identifiers of a plurality of first EASs or is the identifiers of the plurality of first EASs, the first entity may determine the identifiers of the plurality of first EASs based on the first information.

When the first information includes the identifiers of the plurality of first EASs and a first indication, or a combination of the identifiers of the plurality of first EASs and the first indication, the first entity may determine the identifiers of the plurality of first EASs based on the first information.

When the first information includes the first indication or is the first indication, the first entity may further obtain the identifiers of the plurality of first EASs based on the first indication. For example, when the first entity is an EES, the EES may receive the identifiers of the plurality of first EASs from an AC or an EEC. When the first entity is an EEC, the EEC may receive the identifiers of the plurality of first EASs from an AC.

Step 701 is optional. When the first entity is the EEC, the first information may be preconfigured in the EEC. Alternatively, the identifiers of the plurality of first EASs may be preconfigured in the EEC.

Step 702: The first entity sends the identifiers of the plurality of first EASs to a third EAS based on the first information.

For descriptions of the third EAS, refer to the descriptions in Case 2 in step 301.

Optionally, the first entity may first receive, from the third EAS, an application context relocation scenario supported by the third EAS. After determining that the third EAS has a decision-making function, the first entity sends the identifiers of the plurality of first EASs to the third EAS. The third EAS has the decision-making function. For example, the third EAS supports an application context relocation scenario (for example, an application context relocation scenario 4) decided by an EAS.

For example, the plurality of first EASs include an EAS 1 to an EAS 5, the EAS 1 supports an application context relocation scenario 1 to an application context relocation scenario 4, and the EAS 2 to the EAS 5 support only the application context relocation scenario 1 to the application context relocation scenario 3. The first entity determines that the EAS 1 supports the application context relocation scenario 4, and sends the identifiers of the plurality of first EASs to the EAS 1 (that is, the third EAS). The first entity determines that none of the EAS 2 to the EAS 5 supports the application context relocation scenario 4, and may not send the identifiers of the plurality of first EASs to the EAS 2 to the EAS 5.

In a possible implementation, after determining the target application context relocation scenario, the first entity sends the identifiers of the plurality of first EASs to the third EAS based on the first information.

In another possible implementation, after determining the target application context relocation scenario, the first entity further determines whether to send the identifiers of the plurality of first EASs to the third EAS based on the first information.

For example, when determining that the target application context relocation scenario includes an EAS-decided application context relocation scenario (for example, step 703 in FIG. 7), the first entity further sends the identifiers of the plurality of first EASs to the third EAS based on the first information. When determining that the target application context relocation scenario does not include an EAS-decided application context relocation scenario, the first entity may not send the identifiers of the plurality of first EASs to the third EAS. For example, the first entity may send the target application context relocation scenario and the identifiers of the plurality of first EASs to the third EAS by using a same message, or may send the target application context relocation scenario and the identifiers of the plurality of first EASs to the third EAS by using two different messages.

In another possible implementation, the first entity may first send the identifiers of the plurality of first EASs to the third EAS based on the first information, and then determine the target application context relocation scenario. In this case, the first entity may select the target application context relocation scenario from the plurality of application context relocation scenarios that include an EAS-decided application context relocation scenario.

Optionally, when determining the target application context relocation scenario, the first entity may further first determine, based on the first information, that application contexts in the plurality of first EASs need to be relocated together, and further determine the target application context relocation scenario. For details, refer to related descriptions of determining the target application context relocation scenario by the first entity in step 302.

Optionally, when the first entity is the EES, after determining the target application context relocation scenario, the EES may separately send the target application context relocation scenario to the plurality of first EASs, the EEC, and the AC. Correspondingly, the EES, the AC, the plurality of first EASs, and the EEC may perform related actions in application context relocation based on the target application context relocation scenario.

When the first entity is the EEC, after determining the target application context relocation scenario, the EEC may separately send the target application context relocation scenario to the plurality of first EASs, the EES, and the AC. Correspondingly, the EES, the AC, the plurality of first EASs, and the EEC may perform related actions in application context relocation based on the target application context relocation scenario.

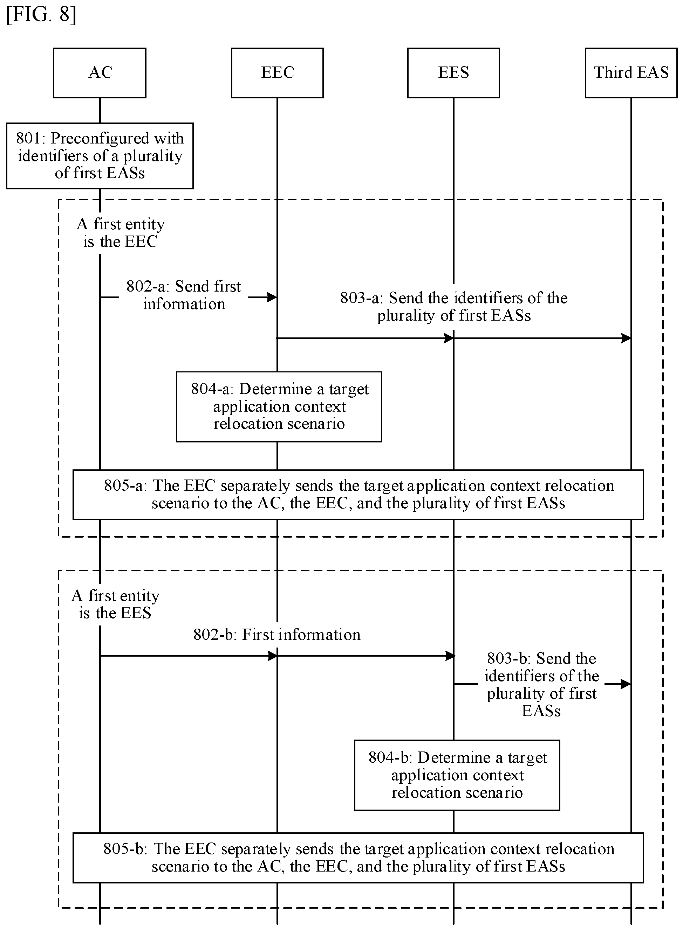

FIG. 8 is a schematic flowchart of a second method for determining an application context relocation scenario in Implementation 2 according to this application. The method for determining an application context relocation scenario shown in FIG. 8 is a specific implementation of the method for determining an application context relocation scenario shown in FIG. 7. For a technical solution that is not described in detail in the embodiment related to FIG. 8, refer to the descriptions in the embodiment related to FIG. 7, or further refer to the descriptions in the embodiment related to Implementation 1.

Step 801: An AC is preconfigured with identifiers of a plurality of first EASs. For this step, refer to the descriptions in step 601.

When a first entity is an EEC, reference may be made to step 802-a to step 805-a.

Step 802-a: The AC sends first information to the EEC. For this step, refer to the descriptions in step 701.

It should be added that the first information may also be configured in the EEC, and the EEC may not need to receive the first information from the AC. That is, step 802-a is an optional step.

Step 803-a: The EEC sends the identifiers of the plurality of first EASs to a third EAS based on the first information.

Step 804-a: The EEC determines a target application context relocation scenario.

Step 805-a: The EEC separately sends the target application context relocation scenario to the AC, the EEC, and the plurality of first EASs.

For step 803-a to step 805-a, refer to the descriptions in step 702.

When the first entity is an EES, reference may be made to step 802-b to step 805-b.

Step 802-b: The AC sends first information to the EES.

Specifically, the AC may send the first information to the EES through an EEC. To be specific, the AC first sends the first information to the EEC, and then the EEC sends the first information to the EES. For this step, refer to the descriptions in step 701.

Herein, the first information may also be configured in the EEC, and the EES may directly receive the first information from the EEC.

Step 803-b: The EES sends the identifiers of the plurality of first EASs to a third EAS based on the first information.

Step 804-b: The EES determines a target application context relocation scenario.

Step 805-b: The EES separately sends the target application context relocation scenario to the AC, the EEC, and the plurality of first EASs.

For step 803-b to step 805-b, refer to the descriptions in step 702.

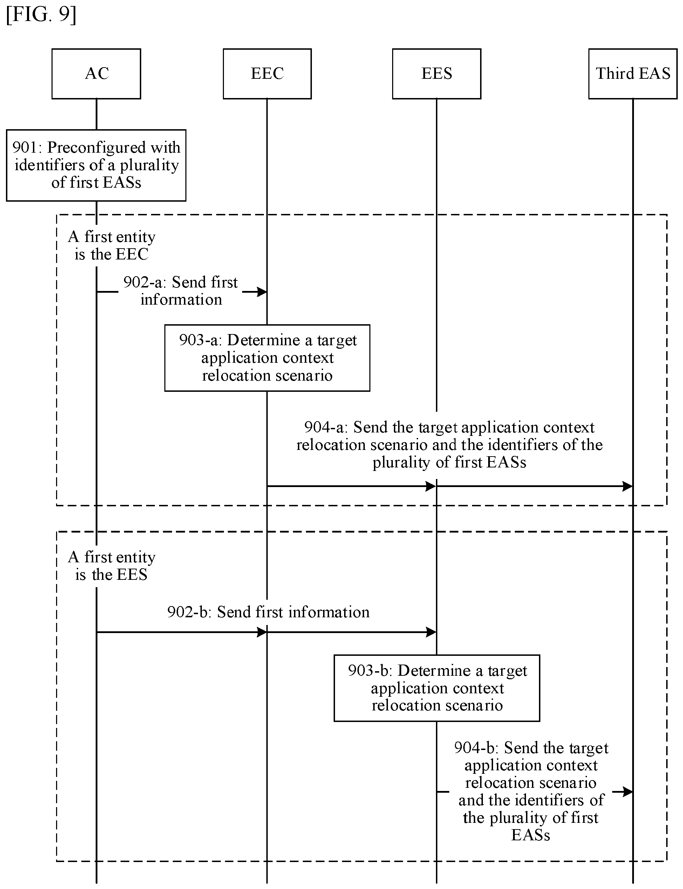

FIG. 9 is a schematic flowchart of a third method for determining an application context relocation scenario in Implementation 2 according to this application. The method for determining an application context relocation scenario shown in FIG. 9 is another specific implementation of the method for determining an application context relocation scenario shown in FIG. 7. For a technical solution that is not described in detail in the embodiment related to FIG. 9, refer to the descriptions in the embodiment related to FIG. 7, or further refer to the descriptions in the embodiment related to Implementation 1.

Step 901: An AC is preconfigured with identifiers of a plurality of first EASs.

For this step, refer to the descriptions in step 601.

Further, when a first entity is an EEC, reference may be made to step 902-a to step 904-a.

Step 902-a: The AC sends first information to the EEC.

It should be added that the first information may also be configured in the EEC, and the EEC may not need to receive the first information from the AC. That is, step 902-a is an optional step.

For content that is not described in detail in step 902-a, refer to the descriptions in step 701.

Step 903-a: The EEC determines a target application context relocation scenario.

Step 904-a: The EEC sends the target application context relocation scenario and the identifiers of the plurality of first EASs to a third EAS based on the first information.

Specifically, the EEC may send the target application context relocation scenario and the identifiers of the plurality of first EASs to the third EAS through an EES. To be specific, the EEC first sends the target application context relocation scenario and the identifiers of the plurality of first EASs to the EES, and then the EES sends the target application context relocation scenario and the identifiers of the plurality of first EASs to the third EAS.

When forwarding the target application context relocation scenario and the identifiers of the plurality of first EASs, the EES may also obtain the target application context relocation scenario.

The EEC may further separately send the target application context relocation scenario to the AC and another first EAS different from the third EAS in the plurality of first EASs. Correspondingly, the EES, the AC, the plurality of first EASs, and the EEC may perform related actions in application context relocation based on the target application context relocation scenario.

For content that is not described in detail in step 903-a and step 904-a, refer to the descriptions in step 702 and step 703.

When the first entity is an EES, reference may be made to step 902-b to step 904-b.

Step 902-b: The AC sends first information to the EES.

Specifically, the AC may send the first information to the EES through an EEC. To be specific, the AC first sends the first information to the EEC, and then the EEC sends the first information to the EES.

It should be added that the first information may also be configured in the EEC, and the EES directly receives the first information from the EEC.

For content that is not described in detail in step 902-b, refer to the descriptions in step 701.

Step 903-b: The EES determines a target application context relocation scenario.

Step 904-b: The EES sends the target application context relocation scenario and the identifiers of the plurality of first EASs to a third EAS based on the first information.

In addition, the EES may further separately send the target application context relocation scenario to the AC and another first EAS different from the third EAS in the plurality of first EASs, and the EEC. Correspondingly, the EES, the AC, the plurality of first EASs, and the EEC may perform related actions in application context relocation based on the target application context relocation scenario.

For content that is not described in detail in step 903-b and step 904-b, refer to the descriptions in step 702 and step 703.

### Implementation 3

FIG. 10 is a schematic flowchart of a first method for determining an application context relocation scenario in Implementation 3 according to this application. For a term and a technical solution that are not described in detail in the method for determining an application context relocation scenario shown in FIG. 10, refer to descriptions in a related embodiment in Implementation 1 and Implementation 2.

Step 1001: A fourth EAS determines, based on first information, that an application context relocation scenario supported by the fourth EAS does not include an EAS-decided application context relocation scenario.

For the first information, refer to the descriptions of the first information in step 301.

The fourth EAS may be one or more of a plurality of first EASs. The first information may be preconfigured in the fourth EAS, or the fourth EAS may receive the first information from an AC, an EEC, or an EES. For a specific manner, refer to the implementations in which the third EAS preconfigures the first information or the third EAS receives the first information from the AC, the EEC, or the EES.

Specifically, the fourth EAS determines, based on the first information, that application contexts in the plurality of first EASs need to be relocated together, and further determines that the application context relocation scenario supported by the fourth EAS does not include an EAS-decided application context relocation scenario.

For example, the fourth EAS is configured to support an application context relocation scenario 1 to an application context relocation scenario 4. If the fourth EAS determines, based on the first information, that the application contexts in the plurality of first EASs need to be relocated together, it is determined that the fourth EAS can support the application context relocation scenario 1 to the application context relocation scenario 3.

Step 1002: The fourth EAS sends the application context relocation scenario supported by the fourth EAS.

Specifically, the fourth EAS may send the application context relocation scenario supported by the fourth EAS to a first entity. When the first entity is an EES, the fourth EAS sends, to the EES, the application context relocation scenario supported by the fourth EAS. When the first entity is an EEC, the fourth EAS sends, to the EEC through an EES, the application context relocation scenario supported by the fourth EAS.

Correspondingly, the first entity receives the application context relocation scenario supported by the fourth EAS, and selects a target application context relocation scenario based on the application context relocation scenario supported by the fourth EAS (excluding an EAS-decided application context relocation scenario). With reference to the foregoing example, the first entity determines that the fourth EAS may support the application context relocation scenario 1 to the application context relocation scenario 3, and the first entity may select the target application context relocation scenario from the application context relocation scenario 1 to the application context relocation scenario 3. For an implementation in which the first entity selects the target application context relocation scenario, refer to the descriptions in step 302.

In this way, the first entity can select an application context relocation scenario other than an EAS-decided application context relocation scenario as the target application context relocation scenario. That is, when the target application context relocation scenario selected by the first entity is an application context relocation scenario decided by an EEC, an AC, or an EES, this helps relocate the application contexts in the plurality of first EASs together, to avoid a service interruption during application context relocation.

Optionally, when the first entity is the EES, after determining the target application context relocation scenario, the EES may separately send the target application context relocation scenario to the plurality of first EASs, the EEC, and the AC. Correspondingly, the EES, the AC, the plurality of first EASs, and the EEC may perform related actions in application context relocation based on the target application context relocation scenario.

When the first entity is the EEC, after determining the target application context relocation scenario, the EEC may separately send the target application context relocation scenario to the plurality of first EASs, the EES, and the AC. Correspondingly, the EES, the AC, the plurality of first EASs, and the EEC may perform related actions in application context relocation based on the target application context relocation scenario.

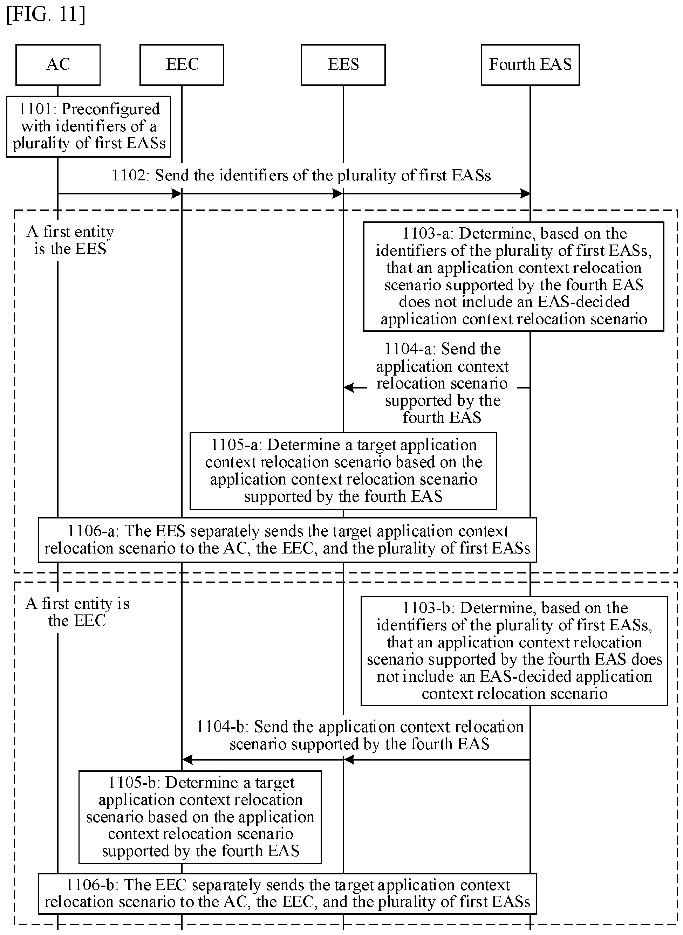

FIG. 11 is a schematic flowchart of a second method for determining an application context relocation scenario in Implementation 3 according to this application. The method for determining an application context relocation scenario shown in FIG. 11 is a specific implementation of the method for determining an application context relocation scenario shown in FIG. 10. For a technical solution that is not described in detail in the embodiment related to FIG. 11, refer to the descriptions in the embodiment related to FIG. 10, or further refer to the descriptions in the embodiment related to Implementation 1 and Implementation 2.

Step 1101: An AC is preconfigured with identifiers of a plurality of first EASs.

For a specific implementation in which the AC is preconfigured with the identifiers of the plurality of first EASs, refer to the descriptions in step 601.

Step 1102: The AC sends the identifiers of the plurality of first EASs to a fourth EAS.

For example, the AC sends the identifiers of the plurality of first EASs to all or a part of the plurality of first EASs.

The AC is connected to the fourth EAS, and the AC may directly send the identifiers of the plurality of first EASs to the fourth EAS.

Alternatively, the AC may send the identifiers of the plurality of first EASs to the fourth EAS through an EEC and an EES. As shown in FIG. 11, the AC first sends the identifiers of the plurality of first EASs to the EEC, then the EEC sends the identifiers of the plurality of first EASs to the EES, and then the EES sends the identifiers of the plurality of first EASs to the fourth EAS.

When a first entity is an EES, reference may be made to step 1103-a to step 1106-a.

Step 1103-a: The fourth EAS determines, based on the identifiers of the plurality of first EASs, that the application context relocation scenario supported by the fourth EAS does not include an EAS-decided application context relocation scenario. For details, refer to the descriptions in the related embodiment in step 1001.

Step 1104-a: The fourth EAS sends, to the EES, the application context relocation scenario supported by the fourth EAS.

Step 1105-a: The EES selects a target application context relocation scenario based on the application context relocation scenario supported by the fourth EAS.

Step 1106-a: The EES separately sends the target application context relocation scenario to the AC, the EEC, and the plurality of first EASs.

The EES may send the target application context relocation scenario to the AC through the EEC. To be specific, the EES first sends the target application context relocation scenario to the EEC, and then the EEC sends the target application context relocation scenario to the AC.

For step 1104-a to step 1106-a, refer to the descriptions in the related embodiment in step 1002.

When the first entity is the EEC, reference may be made to step 1103-b to step 1106-b.

Step 1103-b: The fourth EAS determines, based on the identifiers of the plurality of first EASs, that the application context relocation scenario supported by the fourth EAS does not include an EAS-decided application context relocation scenario. For details, refer to the descriptions in the related embodiment in step 1001.

Step 1104-b: The fourth EAS sends, to the EEC, the application context relocation scenario supported by the fourth EAS.

Step 1105-b: The EEC selects a target application context relocation scenario based on the application context relocation scenario supported by the fourth EAS.

Step 1106-b: The EEC separately sends the target application context relocation scenario to the AC, the EES, and the plurality of first EASs. The EEC may send the target application context relocation scenario to the first EAS through the EES.

For step 1104-b to step 1106-b, refer to the descriptions in the related embodiment in step 1002.

In this application, the AC may be further served by another EAS different from the plurality of first EASs. It may be understood that the AC is served by a plurality of second EASs, and the plurality of first EASs are a part of the plurality of second EASs. For example, a game AC not only needs to be served by a graphics rendering EAS and a chat function EAS, but also needs to be served by a game acceleration EAS. The graphics rendering EAS and the chat function EAS are the first EASs. That is, an application context of the AC in the graphics rendering EAS is associated with an application context of the AC in the chat function EAS. An application context in the game acceleration EAS may be independent of application contexts in the graphics rendering EAS and the chat function EAS. An application context of the AC in the game acceleration EAS does not need to be relocated with the application contexts in the graphics rendering EAS and chat function EAS.

In this application, the first EASs may also be referred to as associated EASs (linked EAS). That is, the plurality of first EASs are associated with each other, and the application contexts of the plurality of first EASs are associated with each other. Another EAS different from the first EASs in the plurality of second EASs may be referred to as a non-associated EAS (non-linked EAS). The associated EAS and the non-associated EAS are merely example names, and a person skilled in the art may also make other names. For example, the first EAS may also be referred to as a pair EAS (pair EAS), and the another EAS different from the first EASs in the plurality of second EASs may also be referred to as a non-pair EAS (non-pair EAS). In this case, the second EASs may also be referred to as associated EASs, serving-together EASs, or the like. For another example, the first EAS may also be referred to as an ACR-together EAS (ACR-together EAS), and the second EAS may also be referred to as a non-ACR-together EAS (non-ACR-together EAS). In this case, the second EASs may also be referred to as associated EASs, serving-together EASs, or the like. Further, a first EAS list formed by the identifiers of the first EASs may also be referred to as an associated EAS list (linked EAS list), a pair EAS list (pair EAS list), an ACR-together EAS list (ACR-together EAS list), or the like.

It may be understood that an application context in the non-linked EAS may be independent of an application context in the linked EAS. When the application contexts in the linked EASs are relocated together, the application contexts in the non-linked EAS do not need to be relocated or do not need to be relocated together with the application contexts in the linked EASs. When a non-linked EAS is to relocate a context, the non-linked EAS may relocate only a local application context of the non-linked EAS without triggering another non-linked EAS or a linked EAS to relocate an application context.

In Implementation 1, identifiers of the plurality of second EASs may be preconfigured in the AC, and the AC may send the identifiers of the plurality of second EASs to the first entity. The identifiers of the plurality of second EASs may further include the first information (specifically, the identifiers of the plurality of first EASs). Correspondingly, the first entity may obtain the identifiers of the plurality of first EASs from the identifiers of the plurality of second EASs. For an implementation in which the AC sends the identifiers of the plurality of second EASs to the first entity, refer to the implementation in which the AC sends the identifiers of the plurality of first EASs to the first entity in step 301. Alternatively, when the first entity is an EEC, the identifiers of the plurality of second EASs may also be preconfigured in the EEC, and the first entity may obtain the identifiers of the plurality of first EASs from the identifiers of the plurality of second EASs. Further, the third EAS may obtain the identifiers of the plurality of second EASs from the AC or the EEC, and send second indication to the first entity based on the identifiers of the plurality of first EASs in the identifiers of the plurality of second EASs. Alternatively, the identifiers of the plurality of second EASs are preconfigured in a third EAS, and the third EAS sends a second indication to the first entity based on the identifiers of the plurality of first EASs in the identifiers of the plurality of second EASs.

In Implementation 2, the identifiers of the plurality of second EASs may be preconfigured in the AC, and the AC may send the identifiers of the plurality of second EASs to the first entity. The identifiers of the plurality of second EASs may further include the first information (specifically, the identifiers of the plurality of first EASs). Correspondingly, the first entity may obtain the identifiers of the plurality of first EASs from the identifiers of the plurality of second EASs. The first entity sends the identifiers of the plurality of second EASs or identifiers of the plurality of first EASs to the third EAS, and correspondingly, the third EAS obtains the identifiers of the plurality of first EASs.

In Implementation 3, the identifiers of the plurality of second EASs may be preconfigured in the AC, and the AC may send the identifiers of the plurality of second EASs to the fourth EAS. The identifiers of the plurality of second EASs may further include the first information (specifically, the identifiers of the plurality of first EASs). Correspondingly, the fourth EAS obtains the identifiers of the plurality of first EASs from the identifiers of the plurality of second EASs, and determines that the application context relocation scenario supported by the fourth EAS does not include an EAS-decided application context relocation scenario.

Further, before the first entity determines the target application context relocation scenario, the first entity may obtain application context relocation scenarios respectively supported by entities: the EES, the AC, the plurality of second EASs, and the EEC, and then determine, based on the application context relocation scenarios respectively supported by the entities, an application context relocation scenario jointly supported by the plurality of entities. Then, according to any one of Implementation 1 to Implementation 3, the first entity determines the target application context relocation scenario from the application context relocation scenario jointly supported by the plurality of entities.

After determining the target application context relocation scenario, the first entity may send the target application context relocation scenario to the plurality of second EASs. Specifically, when the first entity is an EEC, the EEC may send the target application context relocation scenario to the plurality of second EASs, the AC, and the EES. Correspondingly, the plurality of second EASs, the AC, the EES, and the EEC may perform related actions in application context relocation based on the target application context relocation scenario. When the first entity is an EES, the EES may send the target application context relocation scenario to the plurality of second EASs, the AC, and the EEC. Correspondingly, the plurality of second EASs, the AC, the EES, and the EEC may perform related actions in application context relocation based on the target application context relocation scenario.

In addition, the plurality of first EASs may also be all of the plurality of second EASs. In other words, the plurality of first EASs are the plurality of second EASs. The application contexts in the plurality of second EASs are all associated and need to be relocated together. Alternatively, it may be understood that the plurality of first EASs are EASs that serve a same AC. In this case, for this application, the first EAS and the second EAS are the same, may be used interchangeably, and may have a same name.

The following provides five embodiments in which the first entity determines the target application context relocation scenario with reference to specific scenarios.

### Embodiment 1

Embodiment 1 is a more specific implementation of FIG. 6.

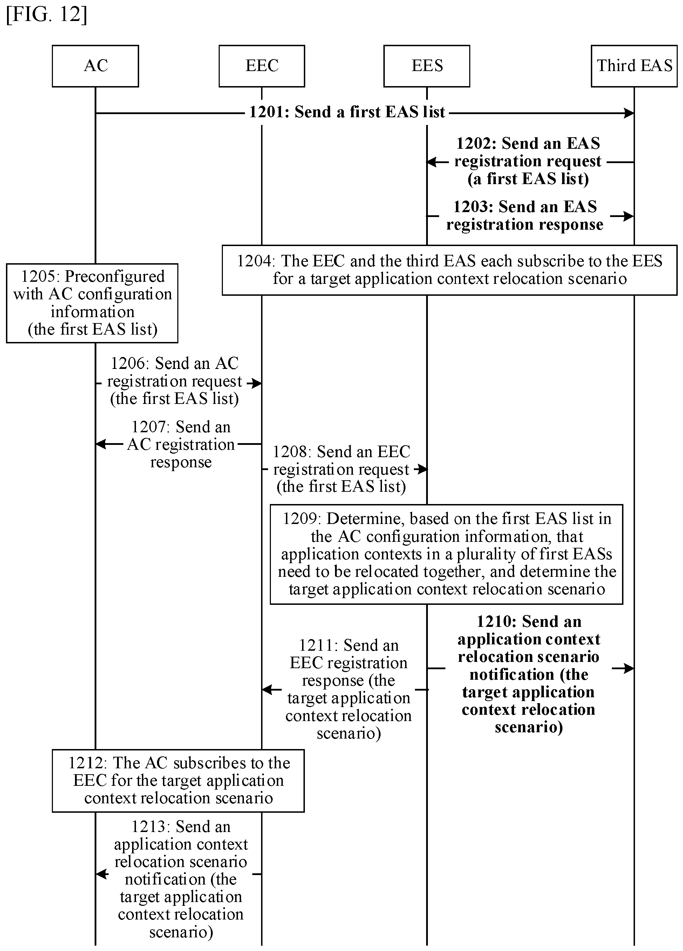

In the flowchart of Embodiment 1 shown in FIG. 12, step 1201 is a specific implementation of step 602, step 1202 and step 1203 are a specific implementation of step 603-a, step 1205 to step 1208 are a specific implementation of step 604-a, step 1209 is a specific implementation of step 605-a and step 606-a, and step 1204 and step 1210 to step 1213 are a specific implementation of step 607-a.

Step 1201: An AC sends a first EAS list to a third EAS.

Step 1202: The third EAS sends an EAS registration request to an EES. The EAS registration request includes EAS configuration information (EAS profile), and the EAS configuration information may include an identifier (EAS ID) of the third EAS, second information, and an application context relocation scenario supported by the third EAS. The second information is specifically a first EAS list.

Step 1203: The EES sends an EAS registration response to the third EAS.

Step 1204: An EEC and the third EAS each subscribe to the EES for a target application context relocation scenario.

Step 1205: The AC is preconfigured with the AC configuration information. The AC configuration information may include an application context relocation scenario supported by the AC, an identifier of the AC, and a first EAS list.

Step 1206: The AC sends an AC registration request to the EEC, where the AC registration request includes the AC configuration information (that is, includes the first EAS list).

Step 1207: The EEC sends an AC registration response to the AC.

Step 1208: The EEC sends an EEC registration request to the EES, where the EEC registration request includes the AC configuration information (that is, includes the first EAS list) and an application context relocation scenario supported by the EEC.

Step 1209: The EES determines, based on the first EAS list in the AC configuration information, that application contexts in a plurality of first EASs need to be relocated together. The EES determines, based on application context relocation scenarios supported by the AC, the EEC, the EES, and the plurality of first EASs, that the plurality of application context relocation scenarios include an EAS-decided application context relocation scenario, and the EES further selects a target application context relocation scenario from the plurality of application context relocation scenarios.

Step 1210: The EES sends an application context relocation scenario notification to the third EAS, where the application context relocation scenario notification includes the target application context relocation scenario.

Step 1211: The EES sends an EEC registration response to the EEC, where the EEC registration response includes the target application context relocation scenario.

Step 1212: The AC subscribes to the EEC for the target application context relocation scenario.

Step 1213: The EEC sends an application context relocation scenario notification to the AC, where the application context relocation scenario notification includes the target application context relocation scenario.

### Embodiment 2

Embodiment 2 is another specific implementation of FIG. 6.

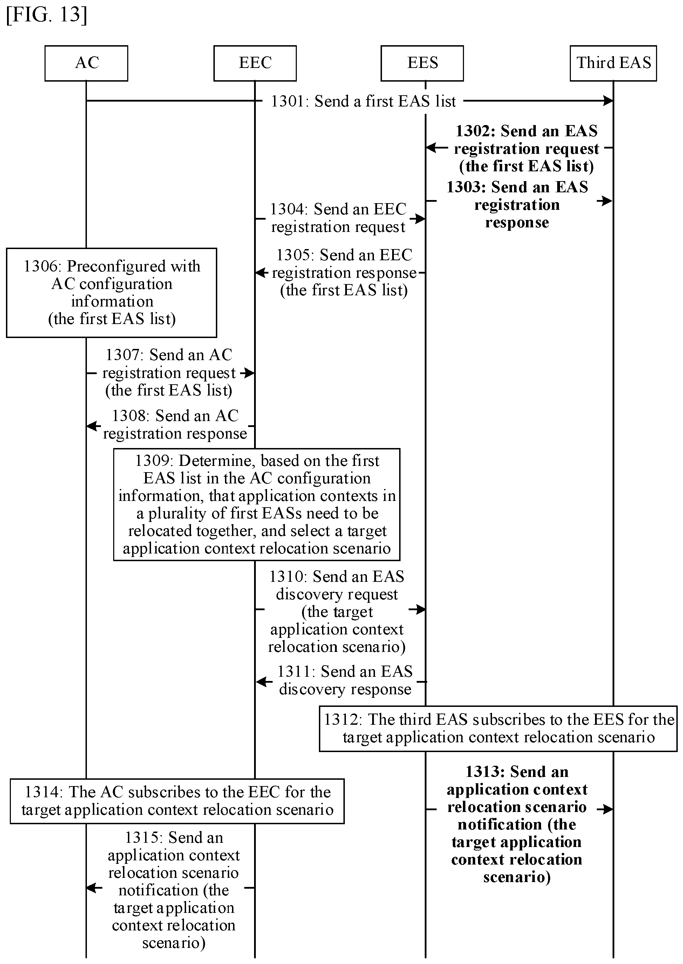

In the flowchart of Embodiment 2 shown in FIG. 13, step 1301 is a specific implementation of step 602, step 1302 to step 1305 are a specific implementation of step 603-b, step 1306 is a specific implementation of step 601, step 1307 and step 1308 are a specific implementation of step 604-b, step 1309 is a specific implementation of step 605-b and step 606-b, and step 1310 to step 1315 are a specific implementation of step 607-b.

Step 1301: An AC sends a first EAS list to a third EAS.

Step 1302: The third EAS sends an EAS registration request to an EES. The EAS registration request includes second information, and the second information is specifically a first EAS list.

Step 1303: The EES sends an EAS registration response to the third EAS.

Step 1304: The EEC sends an EEC registration request to the EES.

Step 1305: The EES sends an EEC registration response to the EEC, where the EEC registration response may include an application context relocation scenario supported by the EES, an application context relocation scenario supported by the third EAS, and the first EAS list.

Step 1306: The AC is preconfigured with AC configuration information, where the AC configuration information may include an application context relocation scenario supported by the AC, an identifier of the AC, and the first EAS list.

Step 1307: The AC sends an AC registration request to the EEC, where the AC registration request includes the AC configuration information (that is, includes the first EAS list).

Step 1308: The EEC sends an AC registration response to the AC.

Step 1309: The EEC determines, based on the first EAS list in the AC configuration information, that application contexts in a plurality of first EASs need to be relocated together. The EES determines, based on application context relocation scenarios supported by the AC, the EEC, the EES, and the plurality of first EASs, that the plurality of application context relocation scenarios include an EAS-decided application context relocation scenario, and the EES further selects a target application context relocation scenario from the plurality of application context relocation scenarios.

Step 1310: The EEC sends an EAS discovery request to the EES, where the EAS discovery request includes the target application context relocation scenario.

Step 1311: The EES sends an EAS discovery response to the EEC.

Step 1312: The third EAS subscribes to the EES for the target application context relocation scenario.

Step 1313: The EES sends an application context relocation scenario notification to the third EAS, where the application context relocation scenario notification includes the target application context relocation scenario.

Step 1314: The AC subscribes to the EEC for the target application context relocation scenario.

Step 1315: The EEC sends an application context relocation scenario notification to the AC, where the application context relocation scenario notification includes the target application context relocation scenario.

### Embodiment 3

Embodiment 3 is a specific implementation of FIG. 8.

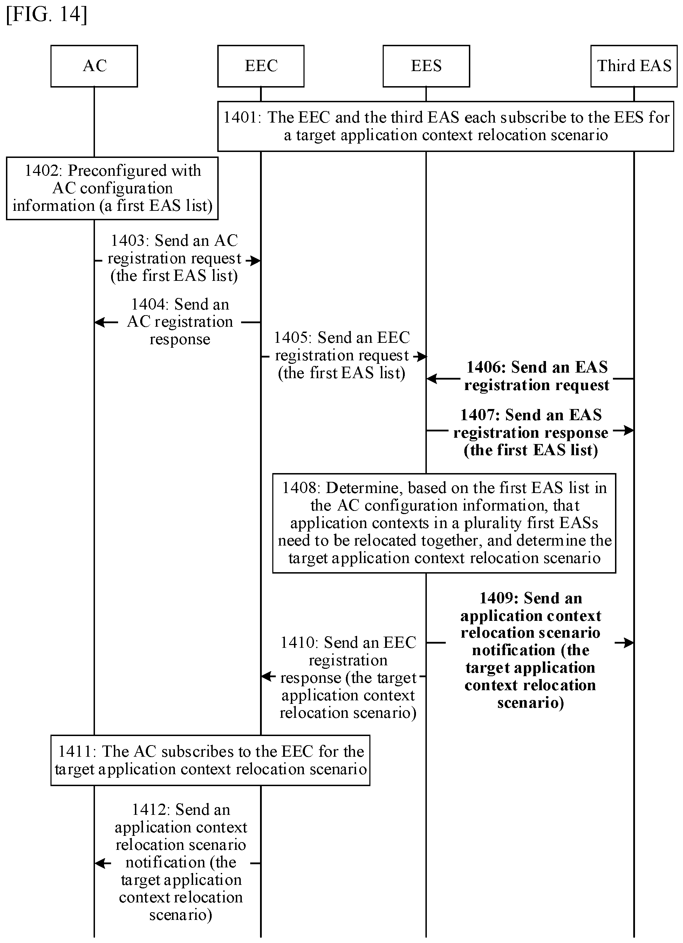

In the flowchart of Embodiment 3 shown in FIG. 14, step 1402 is a specific implementation of step 801, step 1403 to step 1405 are a specific implementation of step 802-b, step 1406 and step 1407 are a specific implementation of step 803-b, step 1408 is a specific implementation of step 804-b, and step 1401 and step 1409 to step 1412 are a specific implementation of step 805-b.

For details, refer to FIG. 14.

Step 1401: An EEC and a third EAS each subscribe to an EES for a target application context relocation scenario.

Step 1402: An AC is preconfigured with AC configuration information. The AC configuration information includes an application context relocation scenario supported by the AC, an identifier of the AC, and a first EAS list, where the first EAS list may be a list including identifiers of a plurality of first EASs.

Step 1403: The AC sends an AC registration request to an EEC, where the AC registration request includes the AC configuration information.

Step 1404: The EEC sends an AC registration response to the AC.

Step 1405: The EEC sends an EEC registration request to the EES, where the EEC registration request includes the AC configuration information and an application context relocation scenario supported by the EEC.

Step 1406: The third EAS sends an EAS registration request to the EES, where the EAS registration request includes EAS configuration information. The EAS configuration information includes an identifier of the third EAS and an application context relocation scenario supported by the third EAS.

Step 1407: The EES sends an EAS registration response to the third EAS, where the EAS registration response includes the identifier of the AC and the first EAS list.

Step 1408: The EES determines, based on the first EAS list in the AC configuration information, that application contexts in the plurality of first EASs need to be relocated together. The EES determines, based on application context relocation scenarios supported by the AC, the EEC, the EES, and the plurality of first EASs, that the plurality of application context relocation scenarios include an EAS-decided application context relocation scenario, and the EES further determines a target application context relocation scenario from the plurality of application context relocation scenarios.

Step 1409: The EES sends an application context relocation scenario notification to the third EAS, where the application context relocation scenario notification includes the target application context relocation scenario.

Step 1410: The EES sends an EEC registration response to the EEC, where the EEC registration response includes the target application context relocation scenario.

Step 1411: The AC subscribes to the EEC for the target application context relocation scenario.

Step 1412: The EEC sends an application context relocation scenario notification to the AC, where the application context relocation scenario notification includes the target application context relocation scenario.

### Embodiment 4

Embodiment 4 is a specific implementation of FIG. 9.

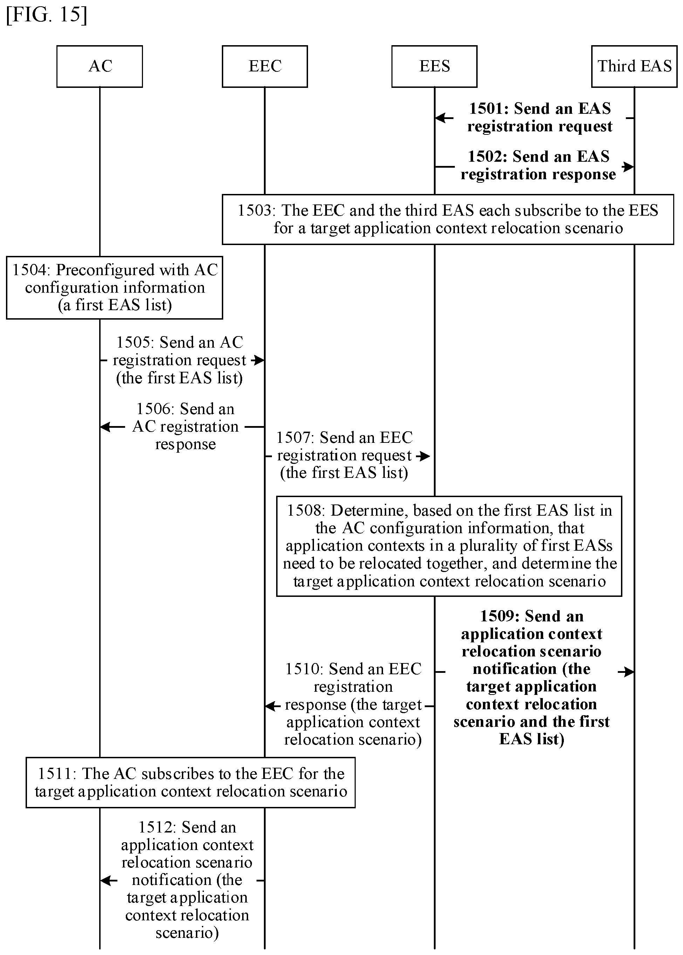

In the flowchart of Embodiment 4 shown in FIG. 15, step 1504 to step 1507 are a specific implementation of step 902-b, step 1508 is a specific implementation of step 903-b, and step 1501 to step 1503 and step 1509 to step 1512 are a specific implementation of step 904-b.

Step 1501: A third EAS sends an EAS registration request to an EES, where the EAS registration request includes EAS configuration information. The EAS configuration information includes an identifier of the third EAS and an application context relocation scenario supported by the third EAS.

Step 1502: The EES sends an EAS registration response to the third EAS.

Step 1503: An EEC and the third EAS each subscribe to an EES for a target application context relocation scenario.

Step 1504: The AC is preconfigured with AC configuration information, where the AC configuration information includes an application context relocation scenario supported by the AC, an identifier of the AC, and a first EAS list.

Step 1505: The AC sends an AC registration request to an EEC, where the AC registration request includes the AC configuration information.

Step 1506: The EEC sends an AC registration response to the AC.

Step 1507: The EEC sends an EEC registration request to the EES, where the EEC registration request includes the AC configuration information and an application context relocation scenario supported by the EEC.

Step 1508: The EES determines, based on the first EAS list in the AC configuration information, that application contexts in a plurality of first EASs need to be relocated together. The EES determines a target application context relocation scenario based on application context relocation scenarios supported by the AC, the EEC, the EES, and the plurality of first EASs.

Step 1509: The EES sends an application context relocation scenario notification to the third EAS, where the application context relocation scenario notification includes the target application context relocation scenario and the first EAS list.

Step 1510: The EES sends an EEC registration response to the EEC, where the EEC registration response includes the target application context relocation scenario.

Step 1511: The AC subscribes to the EEC for the target application context relocation scenario.

Step 1512: The EEC sends an application context relocation scenario notification to the AC, where the application context relocation scenario notification includes the target application context relocation scenario.

### Embodiment 5

Embodiment 5 is a specific implementation of FIG. 11.

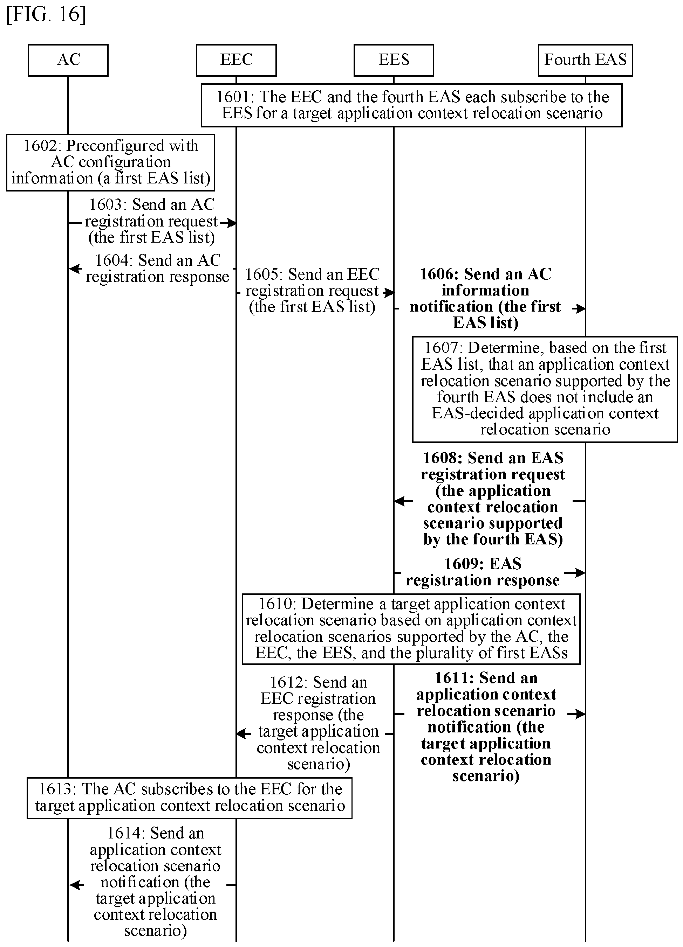

In the flowchart of Embodiment 5 shown in FIG. 16, step 1602 is a specific implementation of step 1101, step 1603 to step 1606 are a specific implementation of step 1102, step 1607 is a specific implementation of step 1103-a, step 1608 and step 1609 are a specific implementation of step 1104-a, step 1610 is a specific implementation of step 1105-a, and step 1601 and step 1611 to step 1614 are a specific implementation of step 1106-a.

For details, refer to FIG. 16.

Step 1601: An EEC and a fourth EAS each subscribe to an EES for a target application context relocation scenario.

Step 1602: An AC is preconfigured with AC configuration information. The AC configuration information includes an application context relocation scenario supported by the AC, an identifier of the AC, and a first EAS list, where the first EAS list may be a list including identifiers of a plurality of first EASs.

Step 1603: The AC sends an AC registration request to the EEC, where the AC registration request includes the AC configuration information (that is, includes the first EAS list).

Step 1604: The EEC sends an AC registration response to the AC.

Step 1605: The EEC sends an EEC registration request to an EES, where the EEC registration request includes the AC configuration information (that is, includes the first EAS list) and an application context relocation scenario supported by the EEC.

Step 1606: The EES sends an AC information notification (AC information notification) to the fourth EAS, where the AC information notification may include the first EAS list.

Step 1607: The fourth EAS determines, based on the first EAS list, that an application context relocation scenario supported by the fourth EAS does not include an EAS-decided application context relocation scenario.

Step 1608: The fourth EAS sends an EAS registration request to the EES.

The EAS registration request includes EAS configuration information. The EAS configuration information includes an identifier of the fourth EAS and an application context relocation scenario supported by the fourth EAS.

Step 1609: The EES sends an EAS registration response to the fourth EAS.

Step 1610: The EES determines a target application context relocation scenario based on application context relocation scenarios supported by the AC, the EEC, the EES, and the plurality of first EASs.

Step 1611: The EES sends an application context relocation scenario notification to the fourth EAS, where the application context relocation scenario notification includes the target application context relocation scenario.

Step 1612: The EES sends an EEC registration response to the EEC, where the EEC registration response includes the target application context relocation scenario.

Step 1613: The AC subscribes to the EEC for the target application context relocation scenario.

Step 1614: The EEC sends an application context relocation scenario notification to the AC, where the application context relocation scenario notification includes the target application context relocation scenario.

In addition, in Embodiments 3 to 5, the first entity may also be replaced with the EEC, and the difference lies in whether the first entity directly communicates with the first EAS or indirectly communicates with the first EAS through the EES, and whether the first entity directly communicates with the AC or indirectly communicates with the AC through the EEC. Specific messages between entities are different.

In the foregoing steps in Embodiment 1 to Embodiment 5, a registration request may be replaced with an update request (update request), and a registration response may be replaced with an update response (update response). For example, the EAS registration request is replaced with an EAS update request (EAS update request), and the EAS registration response is replaced with an EAS update response (EAS update response). Certainly, the foregoing information may alternatively be carried in another type of message. This is not limited in this application.

In addition, in Implementation 1, the first entity may further determine, based on capability information of the plurality of first EASs or capability information of a second entity, whether the plurality of application context relocation scenarios include an EAS-decided application context relocation scenario (or referred to as an application context relocation scenario decided by the EAS or an application context relocation scenario decided by a first EAS), and then select the target application context relocation scenario from the plurality of application context relocation scenarios.

Specifically, Implementation (1) and Implementation (2) may be included.

Implementation (1): The first entity determines, based on the capability information of the plurality of first EASs, whether a first EAS having the capability of processing relocation of the application contexts in the associated EASs together exists in the plurality of first EASs. Then, the first entity may determine whether the plurality of application context relocation scenarios include an EAS-decided application context relocation scenario, and further select the target application context relocation scenario from the plurality of application context relocation scenarios.

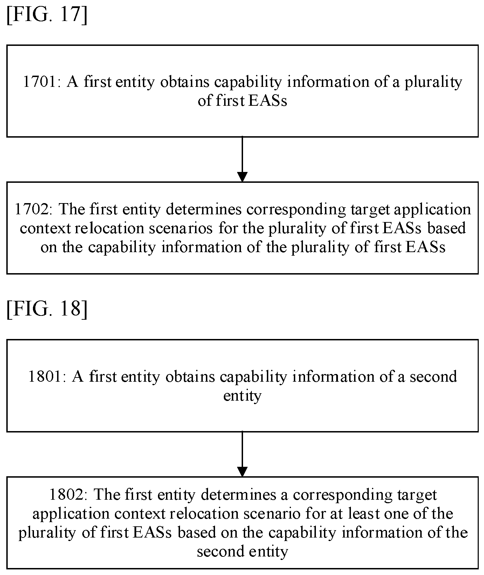

For details, refer to a schematic flowchart of a method for determining an application context relocation scenario shown in FIG. 17.

Step 1701: A first entity obtains capability information of a plurality of first EASs.

Optionally, the first entity receives the capability information of the plurality of first EASs.

The first entity may be an EEC or an EES. For example, when the first entity is the EEC, the EEC receives the capability information of the plurality of first EASs forwarded by an EES. When the first entity is the EES, the EES receives capability information of each of the plurality of first EASs from the first EAS, to obtain the capability information of the plurality of first EASs.

The plurality of first EASs are associated EASs. That is, application contexts in the plurality of first EASs are associated. Further, application contexts in the associated EASs (or associated EASs) need to be relocated together. For the plurality of first EASs, the associated EASs, the application contexts that need to be relocated together, and the like, refer to the descriptions in step 301, or refer to the supplementary descriptions after the embodiment related to FIG. 11.

Optionally, the first entity may further receive first information, and determine, based on the first information, that the plurality of first EASs are link EASs, or determine that the application contexts in the plurality of first EASs need to be relocated together. For an explanation of the first information, a manner of receiving the first information by the first entity, and a manner of determining, by the first entity, that the application contexts in the plurality of first EASs need to be relocated together, refer to the descriptions in step 301.

For one of the plurality of first EASs, capability information of the first EAS indicates whether the first EAS has the capability of processing relocation of the application contexts in the associated EASs together.

In a specific implementation, the capability information of the first EAS indicates whether the first EAS has one or more of the following capabilities 1 to 4.

Capability 1: a capability of obtaining identifiers of the plurality of first EASs; in other words, a capability of obtaining the identifiers of the associated EASs, or a capability of obtaining identifiers of EASs whose application contexts need to be relocated together.

Optionally, the first EAS may receive the identifiers of the plurality of first EASs from an AC, or receive the identifiers of the plurality of first EASs from the EEC, or is preconfigured with the identifiers of the plurality of first EASs, or prestore the identifiers of the plurality of first EASs. In this way, the first EAS has the capability of obtaining the identifiers of the plurality of first EASs.

Capability 2: a capability of sending a relocation notification to another EAS (that is, another first EAS) different from the first EAS in the plurality of first EASs.

For example, the capability 2 is a capability of sending a relocation notification to another EAS by using an application layer between the first EAS and the another EAS different from the first EAS in the plurality of first EASs.

Capability 3: a capability of receiving a relocation notification from another EAS different from the first EAS in the plurality of first EASs. For example, the capability 3 is a capability of receiving a relocation notification from another EAS by using an application layer between the first EAS and the another EAS different from the first EAS in the plurality of first EASs.

In this application, the relocation notification is used to trigger application context relocation. That is, after receiving the relocation notification, an EAS relocates an application context based on triggering of the relocation notification. For example, an EAS 1 sends a relocation notification to an EAS 2, and the EAS 2 relocates an application context based on triggering of the relocation notification. The EAS 1 has a capability (that is, the capability 2) of sending a relocation notification to another EAS in the plurality of first EASs, and the EAS 2 has a capability (that is, the capability 3) of receiving a relocation notification from another EAS in the plurality of first EASs.

Capability 4: a capability of supporting an application context relocation scenario decided by the first EAS.

For example, if configuration information of the first EAS includes an application context relocation scenario supported by the first EAS, and the application context relocation scenario supported by the first EAS includes the application context relocation scenario decided by the first EAS, it indicates that the first EAS has the capability 4.

Step 1702: The first entity determines corresponding target application context relocation scenarios for the plurality of first EASs based on the capability information of the plurality of first EASs.

In a specific implementation, the first entity determines, based on the capability information of the plurality of first EASs, whether the target application context relocation scenarios include the application context relocation scenario decided by the first EAS.

For example, when the first entity determines, based on the capability information of the plurality of first EASs, that one of the plurality of first EASs has the capability of processing relocation of the application contexts in the associated EASs together, the first entity determines that the target application context relocation scenarios include the application context relocation scenario decided by the first EAS.

For another example, when the first entity determines, based on the capability information of the plurality of first EASs, that none of the plurality of first EASs has the capability of processing relocation of the application contexts in the associated EASs together, the first entity determines that the target application context relocation scenarios do not include the application context relocation scenario decided by the first EAS.

That the first entity determines, based on the capability information of the first EAS, whether the first EAS has the capability of processing relocation of the application contexts in the associated EASs together may be specifically: The first entity determines, based on the capability information of the first EAS, whether the first EAS has one or more of the foregoing capability 1, capability 2, and capability 4. When determining that the first EAS has one or more of the capability 1, the capability 2, and the capability 4, the first entity determines that the first EAS has the capability of processing relocation of the application contexts in the associated EASs together.

It may be understood that, when determining that the first EAS has a first capability, the first entity determines that the first EAS has the capability of processing relocation of the application contexts in the associated EASs together. When determining that the first EAS does not have the first capability, the first entity determines that the first EAS does not have the capability of processing relocation of the application contexts in the associated EASs together. The first capability is one of the capability 1, the capability 2, and the capability 4. For example, the first capability is the capability 1. When determining that the first EAS has the capability 1, the first entity determines that the first EAS has the capability of processing relocation of the application contexts in the associated EASs together. When determining that the first EAS does not have the capability 1, the first entity determines that the first EAS does not have the capability of processing relocation of the application contexts in the associated EASs together. When the first capability is the capability 2 or the capability 4, an implementation is similar to that of the capability 1, and the "capability 1" may be replaced with the "capability 2" for understanding, or the "capability 1" may be replaced with the "capability 3" for understanding.

When determining that the first EAS has a first capability group, the first entity may further determine that the first EAS has the capability of processing relocation of the application contexts in the associated EASs together. When determining that the first EAS has none of the first capability group, the first entity determines that the first EAS does not have the capability of processing relocation of the application contexts in the associated EASs together. The first capability group is a combination of a plurality of capabilities in the capability 1, the capability 2, and the capability 4. For example, the first capability group includes the capability 1 and the capability 2. When determining that the first EAS has the capability 1 and the capability 2, the first entity determines that the first EAS has the capability of processing relocation of the application contexts in the associated EASs together. When determining that the first EAS does not have the capability 1 or the capability 2, the first entity determines that the first EAS does not have the capability of processing relocation of the application contexts in the associated EASs together. In addition, the first capability group may also be another combination of the capability 1, the capability 2, and the capability 4. Implementation of the another combination manner is similar to the foregoing combination manner of the capability 1 and the capability 2. For example, for the first capability group including the capability 2 and the capability 4, "the capability 1 and the capability 2" may be replaced with "the capability 2 and the capability 4", and "the capability 1 or the capability 2" may be replaced with "the capability 2 or the capability 4" for understanding.

In addition, the capability information of the first EAS may further indicate whether the first EAS has another capability (for example, the capability 3), to indicate whether the first EAS has the capability of processing relocation of the application contexts in the associated EASs together. This is not limited in this application.

Herein, a first EAS for decision making is one of the plurality of first EASs. For ease of description, the first EAS herein may be referred to as a fifth EAS, and another EAS different from the fifth EAS in the plurality of first EASs is referred to as a sixth EAS. It may be understood that the sixth EAS is an EAS that is in the plurality of first EASs and that performs application context relocation based on triggering by the fifth EAS. There may be one or more sixth EASs.

In another specific implementation, the first entity may not only determine, based on capability information of the fifth EAS, whether the fifth EAS has one or more of the capability 1, the capability 2, and the capability 4, but also determine, based on capability information of the sixth EAS, whether the sixth EAS has the capability 3. For example, if the first entity determines that the fifth EAS has one or more of the capability 1, the capability 2, and the capability 4, and the sixth EAS has the capability 3, it is determined that the target application context relocation scenarios include the application context relocation scenario decided by the first EAS (or an application context relocation scenario decided by the fifth EAS), that is, it is determined that the fifth EAS can indicate the sixth EAS to perform application context relocation together.

It should be further added that, when the first entity determines the target application context relocation scenarios based on the capability information of the plurality of first EASs, the following step a and step b may be specifically included.

Step a: The first entity determines, based on the capability information of the plurality of first EASs, whether the plurality of (candidate) application context relocation scenarios include the application context relocation scenario decided by the fifth EAS.

For example, when the first entity determines, based on the capability information of the plurality of first EASs, that a first EAS (that is, the fifth EAS) having the capability of processing relocation of the application contexts in the associated EASs together exists in the plurality of first EASs, the first entity determines that the plurality of application context relocation scenarios include the application context relocation scenario decided by the fifth EAS.

For another example, when the first entity determines, based on the capability information of the plurality of first EASs, that none of the plurality of first EASs has the capability of processing relocation of the application contexts in the associated EASs together, the first entity determines that the plurality of application context relocation scenarios do not include the application context relocation scenario decided by the first EAS.

Step b: The first entity determines, from the plurality of application context relocation scenarios, corresponding target application context relocation scenarios for the plurality of first EASs. For a specific implementation of step b, refer to the descriptions in step 302.

For example, when it is determined that the plurality of application context relocation scenarios include the application context relocation scenario decided by the fifth EAS, the first entity determines the target application context relocation scenarios from the plurality of application context relocation scenarios, and the determined target application context relocation scenarios may include the application context relocation scenario decided by the fifth EAS.

Optionally, the method further includes: The first entity sends the target application context relocation scenarios. For a specific implementation of the scenario in which the first entity sends the target application context relocation scenarios, refer to the descriptions in the embodiment related to FIG. 5.

In the foregoing technical solution, the first entity determines, based on the capability information of the plurality of first EASs, whether a first EAS (that is, the fifth EAS) having the capability of processing relocation of the application contexts in the associated EASs together exists in the plurality of first EASs. Further, the first entity determines whether the target application context relocation scenarios include the application context relocation scenario decided by the first EAS (that is, the application context relocation scenario decided by the fifth EAS). In this way, when the fifth EAS exists in the plurality of first EASs, the fifth EAS can indicate another first EAS (that is, the sixth EAS) to perform application context relocation together. Correspondingly, the first entity may determine that the target application context relocation scenarios include the application context relocation scenario decided by the fifth EAS. This helps avoid a service interruption during application context relocation.

Implementation (2): The first entity determines, based on the capability information of the second entity, whether the second entity has the capability of processing relocation of the application contexts in the associated EASs together. Subsequently, the first entity determines whether the plurality of application context relocation scenarios include an EAS-decided application context relocation scenario (that is, a first EAS-decided application context relocation scenario, or an application context relocation scenario decided by a first EAS), and selects a target application context relocation scenario from the plurality of application context relocation scenarios.

For details, refer to a schematic flowchart of a method for determining an application context relocation scenario shown in FIG. 18.

Step 1801: A first entity obtains capability information of a second entity.

There may be one or more second entities. For example, there is one second entity, and the second entity is an AC, an EEC, or an EES. There are two second entities, and the two second entities are respectively an AC and an EEC, or an AC and an EES, or an EEC and an EES. There are three second entities, and the three second entities are respectively an AC, an EEC, and an EES.

Optionally, the first entity and the second entity are a same entity or different entities.

When the first entity and the second entity are a same entity, the first entity may obtain capability information of the first entity. For example, the first entity obtains the capability information of the first entity from a configuration of the first entity.

When the first entity and the second entity are different entities, the first entity may receive the capability information of the second entity. For example, when the first entity is the EEC and the second entity is the AC, the EEC receives capability information of the AC from the AC. When the first entity is the EEC and the second entity is the EES, the EEC receives capability information of the EES from the EES. When the first entity is the EES and the second entity is the AC, the EES receives capability information of the AC forwarded by the EEC. When the first entity is the EES and the second entity is the EEC, the EES receives capability information of the EEC from the EEC.

The following uses one second entity as an example to describe the capability information of the second entity.

The capability information of the second entity may indicate whether the second entity has a capability of processing relocation of application contexts in associated EASs together.

It should be noted that the capability of the second entity to process relocation of the application contexts in the associated EASs together is different from the capability of the first EAS to process relocation of the application contexts in the associated EASs together in Implementation (1).

In a specific implementation, the capability information of the second entity indicates whether the second entity supports one or more of the following capabilities a to c.

Capability a: a capability of obtaining identifiers of a plurality of first EASs; in other words, a capability of obtaining the identifiers of the associated EASs, or a capability of obtaining identifiers of EASs whose application contexts need to be relocated together.

For example, the second entity is the AC, and the identifiers of the plurality of first EASs are configured in the AC. For example, the second entity is the EEC, and the identifiers of the plurality of first EASs are configured in the EEC, or the EEC receives the identifiers of the plurality of first EASs from the AC. For example, the second entity is the EES, and the identifiers of plurality of the first EASs are configured in the EES, or the EES receives the identifiers of the plurality of first EASs from the EEC. The identifiers of the plurality of first EASs may be configured in the EEC and sent to the EES, or the identifiers of the plurality of first EASs may be configured in the AC and forwarded by the EEC to the EES. In this way, the second entity has the capability of obtaining the identifiers of the plurality of first EASs.

Capability b: supporting an application context relocation scenario decided by a first EAS.

For example, the configuration information of the second entity includes an application context relocation scenario supported by the second entity, and the application context relocation scenario supported by the second entity includes the application context relocation scenario decided by the first EAS.

Capability c: a capability of receiving a relocation notification trigger indication from one of the plurality of first EASs, and sending a relocation notification to another first EAS in the plurality of first EASs based on the relocation notification trigger indication from the first EAS. The relocation notification is used to trigger application context relocation.

Further, the following explains and describes the capability c of the second entity depending on whether the second entity is the AC, the EEC, or the EES:

When the second entity is the AC, the capability c of the AC is specifically a capability of the AC to receive a relocation notification trigger indication from one of the plurality of first EASs through an application layer, and send a relocation notification to another first EAS based on the indication. The AC receives the relocation notification trigger indication. For example, the AC subscribes to an application context relocation trigger event of the first EAS. When the first EAS triggers an application context relocation event, the AC may receive the application context relocation trigger event, that is, receive the relocation notification trigger indication from the first EAS.

When the second entity is the EEC, the capability c of the EEC is specifically a capability of the EEC to receive a relocation notification trigger indication from one of the plurality of first EASs through the AC, and then send a relocation notification to another first EAS in the plurality of first EASs through the AC.

The EEC communicates with the AC through an EDGE-5 interface, and the EAS communicates with the AC through an application layer. To be specific, the AC receives the relocation notification trigger indication from one of the plurality of first EASs through the application layer, and then sends the relocation notification trigger indication to the EEC through the EDGE-5 interface. After receiving the relocation notification trigger indication, the EEC sends the relocation notification to the AC through the EDGE-5 interface, and then the AC sends the relocation notification to another first EAS in the plurality of first EASs through the application layer.

Alternatively, the capability c of the EEC is specifically a capability of the EEC to receive a relocation notification trigger indication from one of the plurality of first EASs through the EES, and send a relocation notification to another first EAS through the EES.

The EEC communicates with the EES through an EDGE-1 interface, and the EAS communicates with the EES through an EDGE-3 interface. To be specific, the EES receives the relocation notification trigger indication from one of the plurality of first EASs through the EDGE-3 interface, and then sends the relocation notification trigger indication to the EEC through the EDGE-1 interface. After receiving the relocation notification trigger indication, the EEC sends the relocation notification to the EES through the EDGE-1 interface, and then the EES sends the relocation notification to another first EAS in the plurality of first EASs through the EDGE-3 interface.

When the second entity is the EES, the capability c of the EES is specifically a capability of the EES to receive a relocation notification trigger indication from one of the plurality of first EASs separately through the AC and the EEC, and send a relocation notification to another first EAS through the AC and the EEC.

The EES communicates with the EEC through the EDGE-1 interface, the EEC communicates with the AC through the EDGE-5 interface, and the EAS communicates with the AC through the application layer. To be specific, the AC receives the relocation notification trigger indication from one of the plurality of first EASs through the application layer, and then sends the relocation notification trigger indication to the EEC through the EDGE-5 interface. Then, the EEC sends the relocation notification trigger indication to the EES through the EDGE-1 interface. Correspondingly, after receiving the relocation notification trigger indication, the EES sends a relocation notification to the EEC through the EDGE-1 interface, the EEC sends the relocation notification to the AC through the EDGE-5 interface, and the AC sends the relocation notification to another first EAS in the plurality of first EASs through the application layer.

Alternatively, the capability c of the EES is specifically a capability of the EES to receive a relocation notification trigger indication from one of the plurality of first EASs, and send a relocation notification to another first EAS. Specifically, the EES receives the relocation notification trigger indication from one of the plurality of first EASs through the EDGE-3 interface, and sends the relocation notification to another first EAS through the EDGE-3 interface.

Step 1802: The first entity determines a corresponding target application context relocation scenario for at least one of the plurality of first EASs based on the capability information of the second entity.

In a specific implementation, the first entity determines corresponding target application context relocation scenarios for all first EASs (that is, the plurality of first EASs) in the plurality of first EASs based on the capability information of the one or more second entities.

For example, when there are a plurality of second entities, and the first entity determines, based on the capability information of the plurality of second entities, that one second entity (denoted as a third entity) in the plurality of second entities has one or more of the capability a to the capability c, that is, determines that the third entity has the capability of processing relocation of the application contexts in the associated EASs together. The corresponding target application context relocation scenarios determined by the first entity for the plurality of first EASs include the application context relocation scenario decided by the first EAS.

For another example, when there is one second entity, the first entity determines, based on the capability information of the second entity, that the second entity has one or more of the capability a to the capability c, that is, determines that the second entity has the capability of processing relocation of the application contexts in the associated EASs together. Further, the corresponding target application context relocation scenarios determined by the first entity for the plurality of first EASs include the application context relocation scenario decided by the first EAS. The second entity herein may also be referred to as a third entity.

In a specific implementation, when determining that the second entity has a second capability, the first entity determines that the second entity has the capability of processing relocation of the application contexts in the associated EASs together. When determining that the second entity does not have the second capability, the first entity determines that the second entity does not have the capability of processing relocation of the application contexts in the associated EASs together. The second capability is one of the capability a, the capability b, and the capability c. For example, the second capability is the capability a. When determining that the second entity has the capability a, the first entity determines that the second entity has the capability of processing relocation of the application contexts in the associated EASs together. When determining that the first EAS does not have the capability a, the first entity determines that the second entity does not have the capability of processing relocation of the application contexts in the associated EASs together. The capability b and the capability c are similar to the capability a. The "capability a" may be replaced with the "capability b" for understanding, or the "capability a" may be replaced with the "capability c" for understanding.

In another specific implementation, when determining that the second entity has a second capability group, the first entity determines that the second entity has the capability of processing relocation of the application contexts in the associated EASs together. When determining that the second entity has no capability in the second capability group, the first entity determines that the second entity does not have the capability of processing relocation of the application contexts in the associated EASs together. The second capability group is a combination of a plurality of capabilities in the capability a, the capability b, and the capability c. For example, the second capability group includes the capability a and the capability b. When determining that the second entity has the capability a and the capability b, the first entity determines that the second entity has the capability of processing relocation of the application contexts in the associated EASs together. When determining that the second entity does not have the capability a or the capability b, the first entity determines that the first EAS does not have the capability of processing relocation of the application contexts in the associated EASs together. Implementations of other combinations of the capability a to the capability c are similar to those described above. For example, for a second capability group including the capability a and the capability c, "the capability a and the capability b" may be replaced with "the capability a and the capability c", and "the capability a or the capability b" may be replaced with "the capability a or the capability c" for understanding.

In a possible specific manner, the first entity determines the corresponding target application context relocation scenarios for the plurality of first EASs based on the capability information of the one or more second entities and application context relocation scenarios supported by the plurality of first EASs. Specifically, when an application context relocation scenario supported by one first EAS (denoted as a fifth EAS) in the plurality of first EASs includes the application context relocation scenario decided by the first EAS (that is, an application context relocation scenario decided by the fifth EAS), an application context relocation scenario supported by another EAS (denoted as a sixth EAS) different from the first EAS in the plurality of first EASs includes an application context relocation scenario detected and triggered (or decided) by the third entity, and the third entity meets one or more of the capability a to the capability c, the corresponding target application context relocation scenarios determined by the first entity for the plurality of first EASs include the target application context relocation scenario decided by the first EAS (that is, the application context relocation scenario decided by the fifth EAS). Herein, the capability b of the third entity is specifically that the third entity supports the application context relocation scenario decided by the fifth EAS.

That the fifth EAS supports an application context relocation scenario decided by the fifth EAS may be understood as: The fifth EAS can detect triggering and make decision about application context relocation, and when determining that application context relocation is required, the fifth EAS can send a relocation notification trigger indication to the third entity, to indicate the third entity to send a relocation notification to the sixth EAS. That the sixth EAS supports an application context relocation scenario detected and triggered by the third entity may be understood as: The sixth EAS can receive the relocation notification from the third entity, and perform application context relocation in response to the relocation notification.

Optionally, the first entity may further receive the application context relocation scenarios supported by the plurality of first EASs. Specifically, when the first entity is the EEC, the EEC receives the application context relocation scenarios supported by the plurality of first EASs and forwarded by the EES. When the first entity is the EES, the EES receives, from each first EAS, an application context relocation scenario supported by the first EAS, to obtain the application context relocation scenarios supported by the plurality of first EASs.

Optionally, the first entity not only uses the application context relocation scenario decided by the fifth EAS as the target application context relocation scenario, but also uses the application context relocation scenario detected and triggered by the third entity as the target application context relocation scenario. In this way, for the fifth EAS and the third entity, in the application context relocation scenario decided by the fifth EAS, the fifth EAS sends the relocation notification trigger indication to the third entity. For the sixth EAS and the third entity, the third entity sends the relocation notification to the sixth EAS based on the relocation notification trigger indication, so that the sixth EAS can perform application context relocation based on the relocation notification.

For example, three second entities are respectively an AC, an EEC, and an EES. When the fifth EAS supports the application context relocation scenario decided by the fifth EAS, and the sixth EAS supports an application context relocation scenario detected and triggered by the AC, and when the AC has the capability of processing relocation of the application contexts in the associated EASs together, the EEC does not have the capability of processing relocation of the application contexts in the associated EASs together, and the EES does not have the capability of processing relocation of the application contexts in the associated EASs together, the first entity may determine that the fifth EAS can indicate, through the AC, the sixth EAS to perform application context relocation together. That is, the corresponding target application context relocation scenarios determined for the plurality of first EASs include the application context relocation scenario decided by the fifth EAS and the application context relocation scenario detected and triggered by the AC.

For another example, three second entities are respectively an AC, an EEC, and an EES. When the fifth EAS supports the application context relocation scenario decided by the fifth EAS, and the sixth EAS supports an application context relocation scenario detected and triggered by the AC and an application context relocation scenario detected and triggered by the EEC, and when the AC has the capability of processing relocation of the application contexts in the associated EASs together, the EEC does not have the capability of processing relocation of the application contexts in the associated EASs together, and the EES does not have the capability of processing relocation of the application contexts in the associated EASs together, the first entity may determine that the fifth EAS can indicate, through the AC, the sixth EAS to perform application context relocation together. That is, the corresponding target application context relocation scenarios determined for the plurality of first EASs include the application context relocation scenario decided by the fifth EAS and the application context relocation scenario detected and triggered by the AC.

It should be further added that, when the first entity determines the target application context relocation scenarios based on the capability information of the plurality of first EASs, the following step A and step B may be specifically included.

Step A: The first entity determines, based on the capability information of the second entity, whether the plurality of application context relocation scenarios include the application context relocation scenario decided by the fifth EAS.

For example, when the first entity determines, based on the capability information of the second entity, that the third entity has the capability of processing relocation of the application contexts in the associated EASs together, the first entity determines that the plurality of application context relocation scenarios include the application context relocation scenario decided by the fifth EAS.

For another example, when the first entity determines, based on the capability information of the second entity, that the second entity does not have the capability of processing relocation of the application contexts in the associated EASs together, the first entity determines that the plurality of application context relocation scenarios do not include the application context relocation scenario decided by the fifth EAS.

Step B: The first entity determines the target application context relocation scenarios from the plurality of application context relocation scenarios. For a specific implementation of step B, refer to the descriptions in step 302.

For example, when the plurality of application context relocation scenarios include the application context relocation scenario decided by the fifth EAS, the first entity determines the target application context relocation scenarios from the plurality of application context relocation scenarios, and the target application context relocation scenarios may include the application context relocation scenario decided by the fifth EAS.

Optionally, the method further includes: The first entity sends the target application context relocation scenarios. For a specific implementation of the scenario in which the first entity sends the target application context relocation scenarios, refer to the descriptions in the embodiment related to FIG. 5. In another implementation, the first entity may send the application context relocation scenario decided by the fifth EAS to the third entity and the fifth EAS separately, and send the application context relocation scenario detected and triggered by the third entity to the sixth EAS.

In the foregoing technical solution, the first entity determines, based on the capability information of the one or more second entities, whether a second entity (that is, the third entity) has the capability of processing relocation of the application contexts in the associated EASs together. Specifically, the third entity can receive a relocation notification trigger indication from a first EAS (that is, the fifth EAS) in the plurality of first EASs, and send a relocation notification to another first EAS (that is, the sixth EAS) in the plurality of first EASs, so that the sixth EAS performs application context relocation together. In this way, the first entity can determine that the target application context relocation scenarios include the application context relocation scenario decided by the fifth EAS. Correspondingly, when the fifth EAS determines that application context relocation needs to be performed, the third entity may trigger, based on the relocation notification trigger indication from the fifth EAS, the sixth EAS to perform application context relocation together with the fifth EAS. This helps avoid a service interruption during application context relocation.

It may be understood that, in step 1801 and step 1802, the plurality of first EASs are registered with a same EES, so that the first entity obtains capability information of the EES, or obtains capability information of the EES and capability information of another second entity as the capability information of the second entity. Then, the first entity determines the corresponding target application context relocation scenarios for all of the plurality of first EASs based on the capability information of the second entity.

In addition, a case in which the plurality of first EASs are registered with a plurality of different EESs is not excluded in this application. That is, one or more first EASs are registered with each EES. For example, the plurality of first EASs are an EAS 1 to an EAS 3, the EAS 1 and the EAS 2 are registered with an EES 1, and the EAS 3 is registered with an EES 2.

That is, the plurality of second entities may include a plurality of EESs. For example, there are five second entities, and the five second entities are respectively an AC, an EEC, and three EESs, or the five second entities are respectively an AC and four EESs, or the five second entities are five EESs. Certainly, the plurality of second entities may alternatively be implemented in another manner, and examples are not described one by one.

In this case, the first entity may obtain capability information of the plurality of different EESs, or obtain capability information of the plurality of EESs and capability information of another second entity as the capability information of the plurality of second entities. Then, the first entity determines a corresponding target application context relocation scenario for at least one of the plurality of first EASs based on the capability information of the plurality of second entities. It should be understood that the plurality of EESs are EESs with which the plurality of first EASs are registered.

Specifically, when the first entity is the EEC, the EEC may determine the corresponding target application context relocation scenarios for all of the plurality of first EASs based on the capability information of the plurality of second entities. For example, the plurality of first EASs are the EAS 1 to the EAS 3, and the EEC determines corresponding target application context relocation scenarios for the EAS 1 to the EAS 3.

When the first entity is an EES (denoted as a first EES) in the plurality of EESs, the first EES may determine corresponding target application context relocation scenarios for all of the plurality of first EASs based on the capability information of the plurality of second entities. For example, the plurality of first EASs are the EAS 1 to the EAS 3, the first entity is an EES 1 (that is, the first EES), and the EES 1 may determine the corresponding target application context relocation scenarios for the EAS 1 to the EAS 3.

Alternatively, the first EES may determine corresponding target application context relocation scenarios for a part of the plurality of first EASs based on the capability information of the plurality of second entities. For example, the plurality of first EASs are the EAS 1 to the EAS 3, the first entity is an EES 1 (that is, the first EES), and the EAS 1 may determine a corresponding target application context relocation scenario for at least one first EAS (for example, the EAS 1 and the EAS 2) registered with the EAS 1.

The following describes Case a and Case b depending on whether the first entity is the EEC or the EES.

Case a: The first entity is the EEC.

It may be understood that the following step 1801-a and step 1802-a are specific implementations of step 1801 and step 1802 when the first entity is the EEC and the plurality of second entities include a plurality of EESs. For parts that are not described in detail in step 1801-a and step 1802-a, refer to the descriptions in step 1801 and step 1802.

Step 1801-a: The EEC obtains the capability information of the plurality of second entities.

The plurality of second entities include a plurality of EESs, and correspondingly, the EEC obtains capability information of the plurality of EESs.

For example, the EEC receives capability information of each of the plurality of EESs from each EES, to obtain the capability information of the plurality of EESs.

For one of the plurality of EESs, capability information of the EES may indicate whether the EES has the capability of processing relocation of the application contexts in the associated EASs together. A first EES in the plurality of EESs is used as an example. Capability information of the first EES indicates whether the first EES has the capability of processing relocation of the application contexts in the associated EASs together.

In this application, one or more first EASs are registered with each of the plurality of EESs, the one or more first EASs registered with each of the plurality of EESs form the plurality of first EASs, the plurality of first EASs are associated EASs, and the plurality of EESs may be referred to as associated EESs.

In a specific implementation, the capability information of the first EES indicates whether the first EES has one or more of the following capability A to capability D.

Capability A: a capability of obtaining the identifiers of the plurality of first EASs.

Optionally, the first EES can not only obtain an identifier of the at least one first EAS registered with the first EES, but also obtain, from another EES in the plurality of EESs, an identifier of at least one first EAS registered with the another EES.

For example, the plurality of EESs are an EES 1 and an EES 2, and the plurality of EASs are an EAS 1 to an EAS 3. The first EES is the EES 1. The EES 1 can obtain not only the first EASs (for example, the EAS 1 and the EAS 2) registered with the EES 1, but also obtain, from the EES 2, the first EAS (for example, the EAS 3) registered with the EES 2. In this way, the EES 1 can obtain the identifiers of the plurality of EASs (that is, the EAS 1 to the EAS 3).

Capability B: a capability of obtaining an identifier of at least one first EAS registered with the first EES.

Optionally, the first EES can obtain the identifier of the at least one first EAS registered with the first EES. For example, the first EES is the EES 1, and the EES 1 can obtain the identifiers of the first EASs (for example, the EAS 1 and the EAS 2) registered with the EES 1.

It may be understood that the at least one first EAS registered with the first EES is at least one of the plurality of first EASs (associated EASs). That is, the at least one first EAS registered with the first EES is included in the plurality of first EASs.

Capability C: a capability of obtaining identifiers of the plurality of EESs. For example, the first EES may receive an identifier of an EES sent by another EES different from the first EES in the plurality of EESs.

Capability D: a capability of receiving a relocation notification trigger indication from one of the plurality of first EASs and sending a relocation notification to another EAS in the plurality of first EASs.

For example, the capability D may further include one or more of the following capabilities D1 to D3.

Capability D1: a capability of receiving a relocation notification trigger indication from a first EAS registered with the first EES, and sending a relocation notification to another EAS (that is, another first EAS) registered with the first EES. For example, the first EES is the EES 1, the EAS 1 and the EAS 2 are registered with the EES 1, and the capability D1 is a capability that the first EES can receive a relocation notification trigger indication from the EAS 1, and then send a relocation notification to the EAS 2 based on the relocation notification trigger indication.

Capability D2: a capability of receiving a relocation notification trigger indication from another EES different from the first EES in the plurality of EESs, and sending, based on the relocation notification trigger indication, a relocation notification to at least one first EAS registered with the first EES. For example, the plurality of EESs include the EES 1 and the EES 2. The first EES is the EES 1, and the EAS 1 and the EAS 2 are registered with the EES 1. The EES 1 can receive a relocation notification trigger indication from the EES 2, and send, based on the relocation notification trigger indication, a relocation notification separately to the EAS 1 and the EAS 2 registered with the EES 1.

Capability D3: a capability of receiving a relocation notification trigger indication from a first EAS registered with the first EES, and sending the relocation notification trigger indication to another EES different from the first EES in the plurality of EESs, so that the another EES sends a relocation notification to at least one first EAS registered with the another EES. For example, the plurality of EESs include the EES 1 and the EES 2, the first EES is the EES 1, and the capability D3 that the EES 1 sends a relocation notification trigger indication to the EES 2, to indicate the EES 2 to send a relocation notification to at least one first EAS registered with the EES 2.

In addition, in a process in which the EEC obtains the capability information of the plurality of second entities, the EEC may further obtain capability information of another second entity different from the plurality of EESs. That is, the EEC may further obtain capability information of the AC and/or capability information of the EEC. For capability information of another second entity, refer to the descriptions in step 1801.

Step 1802-a: The EEC determines the corresponding target application context relocation scenarios for the plurality of first EASs based on the capability information of the second entity.

In a first specific example, the plurality of second entities are a plurality of EESs. That is, the capability information of the plurality of second entities is capability information of the plurality of EESs. The EEC determines, for the plurality of first EASs based on the capability information of the plurality of EESs, the target application context relocation scenarios corresponding to the plurality of first EASs.

In a first specific example, when determining, based on the capability information of the plurality of EESs, that an EES (denoted as a second EES) in the plurality of EESs has the capability of processing relocation of the application contexts in the associated EASs together, the first entity determines that the target application context relocation scenarios corresponding to the plurality of first EASs include the application context relocation scenario decided by the first EAS.

Alternatively, when determining, based on the capability information of the plurality of EESs, that none of the plurality of EESs has the capability of processing relocation of the application contexts in the associated EASs together, the first entity determines that the target application context relocation scenarios corresponding to the plurality of first EASs do not include the application context relocation scenario decided by the first EAS.

That the first entity determines whether the EES has the capability of processing relocation of the application contexts in the associated EASs together may be specifically: The first entity determines whether the second EES has one or more of the foregoing capability A, capability B, capability C, and capability D.

In a specific implementation, when determining that the first EES has a third capability, the first entity determines that the first EES has the capability of processing relocation of the application contexts in the associated EASs together. When determining that the first EES does not have the third capability, the first entity determines that the first EES does not have the capability of processing relocation of the application contexts in the associated EASs together. The third capability is one of the capability A, the capability B, the capability C, and the capability D. For example, the third capability is the capability A. When determining that the EES has the capability A, the first entity determines that the EES has the capability of processing relocation of the application contexts in the associated EASs together. When determining that the EES does not have the capability A, the first entity determines that the EES does not have the capability of processing relocation of the application contexts in the associated EASs together. When the third capability is the capability B, the capability C, or the capability D, an implementation is similar to that of the capability A, and the "capability A" may be separately replaced with the "capability B", the "capability C", or the "capability D" for understanding.

In another specific implementation, when determining that the first EES has a third capability group, the first entity determines that the first EES has the capability of processing relocation of the application contexts in the associated EASs together. When determining that the first EES has no capability in the third capability group, the first entity determines that the first EES does not have the capability of processing relocation of the application contexts in the associated EASs together. The third capability group is a combination of a plurality of capabilities in the capability A, the capability B, the capability C, and the capability D (for example, the capability D1 or the capability D3). For example, the third capability group includes the capability A and the capability C. When determining that the EES has the capability A and the capability C, the first entity determines that the EES has the capability of processing relocation of the application contexts in the associated EASs together. When determining that the EES does not have the capability A or the capability C, the first entity determines that the EES does not have the capability of processing relocation of the application contexts in the associated EASs together. When the third capability group is obtained in another combination manner of the capability A, the capability B, the capability C, and the capability D, a specific implementation is similar to the foregoing implementation. For example, for the third capability group including the capability A and the capability D, "the capability A and the capability C" may be replaced with "the capability A and the capability D", and "the capability A or the capability C" are replaced with "the capability A or the capability D" for understanding.

In addition, the EEC may further determine whether another EES different from the second EES in the plurality of EESs has one or more of the capability A, the capability B, and the capability D (for example, the capability D2). After determining that the another EES has one or more of the capability A, the capability B, and the capability D, the EEC determines that target application context relocation scenarios corresponding to the plurality of first EASs include the application context relocation scenario decided by the first EAS.

It may be understood that the application context relocation scenario decided by the first EAS is specifically an application context relocation scenario decided by the fifth EAS. One or more first EASs are registered with the second EES, the fifth EAS is a first EAS in the one or more first EASs, and the fifth EAS supports the application context relocation scenario decided by the fifth EAS. In addition, when a plurality of first EASs are registered with the second EES, a first EAS different from the fifth EAS in the plurality of first EASs may be denoted as a sixth EAS, and the sixth EAS may support an application context relocation scenario triggered and detected by the second EES.

For specific descriptions that the fifth EAS supports the application context relocation scenario decided by the fifth EAS and that the sixth EAS supports the application context relocation scenario triggered and detected by the second EES, refer to the descriptions in step 1802.

It may be understood that the second EES herein is a specific implementation of the third entity in step 1802. That is, for the fifth EAS and the second EES, when determining that application context relocation is required, the fifth EAS may send a relocation notification trigger indication to the second EES. For the sixth EAS and the second EES, the second EES may send a relocation notification to the sixth EAS based on the relocation notification trigger indication. The relocation notification is used to trigger the sixth EAS to perform application context relocation.

In addition, the second EES may further send a relocation notification trigger indication to another EES different from the second EES in the plurality of EESs based on the relocation notification trigger indication, so that the another EES can send, based on the relocation notification trigger indication, a relocation notification to at least one first EAS registered with the another EES. The relocation notification is used to trigger the at least one first EAS registered with the another EES to perform application context relocation.

In a second specific example, the plurality of second entities include a plurality of EESs, and an AC and/or an EEC. In other words, the capability information of the plurality of second entities includes capability information of the plurality of EESs, and capability information of the AC and/or capability information of the EEC. The EEC determines target application context relocation scenarios corresponding to the plurality of first EASs for the plurality of first EASs based on the capability information of the plurality of EESs and the capability information of the AC and/or the capability information of the EEC.

In this scenario, when a second entity (that is, a third entity) in the plurality of second entities (including the plurality of EESs, and the AC and/or the EEC) has the capability of processing relocation of the application contexts in the associated EASs together, the corresponding target application context relocation scenarios determined by the EECs for the plurality of first EASs include the application context relocation scenario decided by the first EAS.

Further, when the third entity is the AC or the EEC, the AC or the EEC has the capability of processing relocation of the application contexts in the associated EASs together, that is, has one or more of the foregoing capability a to the capability c.

When the third entity is an EES (that is, the second EES) in the plurality of EESs, the second EES has the capability of processing relocation of the application contexts in the associated EASs together, that is, has one or more of the capability a to the capability c, or specifically, has one or more of the capability A, the capability B, the capability C, and the capability D (for example, the capability D1 or the capability D3). Further, another EES different from the second EES in the plurality of EESs may further have one or more of the capability A, the capability B, and the capability D (for example, the capability D2).

Case b: The first entity is the EES. That is, the first entity is one of the plurality of EESs.

Herein, any one of the plurality of EESs may be used as the first entity.

Alternatively, a specified EES in the plurality of EESs is used as the first entity. In this application, the EES used as the first entity may be referred to as a main EES.

Example a: The AC or the EEC specifies one of the plurality of EESs as the first entity. For example, the AC separately sends a first specification message to the plurality of EESs. The first specification message includes an identifier of an EES in the plurality of EESs. Correspondingly, after receiving the first specification message, the plurality of EESs determine an EES corresponding to the identifier of the EES in the first specification message as the main EES, that is, the first entity.

Example b: A third indication is preconfigured in an EES in the plurality of EESs. The third indication indicates that the EES is an EES that is in the plurality of EESs and that is configured to determine the corresponding target application context relocation scenarios for the plurality of first EASs. The EES in which the third indication is preconfigured is used as the main EES, that is, the first entity.

Example c: A specified EAS is registered with an EES in the plurality of EESs, and the EES with which the specified EAS is registered is used as the first entity. The specified EAS may also be referred to as a main EAS. The main EAS may be specifically an EAS that is in the plurality of first EASs and that is configured to provide a main service for an application, or an EAS that is in the plurality of first EASs and that is configured to run a main program of the application. A game AC is used as an example. Three first EASs that provide services for the game AC are a graphics rendering EAS, a chat function EAS, and a game acceleration EAS. The game acceleration EAS may be used as a main EAS of the game AC.

The specified EAS may be specifically an EAS specified by the AC or the EEC in the plurality of first EASs. For example, the AC sends a second specification message to each of the plurality of first EASs. The second specification message includes an identifier of a first EAS in the plurality of first EASs. Correspondingly, after receiving the second specification message, the plurality of first EASs determine a first EAS corresponding to the identifier of the first EAS in the second specification message as the main EAS. Alternatively, a fourth indication is preconfigured in the specified EAS, and the fourth indication indicates that the EAS is the main EAS.

In this application, "specified" may also be referred to as "determined", "selected", "specific", or the like.

It may be understood that the following step 1801-b and step 1802-b are specific implementations of step 1801 and step 1802 when the first entity is the main EES in the plurality of EESs and the plurality of second entities include a plurality of EESs. For parts that are not described in detail in step 1801-b and step 1802-b, refer to step 1801 and step 1802, or refer to descriptions in step 1801-a and step 1802-a. The following provides description by using an example in which the main EES is the first EES.

Step 1801-b: The first EES obtains the capability information of the plurality of second entities.

The plurality of second entities include a plurality of EESs, and correspondingly, the first EES obtains capability information of the plurality of EESs.

For example, the first EES can obtain not only capability information of the first EES, but also capability information of another EES different from the first EES in the plurality of EESs. For example, the first EES receives the capability information of the another EES from the another EES in the plurality of EESs, to obtain the capability information of the plurality of EESs.

In a specific implementation, the first EES may send a first capability request to the another EES. The first capability request is used by the first EES to request the capability information of the another EES from the another EES. Correspondingly, after receiving the first capability request, the another EES sends the capability information of the another EES to the first EES.

Capability information of an EES may indicate whether the EES has the capability of processing relocation of the application contexts in the associated EASs together. For specific descriptions, refer to the descriptions about the capability information of the EES in step 1801-a.

In addition, in a process in which the first EES obtains the capability information of the plurality of second entities, the first EES may further obtain capability information of another second entity different from the plurality of EESs. That is, the first EES may further obtain capability information of an AC and/or capability information of the EEC. For capability information of another second entity, refer to the descriptions in step 1801.

Step 1802-b: The first EES determines a corresponding target application context relocation scenario for at least one of the plurality of first EASs based on the capability information of the plurality of second entities.

The following describes Example (1) and Example (2) depending on whether the first EES determines corresponding target application context relocation scenarios for all or a part of the plurality of first EASs.

Example (1): The first EES determines corresponding target application context relocation scenarios for all of the plurality of first EASs based on the capability information of the plurality of second entities. For specific implementation, refer to the descriptions of step 1802-a in Case a. The EEC may be replaced with the first EES.

Example 1: The plurality of EESs include an EES 1 and an EES 2. An EAS 1 and an EAS 2 are registered with the EES 1, and an EAS 3 is registered with the EES 2. The first EES is the EES 1. Target application context relocation scenarios determined by the EES 1 for the EAS 1, the EAS 2, and the EAS 3 based on capability information of the EES 1, capability information of the EES 2, and application context relocation scenarios supported by the EAS 1 to the EAS 3 include an application context relocation scenario decided by the EAS 1.

The EAS 1 supports the application context relocation scenario decided by the EAS 1, the EAS 2 supports an application context relocation scenario triggered and detected by the EES 1, and the EAS 3 supports an application context relocation scenario triggered and detected by the EES 2. In addition, the EES 1 has one or more of the capability A, the capability B, the capability C, and the capability D (for example, the capability D1 or the capability D3), and the EES 2 has one or more of the capability A, the capability B, and the capability D (for example, the capability D2).

Further, in a scenario of triggering application context relocation, the EES 1 receives a relocation notification trigger indication from the EAS 1, sends a relocation notification to the EAS 2, and sends a relocation notification trigger indication to the EES 2. Correspondingly, the EES 2 receives the relocation notification trigger indication from the EES 1, and sends a relocation notification to the EAS 3. In this way, the EAS 1 to the EAS 3 may perform application context relocation together.

In Example (1), the capability information of the another EES obtained by the first EES may not only indicate whether the another EES has one or more of the capability A to the capability D, but also directly indicate whether the another EES has the capability of processing relocation of the application contexts in the associated EASs together.

In a specific implementation of the latter possible manner, the first EES obtains the capability information of the another EES different from the first EES in the plurality of EESs. The capability information is specifically a processing result of the another EES. Specifically, the another EES determines, based on the capability information of the another EES and an application context relocation scenario supported by at least one first EAS registered with the another EES, whether the another EES has the capability of processing relocation of the application contexts in the associated EASs together. For example, the processing result is "have" or "do not have". For example, the processing result is represented by using 1 bit. When a value of the bit is 1, it indicates "have", and when a value of the bit is 0, it indicates "do not have".

Herein, because the another EES determines, based on the capability information of the another EES and the application context relocation scenario supported by the at least one first EAS registered with the another EES, whether the another EES has the capability of processing relocation of the application contexts in the associated EASs together, the another EES does not need to send, to the first EES, the application context relocation scenario supported by the at least one first EAS registered with the another EES. That is, in this specific implementation, the first EES obtains a processing result of another EES different from the first EES in the plurality of EESs, and determines the corresponding target application context relocation scenarios for all of the plurality of first EASs based on the processing result of the another EES, the capability information of the first EES, and the application context relocation scenario supported by at least one first EAS registered with the first EES.

Example 2: The plurality of EESs include an EES 1 and an EES 2. An EAS 1 and an EAS 2 are registered with the EES 1, and an EAS 3 is registered with the EES 2. The first EES is the EES 1. The EES 2 first determines, based on capability information of the EES 2 and an application context relocation scenario supported by the EAS 3, that the EES 2 has the capability of processing relocation of the application contexts in the associated EASs together, and an obtained processing result is "have". The EES 1 obtains capability information of the EES 1, the processing result of the EES 2, and application context relocation scenarios supported by the EAS 1 and the EAS 2, and the target application context relocation scenarios determined for the EAS 1, the EAS 2, and the EAS 3 include an application context relocation scenario decided by the EAS 1. For application context relocation scenarios supported by the EAS 1 to the EAS 3, capabilities of the EES 1 and the EES 2, and how to implement application context relocation by the EAS 1 to the EAS 3 together, refer to the descriptions in Example 1.

Example (2): The first EES determines corresponding target application context relocation scenarios for a part of the plurality of first EASs based on the capability information of the plurality of second entities.

Optionally, the part of the first EAS is at least one first EAS registered with the first EES.

It may be understood that at least one first EAS is registered with each of the plurality of EESs. Each EES in the plurality of EESs determines a corresponding target application context relocation scenario based on the capability information of the plurality of second entities for at least one first EAS registered with the EES. In other words, in this application, not only a corresponding target application context relocation scenario decided by the first EES based on the capability information of the plurality of second entities for the at least one first EAS registered with the first EES is included, but also a corresponding target application context relocation scenario decided by the another EES different from the first EES in the plurality of EESs based on the capability information of the plurality of second entities for at least one first EAS registered with the another EES is included.

For an implementation in which the first EES or the another EES different from the first EES in the plurality of EESs determines the corresponding target application context relocation scenarios based on the capability information of the plurality of second entities for the one or more first EASs registered with the EESs, refer to the descriptions in Example (1).

Example 3: The plurality of EESs include an EES 1 and an EES 2. An EAS 1 and an EAS 2 are registered with the EES 1, and an EAS 3 is registered with the EES 2. The first EES is the EES 1. The EES 1 determines target application context relocation scenarios for the EAS 1 and the EAS 2 based on the capability information of the plurality of second entities and application context relocation scenarios supported by the EAS 1 and the EAS 2. The determined target application context relocation scenarios include, for example, an application context relocation scenario decided by the EAS 1. Similarly, another EES (that is, the EES 2) in the plurality of EESs determines a target application context relocation scenario for the EAS 3 based on the capability information of the plurality of second entities and an application context relocation scenario supported by the EAS 3. The determined target application context relocation scenario includes, for example, an application context relocation scenario decided by the EAS 3. In this example, for application context relocation scenarios supported by the EAS 1 to the EAS 3, capability information of the EES 1 and the EES 2, and how to implement application context relocation by the EAS 1 to the EAS 3 together, refer to the descriptions in Example 1 and Example 2.

In the foregoing technical solution, the first entity determines, based on the capability information of the plurality of EESs, whether an EES (that is, the third entity or the second EES) has the capability of processing relocation of the application contexts in the associated EASs together. The EES serving as the third entity can specifically receive a relocation notification trigger indication from the first EAS (that is, the fifth EAS) registered with the EES, send a relocation notification to another first EAS registered with the EES, and send a relocation notification trigger indication to another EES, so that the another EES sends a relocation notification to at least one first EAS registered with the another EES. In this way, the first entity can determine that the target application context relocation scenarios include the application context relocation scenario decided by the fifth EAS. Correspondingly, when the fifth EAS determines that application context relocation is required, an EES serving as the third entity may separately trigger, based on the relocation notification trigger indication of the fifth EAS, another EAS registered with the EES to perform application context relocation together with the fifth EAS, and indicate another EES to send a relocation notification to at least one first EAS registered with the another EES, to indicate the at least one first EAS to perform application context relocation together with the fifth EAS. This helps avoid a service interruption during application context relocation.

It should be added that Implementation 1 further includes Implementation (3), the first entity determines, based on the capability information of the plurality of first EASs and the capability information of the second entity, whether the plurality of application context relocation scenarios include an EAS-decided application context relocation scenario (or referred to as an application context relocation scenario decided by the EAS or an application context relocation scenario decided by a first EAS), and then selects the target application context relocation scenarios from the plurality of application context relocation scenarios.

Specifically, the first entity obtains the capability information of the plurality of first EASs, and the capability information of the one or more second entities. For the obtaining manner, refer to the descriptions in Implementation (1) and Implementation (2) separately.

Further, the first entity determines, based on the capability information of the plurality of first EASs and the capability information of the one or more second entities, whether the plurality of application context relocation scenarios include an EAS-decided application context relocation scenario, and further determines the target application context relocation scenarios.

In an example, the first entity first determines, based on the capability information of the plurality of first EASs, whether a first EAS having the capability of processing relocation of the application contexts in the associated EASs together exists in the plurality of first EASs. If the first entity determines that the first EAS having the capability of processing relocation of the application contexts in the associated EASs together exists in the plurality of first EASs, the first entity determines that the plurality of application context relocation scenarios include an EAS-decided application context relocation scenario. That is, the first entity no longer determines, based on the capability information of the second entity, whether the plurality of application context relocation scenarios include an EAS-decided application context relocation scenario. If the first entity determines that the first EAS having the capability of processing relocation of the application contexts in the associated EASs together does not exist in the plurality of first EASs, the first entity further determines, based on the capability information of the second entity, whether the plurality of application context relocation scenarios include an EAS-decided application context relocation scenario. Specifically, if the first entity determines that a second entity having the capability of processing relocation of the application contexts in the associated EASs together exists in the one or more second entities, the first entity further determines that the plurality of application context relocation scenarios include an EAS-decided application context relocation scenario. If the first entity determines that the second entity having the capability of processing relocation of the application contexts in the associated EASs together does not exist in the one or more second entities, the first entity further determines that the plurality of application context relocation scenarios do not include an EAS-decided application context relocation scenario.

In another example, the first entity first determines, based on the capability information of the one or more second entities, whether a second entity having the capability of processing relocation of the application contexts in the associated EASs together exists in the one or more second entities. If the first entity determines that the second entity having the capability of processing relocation of the application contexts in the associated EASs together exists in the one or more second entities, the first entity determines that the plurality of application context relocation scenarios include an EAS-decided application context relocation scenario. That is, the first entity no longer determines, based on the capability information of the plurality of first EASs, whether the plurality of application context relocation scenarios include an EAS-decided application context relocation scenario. If the first entity determines that the second entity having the capability of processing relocation of the application contexts in the associated EASs together does not exist in the second entities, the first entity further determines, based on the capability information of the plurality of first EASs, whether the plurality of application context relocation scenarios include an EAS-decided application context relocation scenario. Specifically, if the first entity determines that a first EAS having the capability of processing relocation of the application contexts in the associated EASs together exists in the plurality of first EASs, the first entity further determines that the plurality of application context relocation scenarios include an EAS-decided application context relocation scenario. If the first entity determines that the first EAS having the capability of processing relocation of the application contexts in the associated EASs together does not exist in the plurality of first EASs, the first entity further determines that the plurality of application context relocation scenarios do not include an EAS-decided application context relocation scenario.

In addition, the first entity may further determine, based on the capability information of the one or more second entities, whether the second entity having the capability of processing relocation of the application contexts in the associated EASs together exists in the one or more second entities, and determine, based on the capability information of the plurality of first EASs, whether the first EAS having the capability of processing relocation of the application contexts in the associated EASs together exists in the plurality of first EASs. Therefore, the first entity further determines the plurality of application context relocation scenarios. Certainly, there may be another manner in this application, and details are not described again.

In Implementation (3), for an implementation in which the first entity determines, based on the capability information of the plurality of first EASs, whether the plurality of application context relocation scenarios include an EAS-decided application context relocation scenario, refer to the descriptions in Implementation (1). For an implementation in which the first entity determines, based on the capability information of the one or more second entities, whether the plurality of application context relocation scenarios include an EAS-decided application context relocation scenario, refer to the descriptions in Implementation (2).

The following describes Implementation (1) and Implementation (2) with reference to specific implementation scenarios.

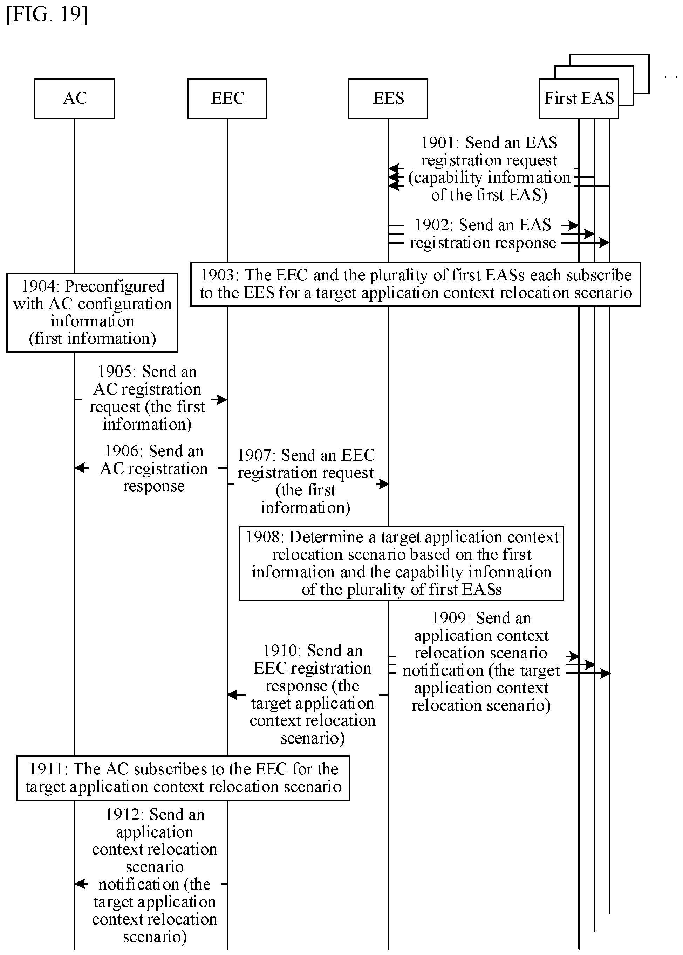

FIG. 19 shows a specific implementation of Implementation (1). A first entity is an EES, and the EES determines, based on capability information of a plurality of first EASs, whether target application context relocation scenarios include an application context relocation scenario decided by a first EAS. In this specific implementation, for content that is not described in detail, refer to Implementation (1) or the embodiment related to FIG. 17.

Step 1901: A plurality of first EASs each send an EAS registration request to an EES, and correspondingly, the EES receives the registration requests from the plurality of first EASs.

One of the first EASs is used as an example, and a registration request of the first EAS includes configuration information of the first EAS. The configuration information of the first EAS includes capability information of the first EAS, and the capability information of the first EAS indicates whether the first EAS has one or more of a capability 1 to a capability 4.

For descriptions of the capability 1 to the capability 4, refer to the descriptions in the embodiment related to FIG. 17.

Herein, the configuration information of the first EAS further includes an identifier of the first EAS and an application context relocation scenario supported by the first EAS. The application context relocation scenario supported by the first EAS may indicate whether the first EAS has the capability 4. That is, the application context relocation scenario supported by the first EAS may be considered as the capability information of the first EAS.

Step 1902: The EES sends an EAS registration response to each of the plurality of first EASs.

Step 1903: An EEC and the plurality of first EASs each subscribe to the EES for a target application context relocation scenario.

Step 1904: An AC is preconfigured with AC configuration information. The AC configuration information may include an application context relocation scenario supported by the AC, an identifier of the AC, and first information. The first information is, for example, a first EAS list, and the first EAS list is a list including identifiers of the plurality of first EASs.

Step 1905: The AC sends an AC registration request to the EEC, where the AC registration request includes the AC configuration information.

Step 1906: The EEC sends an AC registration response to the AC.

Step 1907: The EEC sends an EEC registration request to the EES, where the EEC registration request includes the AC configuration information and an application context relocation scenario supported by the EEC.

Step 1908: The EES determines, based on the first information, that application contexts in the plurality of first EASs need to be relocated together. The EES determines, based on the capability information of the plurality of first EASs, whether a first EAS (that is, a fifth EAS) having a capability of processing relocation of the application contexts in the associated EASs together exists in the plurality of first EASs. Specifically, if the EES determines that the fifth EAS having the capability of processing relocation of the application contexts in the associated EASs together exists in the plurality of first EASs, the EES determines that a plurality of application context relocation scenarios include an application context relocation scenario decided by the fifth EAS. If the EES determines that none of the plurality of first EASs has the capability of processing relocation of the application contexts in the associated EASs together, the EES determines that the plurality of application context relocation scenarios do not include the application context relocation scenario decided by the fifth EAS. The EES selects a target application context relocation scenario from the plurality of determined application context relocation scenarios.

Step 1909: The EES sends an application context relocation scenario notification to each of the plurality of first EASs, where the application context relocation scenario notification includes the target application context relocation scenario.

Step 1910: The EES sends an EEC registration response to the EEC, where the EEC registration response includes the target application context relocation scenario.

Step 1911: The AC subscribes to the EEC for the target application context relocation scenario.

Step 1912: The EEC sends an application context relocation scenario notification to the AC, where the application context relocation scenario notification includes the target application context relocation scenario.

In addition, in the foregoing embodiment, the first entity may also be replaced with the EEC, and a difference lies in whether the first entity directly communicates with the first EAS or indirectly communicates with the first EAS through the EES, and whether the first entity directly communicates with the AC or indirectly communicates with the AC through the EEC. Specific messages between entities are different.

In the foregoing embodiment, a registration request may be replaced with an update request, and a registration response may be replaced with an update response. For example, the EAS registration request is replaced with an EAS update request, and the EAS registration response is replaced with an EAS update response. Certainly, the foregoing information may alternatively be carried in another type of message. This is not limited in this application.

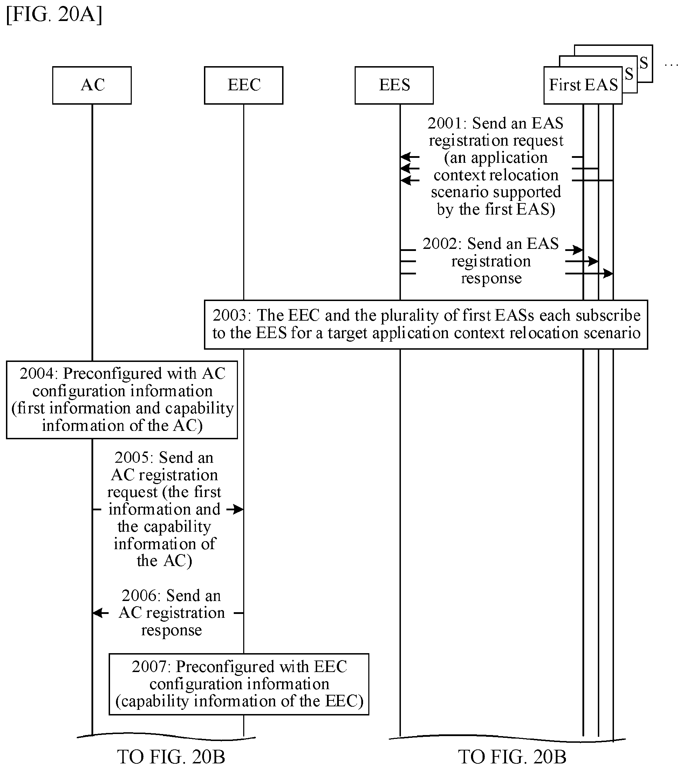

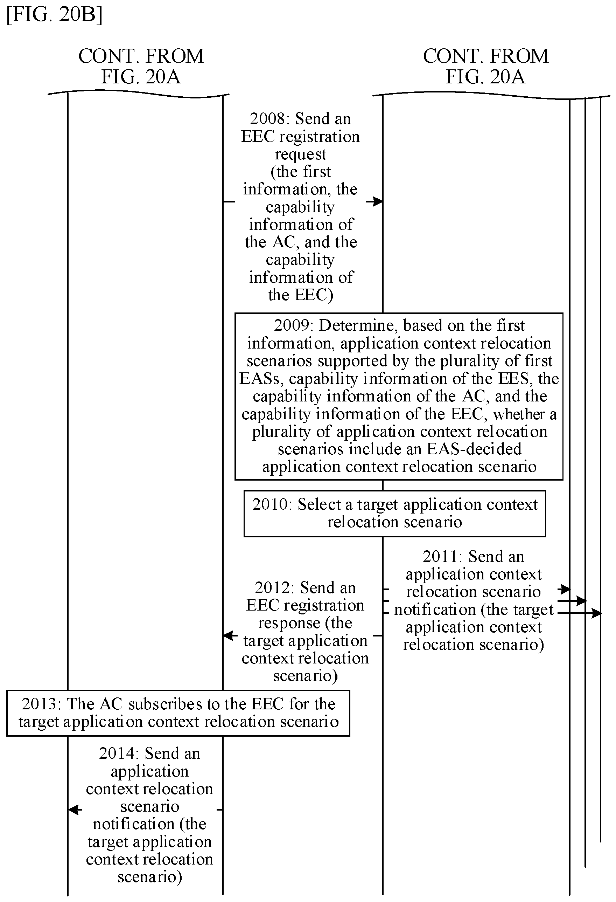

FIG. 20A and FIG. 20B show a specific implementation of Implementation (2). A first entity is an EES, and a plurality of second entities include an AC, an EEC, and an EES. There is one EES. That is, a plurality of first EASs that need to perform application context relocation together are registered with the EES. The EES determines, based on capability information of the plurality of second entities, whether a target application context relocation scenario includes an application context relocation scenario decided by a first EAS. In this specific implementation, for content that is not described in detail, refer to Implementation (2) or the embodiment related to FIG. 18.

Step 2001: A plurality of first EASs each send an EAS registration request to an EES, and correspondingly, the EES receives the registration requests from the plurality of first EASs.

One of the first EASs is used as an example, and a registration request of the first EAS includes configuration information of the first EAS. The configuration information of the first EAS includes an application context relocation scenario supported by the first EAS. For descriptions of the application context relocation scenario supported by the first EAS, refer to the descriptions in the embodiment related to FIG. 18. Herein, the configuration information of the first EAS further includes an identifier of the first EAS.

Step 2002: The EES sends an EAS registration response to each of the plurality of first EASs.

Step 2003: An EEC and the plurality of first EASs each subscribe to the EES for a target application context relocation scenario.

Step 2004: An AC is preconfigured with AC configuration information.

The AC configuration information includes capability information of the AC. The capability information of the AC indicates whether the AC has a capability of processing relocation of application contexts in the associated EASs together, in other words, whether the AC has one or more of the foregoing capability a to capability c. For descriptions of the capability a to the capability c, refer to the descriptions in the embodiment related to FIG. 18.

The AC configuration information may further include an application context relocation scenario supported by the AC, an identifier of the AC, and first information. The first information is, for example, a first EAS list, that is, a list including identifiers of the plurality of first EASs. The application context relocation scenario supported by the AC may indicate whether the AC has the capability b. The application context relocation scenario supported by the AC may also be considered as the capability information of the AC.

Step 2005: The AC sends an AC registration request to the EEC, where the AC registration request includes the AC configuration information, that is, includes the first information and the capability information of the AC.

Step 2006: The EEC sends an AC registration response to the AC.

Step 2007: The EEC is preconfigured with EEC configuration information.

The EEC configuration information includes capability information of the EEC. The capability information of the EEC indicates whether the EEC has the capability of processing relocation of the application contexts in the associated EASs together, in other words, whether the EEC has one or more of the foregoing capability a to capability c. For descriptions of the capability a to the capability c, refer to the descriptions in the embodiment related to FIG. 18.

The EEC configuration information may further include an application context relocation scenario supported by the EEC and an identifier of the EEC. The application context relocation scenario supported by the EEC may indicate whether the EEC has the capability b. The application context relocation scenario supported by the EEC may also be considered as the capability information of the EEC.

Step 2008: The EEC sends an EEC registration request to the EES, where the EEC registration request includes the AC configuration information and the EEC configuration information. Correspondingly, the EES receives the EEC registration request from the EEC.

Step 2009: The EES determines, based on the first information carried in the AC configuration information in the EEC registration request, that application contexts in the plurality of first EASs need to be relocated together. The EES determines, based on the application context relocation scenarios supported by the plurality of first EASs, capability information of the EES, the capability information of the AC, and the capability information of the EEC, whether a second entity (that is, a third entity) having a capability of processing relocation of the application contexts in the associated EASs together exists in the AC, the EEC, and the EES. Specifically, if the EES determines that the third entity having the capability of processing relocation of the application contexts in the associated EASs together exists in the AC, the EEC, and the EES, that is, determines that a fifth EAS in the plurality of first EASs can indicate, by using the third entity, another EAS (that is, a sixth EAS) in the plurality of first EASs to perform application context relocation together, the EES determines that the plurality of application context relocation scenarios include an application context relocation scenario decided by the fifth EAS. If the EES determines that the third entity having the capability of processing relocation of the application contexts in the associated EASs together does not exist in the AC, the EEC, and the EES, that is, determines that the fifth EAS in the plurality of first EASs cannot indicate, by using the third entity, another EAS (that is, the sixth EAS) in the plurality of first EASs to perform application context relocation together, the EES determines that the plurality of application context relocation scenarios do not include the application context relocation scenario decided by the fifth EAS.

Herein, that the fifth EAS can indicate, by using the third entity, the sixth EAS in the plurality of first EASs to perform application context relocation together may be understood as: The third entity may receive a relocation notification trigger indication from the fifth EAS, and then send a relocation notification to the sixth EAS. The descriptions may be further applicable to another example of this application.

Herein, it may be further understood that the EES is preconfigured with EES configuration information. The EES configuration information includes the capability information of the EES. The capability information of the EES indicates whether the EES has the capability of processing relocation of the application contexts in the associated EASs together, in other words, whether the EES has one or more of the foregoing capability a to capability c. For descriptions of the capability a to the capability c, refer to the descriptions in the embodiment related to FIG. 18.

The EES configuration information may further include an application context relocation scenario supported by the EES and an identifier of the EES. The application context relocation scenario supported by the EES may indicate whether the EES has the capability b. The application context relocation scenario supported by the EES may also be considered as the capability information of the EES.

Step 2010: The EES selects a target application context relocation scenario from the plurality of application context relocation scenarios.

When the EES determines that the plurality of application context relocation scenarios include the application context relocation scenario decided by the fifth EAS, the EES may determine both the application context relocation scenario decided by the fifth EAS and an application context relocation scenario decided by the third entity as the target application context relocation scenarios.

For example, the third entity is an AC. When the AC has the capability a to the capability c, and the sixth EAS supports an application context relocation scenario decided by the AC, the EES may determine that the fifth EAS in the plurality of first EASs can indicate, by using the AC, the sixth EAS in the plurality of first EASs to perform application context relocation together. That is, the EES determines both the application context relocation scenario decided by the fifth EAS and the application context relocation scenario decided by the AC as target application context relocation scenarios.

Step 2011: The EES sends an application context relocation scenario notification to each of the plurality of first EASs, where the application context relocation scenario notification includes the target application context relocation scenario.

With reference to the foregoing example, the target application context relocation scenario included in the application context relocation scenario notifications separately sent by the EES to the plurality of first EASs carries the application context relocation scenario decided by the fifth EAS and the application context relocation scenario decided by the AC.

Step 2012: The EES sends an EEC registration response to the EEC, where the EEC registration response includes the target application context relocation scenario.

Step 2013: The AC subscribes to the EEC for the target application context relocation scenario.

Step 2014: The EEC sends an application context relocation scenario notification to the AC, where the application context relocation scenario notification includes the target application context relocation scenario.

In addition, in the foregoing embodiment, the first entity may also be replaced with an EEC, and a difference lies in whether the first entity directly communicates with the first EAS or indirectly communicates with the first EAS through the EES, and a communication manner between the first entity and the second entity. Specific messages between the entities are different.

In the foregoing embodiment, a registration request may be replaced with an update request, and a registration response may be replaced with an update response. For example, the EAS registration request is replaced with an EAS update request, and the EAS registration response is replaced with an EAS update response. Certainly, the foregoing information may alternatively be carried in another type of message. This is not limited in this application.

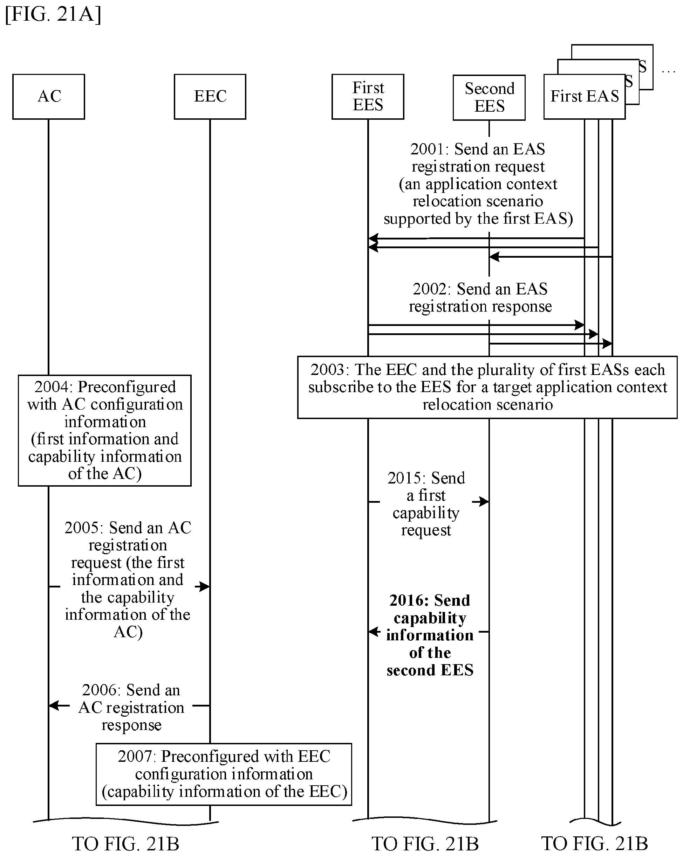

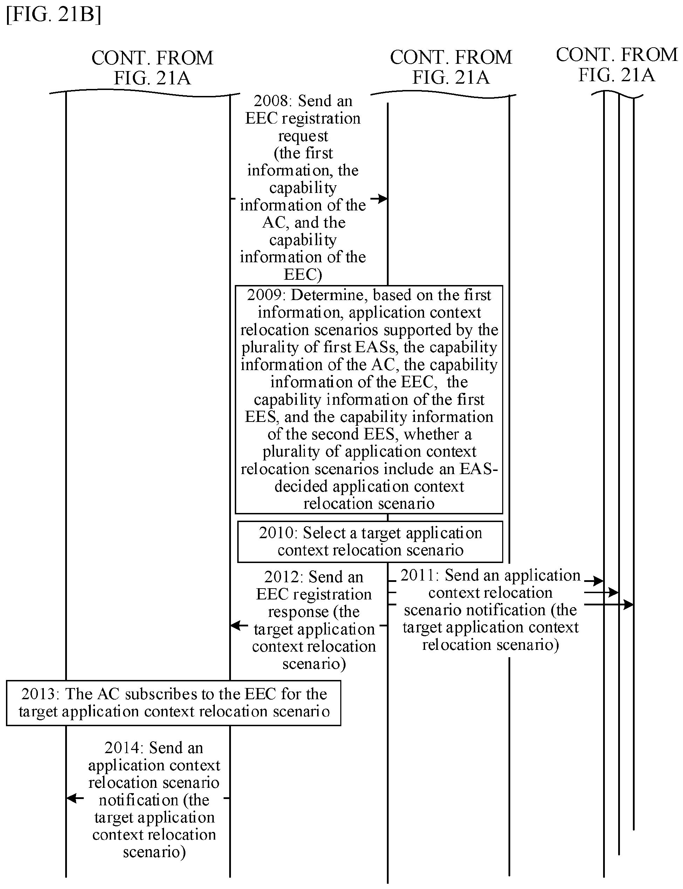

FIG. 21A and FIG. 21B show another specific implementation of Implementation (2). A plurality of second entities include an AC, an EEC, and an EES. There are a plurality of EESs. That is, a plurality of first EASs that need to perform application context relocation together are registered with the plurality of different EESs. When a first entity is an EES (denoted as a first EES) in the plurality of EESs, the first EES determines target application context relocation scenarios for all of the plurality of first EASs based on capability information of the plurality of second entities. In this specific implementation, for content that is not described in detail, refer to the descriptions in Implementation (2) or the embodiment related to FIG. 18 or FIG. 20A and FIG. 20B.

It should be noted that, for ease of description, only the first EES and a second EES are shown in FIG. 21A and FIG. 21B. The second EES is another EES different from the first EES in the plurality of EESs. When the plurality of second entities further include another EES (for example, a third EES), for an interaction manner between the first EES and the third EES, refer to the interaction manner between the first EES and the second EES. Certainly, a quantity of the plurality of EESs is not limited in this application.

Further, for step 2001 to step 2014 included in FIG. 21A and FIG. 21B, refer to step 2001 to step 2014 shown in FIG. 20A and FIG. 20B. The EES in FIG. 20A and FIG. 20B may be replaced with the first EES for understanding.

In addition, the differences are as follows.

In step 2001 and step 2002 of FIG. 21A and FIG. 21B, one or more of the plurality of first EASs may be registered with the first EES, and one or more other first EASs may be registered with the second EES.

In step 2009 in FIG. 21A and FIG. 21B, the first EES needs to determine, based on first information, application context relocation scenarios supported by the plurality of first EASs, capability information of the AC, capability information of the EEC, capability information of the first EES, and capability information of the second EES, whether the plurality of application context relocation scenarios include an application context relocation scenario decided by the first EAS. For an implementation of step 2009, refer to the descriptions of step 1802-b. In addition, when the second entity further includes another EES (for example, a third EES), the first EES further needs to consider capability information of the third EES. Details are not described again.

In addition, FIG. 21A and FIG. 21B further include the following step 2015 and step 2016.

Step 2015: The first EES sends a first capability request to the second EES, where the first capability request is used by the first EES to request the capability information of the second EES from the second EES.

Step 2016: After receiving the first capability request, the second EES sends the capability information of the second EES to the first EES. In this way, the first EES obtains the capability information of the second EES.

Certainly, in this application, there may be another implementation in which the first EES obtains the capability information of the second EES.

Step 2015 and step 2016 are performed before step 2009.

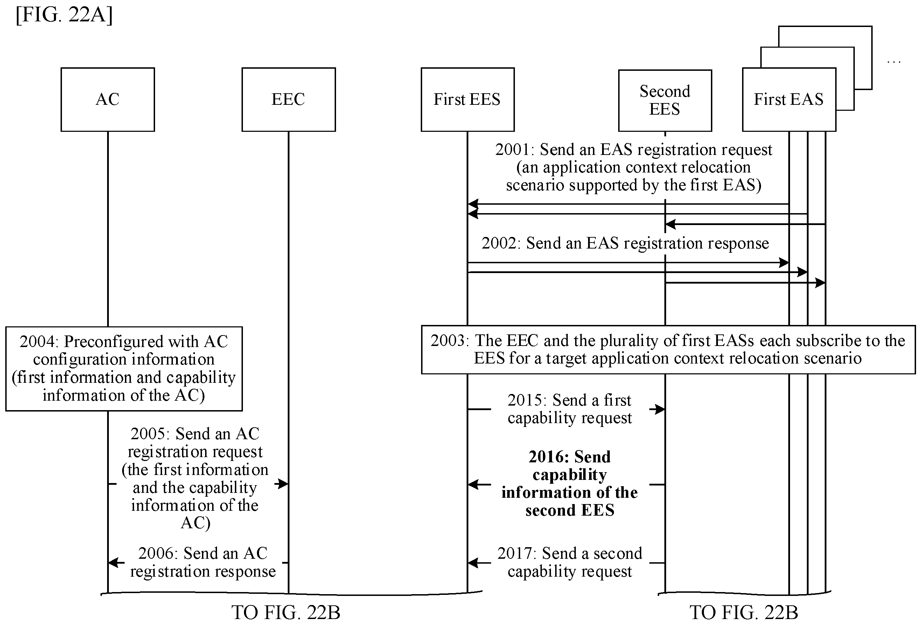

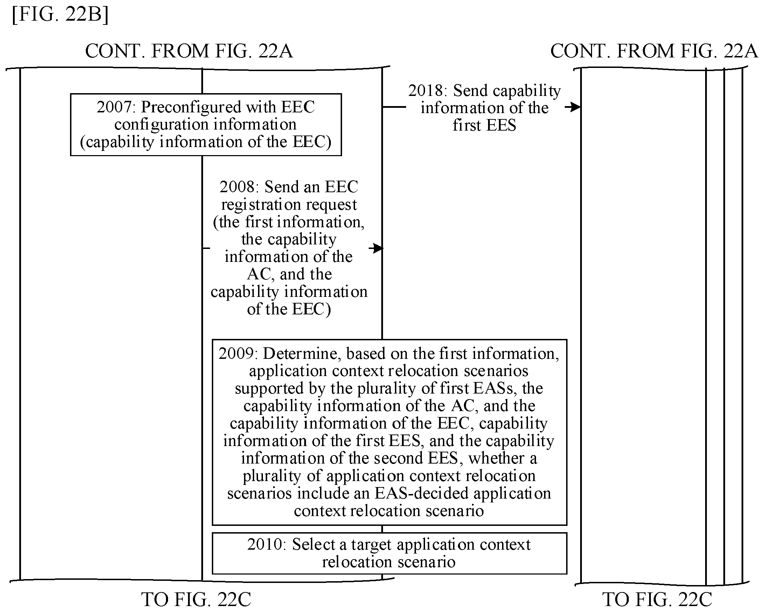

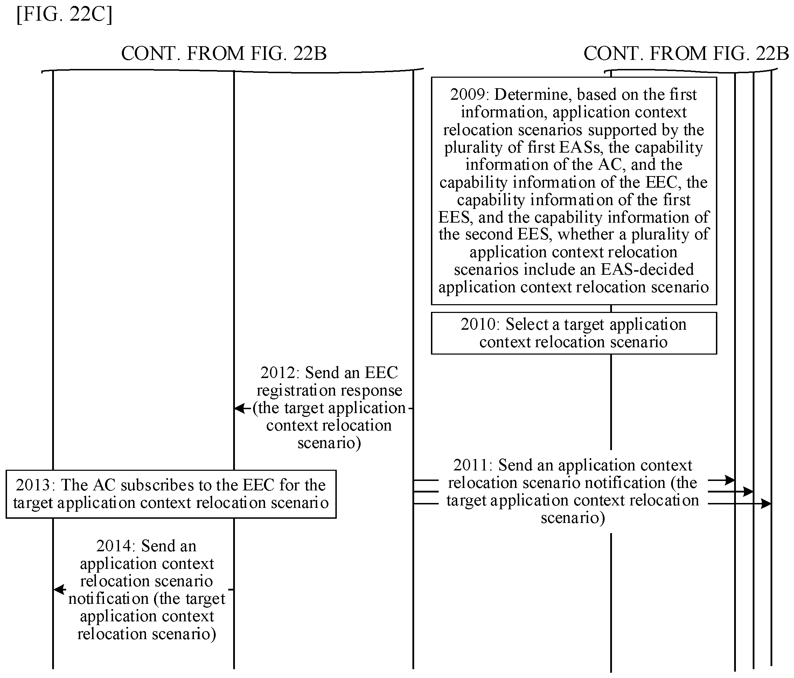

FIG. 22A to FIG. 22C show still another specific implementation of Implementation (2). A plurality of second entities include an AC, an EEC, and an EES. There are a plurality of EESs. That is, a plurality of first EASs that need to perform application context relocation together are registered with the plurality of different EESs. When a first entity is an EES (denoted as a first EES) in the plurality of EESs, the first EES determines, based on capability information of the plurality of second entities, a target application context relocation scenario for at least one EAS that is in the plurality of first EASs and that is registered with the first EES. In addition, another EES (for example, a second EES) in the plurality of EESs may also determine, based on capability information of the plurality of second entities, a target application context relocation scenario for at least one first EAS that is in a plurality of second EASs and that is registered with the second EES. In this specific implementation, for content that is not described in detail, refer to the descriptions in Implementation (2) or the embodiment related to FIG. 18, FIG. 20A and FIG. 20B, or FIG. 21A and FIG. 21B.

It should be noted that, for ease of description, only the first EES and the second EES are shown in FIG. 22A to FIG. 22C. The second EES is another EES different from the first EES in the plurality of EESs. When the plurality of second entities further include another EES (for example, a third EES), for an interaction manner between the first EES and the third EES, refer to the interaction manner between the first EES and the second EES. Certainly, a quantity of the plurality of EESs is not limited in this application.

Further, for step 2001 to step 2016 included in FIG. 22A to FIG. 22C, refer to step 2001 to step 2016 shown in FIG. 21A and FIG. 21B. A difference lies in that when determining the target application context relocation scenario, the first EES specifically determines the target application context relocation scenario for the at least one first EAS registered with the first EES. Correspondingly, in FIG. 22A to FIG. 22C, the second EES may also perform step 2009 and step 2010, to determine, based on first information, application context relocation scenarios supported by the plurality of first EASs, capability information of the AC, capability information of the EEC, capability information of the first EES, and capability information of the second EES, whether the plurality of application context relocation scenarios include an application context relocation scenario decided by the first EAS, to determine the target application context relocation scenario for the at least one first EAS registered with the second EES. For implementations of step 2009 and step 2010, refer to the descriptions of step 1802-b.

In addition, FIG. 22A to FIG. 22C further include the following step 2017 and step 2018.

Step 2017: The second EES sends a second capability request to the first EES, where the second capability request is used by the second EES to request the capability information of the first EES from the first EES.

Step 2018: After receiving the second capability request, the first EES sends the capability information of the first EES to the second EES. In this way, the second EES obtains the capability information of the first EES.

Certainly, in this application, there may be another implementation in which the second EES obtains the capability information of the first EES.

Step 2017 and step 2018 are performed before step 2009.

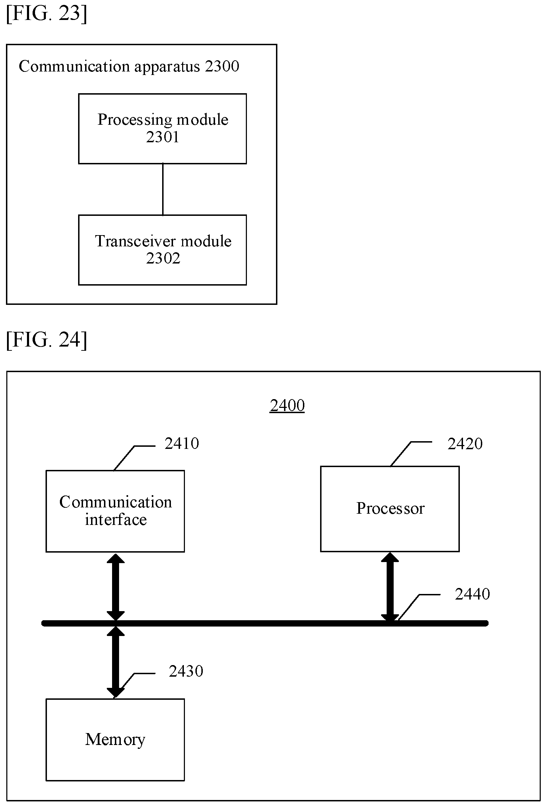

Based on the foregoing content and a same concept, FIG. 23 and FIG. 24 are diagrams of structures of possible communication apparatuses according to this application. These communication apparatuses may be configured to implement functions in the foregoing method embodiments, and therefore can also implement beneficial effects of the foregoing method embodiments.

In this application, the communication apparatus may be the EEC, the EES, the AC, or the EAS shown in FIG. 1.

As shown in FIG. 23, the communication apparatus 2300 includes a processing module 2301 and a transceiver module 2302.

The processing module 2301 in the communication apparatus 2300 may be configured to implement functions of the first entity (for example, the EEC or the EES), the AC, or the EAS (for example, the third EAS) in the method embodiment shown in any one of FIG. 3 to FIG. 6, FIG. 12, and FIG. 13. The transceiver module 2302 may be configured to support communication between the communication apparatus 2300 and another communication device. For example, when the communication apparatus 2300 is the EES, the transceiver module 2302 may be configured to receive, by the EES, first information from the AC.

Alternatively, the processing module 2301 in the communication apparatus 2300 may be configured to implement functions of the first entity (for example, the EEC or the EES), the AC, or the EAS (for example, the third EAS) in the method embodiment shown in any one of FIG. 7 to FIG. 9, FIG. 14, and FIG. 15. The transceiver module 2302 may be configured to support communication between the communication apparatus 2300 and another communication device. For example, when the communication apparatus 2300 is the EES, the transceiver module 2302 may be configured to receive, by the EES, first information from the AC.

Alternatively, the processing module 2301 in the communication apparatus 2300 may be configured to implement a function of the EAS (for example, the fourth EAS) or the AC in the method embodiment shown in FIG. 10, FIG. 11, or FIG. 16. The transceiver module 2302 may be configured to support communication between the communication apparatus 2300 and another communication device. For example, when the communication apparatus 2300 is the fourth EAS, the transceiver module 2302 may be configured to send, by the fourth EAS to the first entity (for example, the EEC or the EES), an application context relocation scenario supported by the fourth EAS.

Alternatively, the processing module 2301 in the communication apparatus 2300 may be configured to implement functions of the first entity (for example, the EEC or the EES), the AC, or the EAS (for example, the first EAS) in the method embodiment shown in FIG. 17 or FIG. 19. The transceiver module 2302 may be configured to support communication between the communication apparatus 2300 and another communication device. For example, when the communication apparatus 2300 is the first entity (for example, the EES), the transceiver module 2302 may be configured to receive, by the EES, capability information of the first EAS from the first EAS.

Alternatively, the processing module 2301 in the communication apparatus 2300 may be configured to implement functions of the first entity (for example, the EEC or the EES), the second entity (for example, the EEC, the EES, or the AC), the AC, or the EAS (for example, the first EAS) in the method embodiment shown in FIG. 18, FIG. 20A and FIG. 20B, FIG. 21A and FIG. 21B, or FIG. 22A to FIG. 22C. The transceiver module 2302 may be configured to support communication between the communication apparatus 2300 and another communication device. For example, when the communication apparatus 2300 is the first entity (for example, the EES) and the second entity is the EEC, the transceiver module 2302 may be configured to receive, by the EES, capability information of the EEC from the EEC.

FIG. 24 shows an apparatus 2400 according to an embodiment of this application. The apparatus shown in FIG. 24 may be an implementation of a hardware circuit of the apparatus shown in FIG. 23. The apparatus is applicable to the flowcharts shown above, and performs functions of the first terminal device or the second terminal device in the foregoing method embodiments.

For ease of description, FIG. 24 shows only main components of the apparatus.

The apparatus 2400 shown in FIG. 24 includes a communication interface 2410, a processor 2420, and a memory 2430. The memory 2430 is configured to store program instructions and/or data. The processor 2420 may collaborate with the memory 2430. The processor 2420 may execute the program instructions stored in the memory 2430. When the instructions or the program stored in the memory 2430 is executed, the processor 2420 is configured to perform operations performed by the processing module 2301 in the foregoing embodiments, and the communication interface 2410 is configured to perform operations performed by the transceiver module 2302 in the foregoing embodiments.

The memory 2430 is coupled to the processor 2420. The coupling in this embodiment of this application may be an indirect coupling or a communication connection between apparatuses, units, or modules in an electrical form, a mechanical form, or another form, and is used for information exchange between the apparatuses, the units, or the modules. At least one of the memories 2430 may be included in the processor 2420.

In this embodiment of this application, the communication interface may be a transceiver, a circuit, a bus, a module, or a communication interface of another type. In embodiments of this application, when the communication interface is the transceiver, the transceiver may include an independent receiver and an independent transmitter, or may be a transceiver integrated with a transceiver function or a communication interface.

The apparatus 2400 may further include a communication line 2440. The communication interface 2410, the processor 2420, and the memory 2430 may be interconnected through the communication line 2440. The communication line 2440 may be a peripheral component interconnect (peripheral component interconnect, PCI for short) bus, an extended industry standard architecture (extended industry standard architecture, EISA for short) bus, or the like. The communication line 2440 may be classified into an address bus, a data bus, a control bus, and the like. For ease of representation, only one thick line is used to represent the communication line in FIG. 24, but this does not mean that there is only one bus or only one type of bus.

An embodiment of this application further provides a computer-readable storage medium, including instructions. When the instructions are run on a computer, the computer is enabled to implement a function of the first entity (for example, the EEC or the EES), the AC, or the EAS (for example, the third EAS) in the method embodiment shown in any one of FIG. 3 to FIG. 6, FIG. 12, and FIG. 13; or implement a function of the first entity (for example, the EEC or the EES), the AC, or the EAS (for example, the third EAS) in the method embodiment shown in any one of FIG. 7 to FIG. 9, FIG. 14, and FIG. 15; or implement a function of the EAS (for example, the fourth EAS) or the AC in the method embodiment shown in any one of FIG. 10, FIG. 11, or FIG. 16; or implement a function of the first entity (for example, the EEC or the EES), the AC, or the EAS (for example, the first EAS) in the method embodiment shown in FIG. 17 or FIG. 19; or implement a function of the first entity (for example, the EEC or the EES), the second entity (for example, the EEC, the EES, or the AC), the AC, or the EAS (for example, the first EAS) in the method embodiment shown in FIG. 18, FIG. 20A and FIG. 20B, FIG. 21A and FIG. 21B, or FIG. 22A to FIG. 22C.

An embodiment of this application further provides a computer program product, including computer instructions. When the computer instructions are run on a computer, the computer is enabled to implement a function of the first entity (for example, the EEC or the EES), the AC, or the EAS (for example, the third EAS) in the method embodiment shown in any one of FIG. 3 to FIG. 6, FIG. 12, and FIG. 13; or implement a function of the first entity (for example, the EEC or the EES), the AC, or the EAS (for example, the third EAS) in the method embodiment shown in any one of FIG. 7 to FIG. 9, FIG. 14, and FIG. 15; or implement a function of the EAS (for example, the fourth EAS) or the AC in the method embodiment shown in FIG. 10, FIG. 11, or FIG. 16; or implement a function of the first entity (for example, the EEC or the EES), the AC, or the EAS (for example, the first EAS) in the method embodiment shown in FIG. 17 or FIG. 19; or implement a function of the first entity (for example, the EEC or the EES), the second entity (for example, the EEC, the EES, or the AC), the AC, or the EAS (for example, the first EAS) in the method embodiment shown in FIG. 18, FIG. 20A and FIG. 20B, FIG. 21A and FIG. 21B, or FIG. 22A to FIG. 22C.

An embodiment of this application further provides a chip system, including: a processor. The processor is coupled to a memory, and the memory is used to store a program or instructions. When the program or the instructions are executed by the processor, the chip system is enabled to implement a function of the first entity (for example, the EEC or the EES), the AC, or the EAS (for example, the third EAS) in the method embodiment shown in any one of FIG. 3 to FIG. 6, FIG. 12, and FIG. 13; or implement a function of the first entity (for example, the EEC or the EES), the AC, or the EAS (for example, the third EAS) in the method embodiment shown in any one of FIG. 7 to FIG. 9, FIG. 14, and FIG. 15; or implement a function of the EAS (for example, the fourth EAS) or the AC in the method embodiment shown in FIG. 10, FIG. 11, or FIG. 16; or implement a function of the first entity (for example, the EEC or the EES), the AC, or the EAS (for example, the first EAS) in the method embodiment shown in FIG. 17 or FIG. 19; or implement a function of the first entity (for example, the EEC or the EES), the second entity (for example, the EEC, the EES, or the AC), the AC, or the EAS (for example, the first EAS) in the method embodiment shown in FIG. 18, FIG. 20A and FIG. 20B, FIG. 21A and FIG. 21B, or FIG. 22A to FIG. 22C.

An embodiment of this application further provides a communication system, including one or more of a first entity (for example, an EEC or an EES), an AC, or an EAS. The first entity has functions of the first entity in the method embodiments shown in FIG. 3 to FIG. 6, FIG. 12, and FIG. 13. The AC has functions of the AC in the method embodiments shown in FIG. 3 to FIG. 6, FIG. 12, and FIG. 13. The EAS has functions of the third EAS in the method embodiments shown in FIG. 3 to FIG. 6, FIG. 12, and FIG. 13.

An embodiment of this application further provides a communication system, including one or more of a first entity (for example, an EEC or an EES), an AC, or an EAS. The first entity has functions of the first entity in the method embodiments shown in FIG. 7 to FIG. 9, FIG. 14, and FIG. 15. The AC has functions of the AC in the method embodiments shown in FIG. 7 to FIG. 9, FIG. 14, and FIG. 15. The EAS has functions of the third EAS in the method embodiments shown in FIG. 7 to FIG. 9, FIG. 14, and FIG. 15.

An embodiment of this application further provides a communication system, including one or more of a first entity (for example, an EEC or an EES), an AC, or an EAS. The first entity has functions of the first entity in the method embodiments shown in FIG. 10, FIG. 11, and FIG. 16. The AC has functions of the AC in the method embodiments shown in FIG. 10, FIG. 11, and FIG. 16. The EAS has functions of the fourth EAS in the method embodiments shown in FIG. 10, FIG. 11, and FIG. 16.

An embodiment of this application further provides a communication system, including one or more of a first entity (for example, an EEC or an EES), an AC, or an EAS. The first entity has a function of the first entity in the method embodiment shown in FIG. 17 or FIG. 19. The AC has a function of the AC in the method embodiment shown in FIG. 17 or FIG. 19. The EAS has a function of the first EAS in the method embodiment shown in FIG. 17 or FIG. 19.

An embodiment of this application further provides a communication system, including one or more of a first entity (for example, an EEC or an EES), a second entity (for example, the EEC, the EES, or an AC), the AC, or an EAS. The first entity has a function of the first entity in the method embodiment shown in any one of FIG. 18, and FIG. 20A and FIG. 20B to FIG. 22A to FIG. 22C. The AC has a function of the AC in the method embodiment shown in any one of FIG. 18, and FIG. 20A and FIG. 20B to FIG. 22A to FIG. 22C. The second entity has a function of the second entity in the method embodiment shown in any one of FIG. 18, and FIG. 20A and FIG. 20B to FIG. 22A to FIG. 22C. The EAS has a function of the first EAS in the method embodiment shown in any one of FIG. 18, and FIG. 20A and FIG. 20B to FIG. 22A to FIG. 22C.

All or a part of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, multiple microprocessors, one or more microprocessors with a digital signal processor core, or any other similar configuration.

In one or more example designs, the functions described in this application may be implemented by using hardware, software, firmware, or any combination thereof. If the functions are implemented by software, these functions may be stored in a computer-readable medium or are transmitted to the computer-readable medium in a form of one or more instructions or code. The computer-readable medium includes a computer storage medium and a communication medium that enables a computer program to move from one place to another. The storage media may be an available medium that may be accessed by any general or special computer. For example, such a computer-readable medium may include but is not limited to a RAM, a ROM, an EEPROM, a CD-ROM, or another optical disc storage, a disk storage or another magnetic storage apparatus, or any other medium that may be used to bear or store program code. The program code is in a form of instructions or a data structure or in a form that can be read by a general or special computer or a general or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disk (disk) and the disc (disc) include a compact disc, a laser disc, an optical disc, a digital versatile disc (English: Digital Versatile Disc, DVD for short), a floppy disk, and a Blu-ray disc. The disc usually copies data in a magnetic manner, and the disk usually optically copies data in a laser manner. The foregoing combination may also be included in the computer-readable medium.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A method for determining an application context relocation scenario, comprising:
obtaining (1701, 1801), by a first entity, capability information of a plurality of first edge application servers EASs, or capability information of one or more second entities; and
determining (1702, 1802), by the first entity, a corresponding target application context relocation scenario for at least one of the plurality of first EASs based on the capability information of the plurality of first EASs or the capability information of the one or more second entities,
**characterized in that**:
the plurality of first EASs are associated EASs, and application contexts in the associated EASs need to be relocated together; and
the capability information of the second entity indicates whether the second entity has a capability of processing relocation of the application contexts in the associated EASs together, or the capability information of the first EAS indicates whether the first EAS has the capability of processing relocation of the application contexts in the associated EASs together.

2. The method according to claim 1, wherein the first entity is an EEC or an EES.

3. The method according to claim 1 or 2, wherein when the first entity obtains the capability information of the one or more second entities, the one or more second entities are one or more of: an application client AC, an edge enabler client EEC, or an edge enabler server EES.

4. The method according to any one of claims 1 to 3, wherein the capability information of the second entity indicates whether the second entity supports one or more of the following capabilities:
a capability of obtaining identifiers of the plurality of first EASs; and
a capability of receiving a relocation notification trigger indication from one of the plurality of first EASs, and sending a relocation notification to another first EAS in the plurality of first EASs,
wherein
the relocation notification is used to trigger application context relocation.

5. The method according to any one of claims 1 to 4, further comprising:
when the first entity is an EEC, if the second entity is an AC, receiving, by the EEC, capability information of the AC from the AC; and/or if the second entity is an EES, receiving, by the EEC, capability information of the EES from the EES; and
when the first entity is an EES, if the second entity is an EEC, receiving, by the EES, capability information of the EEC from the EEC; and/or if the second entity is an AC, receiving, by the EES from the EEC, capability information of the AC forwarded by the EEC.

6. The method according to any one of claims 1 to 5, further comprising:
receiving, by the first entity, first information, wherein the first information indicates that the plurality of first EASs are associated EASs.

7. The method according to any one of claims 1 to 6, wherein the plurality of first EASs are registered with a plurality of EESs.

8. The method according to claim 7, wherein the one or more second entities comprise the plurality of EESs, and capability information of a first EES indicates whether the first EES supports one or more of the following capabilities:
a capability of obtaining identifiers of the plurality of first EASs;
a capability of obtaining an identifier of at least one first EAS registered with the first EES;
a capability of obtaining identifiers of the plurality of EESs;
a capability of receiving a relocation notification trigger indication from one of the plurality of first EASs, and sending a relocation notification to another first EAS in the plurality of first EASs
wherein
the relocation notification is used to trigger application context relocation; and
the first EES is one of the plurality of EESs.

9. The method according to claim 7 or 8, wherein the determining, by the first entity, a corresponding target application context relocation scenario for at least one of a plurality of first EASs based on the capability information of the second entity comprises:
when the first entity is the first EES, determining, by the first EES based on the capability information of the second entity, a corresponding target application context relocation scenario for at least one first EAS that is in the plurality of first EASs and that is registered with the first EES, wherein the first EES is one of the plurality of EESs.

10. The method according to claim 7 or 8, wherein the determining, by the first entity, a corresponding target application context relocation scenario for at least one of a plurality of first EASs based on the capability information of the second entity comprises:
when the first entity is a first EES, determining, by the first EES, corresponding target application context relocation scenarios for the plurality of first EASs based on the capability information of the second entity, wherein
the first EES is an EES that is in the plurality of EESs and that is specified by the AC or the EEC; or
a third indication is preconfigured in the first EES, and the third indication indicates that the first EES is an EES that is in the plurality of EESs and that is configured to determine the corresponding target application context relocation scenarios for the plurality of first EASs; or
the first EES is an EES that is in the plurality of EESs and with which a main EAS is registered.

11. The method according to any one of claims 7 to 10, wherein
when the first entity is the first EES and the second entity comprises another EES in the plurality of EESs, the first EES receives capability information of the another EES from the another EES;
and
the first EES is one of the plurality of EESs.

12. The method according to any one of claims 1 or 2, wherein, when the first entity obtains the capability information of the plurality of first EASs, the method further comprises:
when the first entity is an edge enabler client EEC, receiving, by the EEC from an edge enabler server EES, the capability information of the plurality of first EASs forwarded by the EES; or
when the first entity is an EES, receiving, by the EES, capability information of each of the plurality of first EASs from a corresponding first EAS.

13. A communication apparatus (2300), configured to perform the method according to any one of claims 1 to 12.

14. A computer-readable storage medium, wherein the computer-readable storage medium stores a computer program or instructions, and when the computer program or the instructions are executed by a communication apparatus, the method according to any one of claims 1 to 12 is implemented.

15. A computer program product, wherein the computer program product comprises a computer program or instructions, and when the computer program or the instructions are executed by a communication apparatus, the method according to any one of claims 1 to 12 is implemented.

16. A communication system, comprising the communication apparatus according to claim 13 and an application client AC, wherein the AC is configured to send capability information of the AC.

## Patentansprüche

1. Verfahren zum Bestimmen eines Anwendungskontextverlagerungsszenarios, umfassend: Erlangen (1701, 1801), durch eine erste Entität, von Kapazitätsinformationen einer Vielzahl erster Edge-Anwendungsserver, EASs, oder von Kapazitätsinformationen einer oder mehrerer zweiter Entitäten; und
Bestimmen (1702, 1802), durch die erste Entität, eines entsprechenden Zielanwendungskontextverlagerungsszenarios für mindestens einen der Vielzahl erster EASs basierend auf den Kapazitätsinformationen der Vielzahl erster EASs oder den Kapazitätsinformationen der einen oder der mehreren zweiten Entitäten, **dadurch gekennzeichnet, dass**:
die Vielzahl erster EASs aus zugeordneten EASs besteht und Anwendungskontexte in den zugeordneten EASs gemeinsam verlagert werden müssen; und
die Kapazitätsinformationen der zweiten Entität angeben, ob die zweite Entität eine Kapazität zum Verarbeiten der gemeinsamen Verlagerung der Anwendungskontexte in den zugeordneten EASs aufweist, oder die Kapazitätsinformationen des ersten EAS angeben, ob der erste EAS die Kapazität zum Verarbeiten der gemeinsamen Verlagerung der Anwendungskontexte in den zugeordneten EASs aufweist.

2. Verfahren nach Anspruch 1, wobei die erste Entität ein EEC oder ein EES ist.

3. Verfahren nach Anspruch 1 oder 2, wobei, wenn die erste Entität die Kapazitätsinformationen der einen oder der mehreren zweiten Entitäten erlangt, die eine oder die mehreren zweiten Entitäten ein oder mehrere von Folgendem sind: einem Anwendungsclient, AC, einem Edge-Enabler-Client, EEC, oder einem Edge-Enabler-Server, EES.

4. Verfahren nach einem der Ansprüche 1 bis 3, wobei die Kapazitätsinformationen der zweiten Entität angeben, ob die zweite Entität eine oder mehrere der folgenden Kapazitäten unterstützt:
einer Kapazität zum Erlangen von Kennungen der Vielzahl erster EASs; und
einer Kapazität zum Empfangen einer Verlagerungsbenachrichtigungsauslösungsangabe von einem der Vielzahl erster EASs und Senden einer Verlagerungsbenachrichtigung an einen anderen ersten EAS in der Vielzahl erster EASs, wobei
die Verlagerungsbenachrichtigung dazu verwendet wird, die Anwendungskontextverlagerung auszulösen.

5. Verfahren nach einem der Ansprüche 1 bis 4, ferner umfassend:
wenn die erste Einheit ein EEC ist, falls die zweite Einheit ein AC ist, Empfangen, durch den EEC, von Kapazitätsinformationen des AC von dem AC; und/oder, falls die zweite Entität ein EES ist, Empfangen, durch den EEC, von Kapazitätsinformationen des EES von dem EES; und
wenn die erste Einheit ein EES ist, falls die zweite Einheit ein EEC ist, Empfangen, durch den EES, von Kapazitätsinformationen des EEC von dem EEC; und/oder, falls die zweite Entität ein AC ist, Empfangen, durch den EES von dem EEC, von Kapazitätsinformationen des AC, die durch den EEC weitergeleitet werden.

6. Verfahren nach einem der Ansprüche 1 bis 5, ferner umfassend: Empfangen, durch die erste Entität, erster Informationen, wobei die ersten Informationen angeben, dass die Vielzahl erster EASs aus zugeordneten EASs besteht.

7. Verfahren nach einem der Ansprüche 1 bis 6, wobei die Vielzahl erster EASs bei einer Vielzahl von EESs registriert ist.

8. Verfahren nach Anspruch 7, wobei die eine oder die mehreren zweiten Entitäten die Vielzahl von EESs umfassen und Kapazitätsinformationen eines ersten EES angeben, ob der erste EES eine oder mehrere der folgenden Kapazitäten unterstützt:
einer Kapazität zum Erlangen von Kennungen der Vielzahl erster EASs;
einer Kapazität zum Erlangen einer Kennung mindestens eines ersten EAS, der bei dem ersten EES registriert ist;
einer Kapazität zum Erlangen von Kennungen der Vielzahl von EESs;
einer Kapazität zum Empfangen einer Verlagerungsbenachrichtigungsauslösungsangabe von einem der Vielzahl erster EASs und Senden einer Verlagerungsbenachrichtigung an einen anderen ersten EAS in der Vielzahl erster EASs, wobei
die Verlagerungsbenachrichtigung dazu verwendet wird, die Anwendungskontextverlagerung auszulösen; und
der erste EES einer der Vielzahl von EESs ist.

9. Verfahren nach Anspruch 7 oder 8, wobei das Bestimmen, durch die erste Entität, eines entsprechenden Zielanwendungskontextverlagerungsszenarios für mindestens einen einer Vielzahl erster EASs basierend auf den Kapazitätsinformationen der zweiten Entität Folgendes umfasst: wenn die erste Entität der erste EES ist, Bestimmen, durch den ersten EES basierend auf den Kapazitätsinformationen der zweiten Entität, eines entsprechenden Zielanwendungskontextverlagerungsszenarios für mindestens einen ersten EAS, der sich in der Vielzahl erster EASs befindet und der bei dem ersten EES registriert ist, wobei der erste EES einer der Vielzahl von EESs ist.

10. Verfahren nach Anspruch 7 oder 8, wobei das Bestimmen, durch die erste Entität, eines entsprechenden Zielanwendungskontextverlagerungsszenarios für mindestens einen einer Vielzahl erster EASs basierend auf den Kapazitätsinformationen der zweiten Entität Folgendes umfasst:
wenn die erste Entität ein erster EES ist, Bestimmen, durch den ersten EES, entsprechender Zielanwendungskontextverlagerungsszenarien für die Vielzahl erster EASs basierend auf den Kapazitätsinformationen der zweiten Entität, wobei
der erste EES ein EES ist, der sich in der Vielzahl von EESs befindet und der durch den AC oder den EEC spezifiziert wird;
oder
eine dritte Angabe in dem ersten EES vorkonfiguriert ist und die dritte Angabe angibt, dass der erste EES ein EES ist, der sich in der Vielzahl von EESs befindet und der dazu konfiguriert ist, die entsprechenden Zielanwendungskontextverlagerungsszenarien für die Vielzahl erster EASs zu bestimmen; oder
der erste EES ein EES ist, der sich in der Vielzahl von EESs befindet und bei dem ein Haupt-EAS registriert ist.

11. Verfahren nach einem der Ansprüche 7 bis 10, wobei,
wenn die erste Entität der erste EES ist und die zweite Entität einen anderen EES in der Vielzahl von EESs umfasst, der erste EES Kapazitätsinformationen des anderen EES von dem anderen EES empfängt; und
der erste EES einer der Vielzahl von EESs ist.

12. Verfahren nach einem der Ansprüche 1 oder 2, wobei das Verfahren, wenn die erste Entität die Kapazitätsinformationen der Vielzahl erster EASs erlangt, ferner Folgendes umfasst:
wenn die erste Entität ein Edge-Enabler-Client, EEC, ist, Empfangen, durch den EEC von einem Edge-Enabler-Server, EES, der Kapazitätsinformationen der Vielzahl erster EASs, die durch den EES weitergeleitet werden; oder
wenn die erste Entität ein EES ist, Empfangen, durch den EES, von Kapazitätsinformationen jedes der Vielzahl erster EASs von einem entsprechenden ersten EAS.

13. Kommunikationsvorrichtung (2300), die dazu konfiguriert ist, das Verfahren nach einem der Ansprüche 1 bis 12 durchzuführen.

14. Computerlesbares Speichermedium, wobei das computerlesbare Speichermedium ein Computerprogramm oder Anweisungen speichert und, wenn das Computerprogramm oder die Anweisungen durch eine Kommunikationsvorrichtung ausgeführt werden, das Verfahren nach einem der Ansprüche 1 bis 12 umgesetzt wird.

15. Computerprogrammprodukt, wobei das Computerprogrammprodukt ein Computerprogramm oder Anweisungen umfasst und, wenn das Computerprogramm oder die Anweisungen durch eine Kommunikationsvorrichtung ausgeführt werden, das Verfahren nach einem der Ansprüche 1 bis 12 umgesetzt wird.

16. Kommunikationssystem, umfassend die Kommunikationsvorrichtung nach Anspruch 13 und einen Anwendungsclient, AC, wobei der AC dazu konfiguriert ist, Kapazitätsinformationen des AC zu senden.

## Revendications

1. Procédé de détermination d'un scénario de relocalisation de contexte d'application, comprenant : l'obtention (1701, 1801), par une première entité, d'informations de capacité d'une pluralité de premiers serveurs d'application en périphérie, EAS, ou d'informations de capacité d'une ou plusieurs secondes entités ; et
la détermination (1702, 1802), par la première entité, d'un scénario de relocalisation de contexte d'application cible correspondant pour au moins l'un de la pluralité de premiers EAS sur la base des informations de capacité de la pluralité de premiers EAS ou des informations de capacité des une ou plusieurs secondes entités, **caractérisé en ce que** :
la pluralité de premiers EAS sont des EAS associés, et les contextes d'application dans les EAS associés doivent être relocalisés conjointement ; et
les informations de capacité de la seconde entité indiquent si la seconde entité a la capacité de traiter conjointement la relocalisation des contextes d'application dans les EAS associés, ou les informations de capacité du premier EAS indiquent si le premier EAS a la capacité de traiter conjointement la relocalisation des contextes d'application dans les EAS associés.

2. Procédé selon la revendication 1, dans lequel la première entité est un EEC ou un EES.

3. Procédé selon la revendication 1 ou 2, dans lequel lorsque la première entité obtient les informations de capacité des une ou plusieurs secondes entités, les une ou plusieurs secondes entités sont l'un ou plusieurs des éléments suivants : un client d'application AC, un client d'activation en périphérie EEC ou un serveur d'activation en périphérie EES.

4. Procédé selon l'une quelconque des revendications 1 à 3, dans lequel les informations de capacité de la seconde entité indiquent si la seconde entité prend en charge l'une ou plusieurs des capacités suivantes :
une capacité d'obtention des identifiants de la pluralité de premiers EAS ; et
une capacité de réception d'une indication de déclenchement de notification de relocalisation à partir de l'un de la pluralité de premiers EAS, et d'envoi d'une notification de relocalisation à un autre premier EAS parmi la pluralité de premiers EAS, dans lequel
la notification de relocalisation est utilisée pour déclencher la relocalisation de contexte d'application.

5. Procédé selon l'une quelconque des revendications 1 à 4, comprenant en outre :
lorsque la première entité est un EEC, si la seconde entité est un AC, la réception, par l'EEC, d'informations de capacités de l'AC à partir de l'AC ; et/ou si la seconde entité est un EES, la réception, par l'EEC, d'informations de capacités de l'EES à partir de l'EES ; et
lorsque la première entité est un EES, si la seconde entité est un EEC, la réception, par l'EES, d'informations de capacités de l'EEC à partir de l'EEC ; et/ou si la seconde entité est un AC, la réception, par l'EES à partir de l'EEC, d'informations de capacités de l'AC transférées par l'EEC.

6. Procédé selon l'une quelconque des revendications 1 à 5, comprenant en outre :
la réception, par la première entité, de premières informations, dans lequel les premières informations indiquent que la pluralité de premiers EAS sont des EAS associés.

7. Procédé selon l'une quelconque des revendications 1 à 6, dans lequel la pluralité de premiers EAS sont enregistrés auprès d'une pluralité d'EES.

8. Procédé selon la revendication 7, dans lequel les une ou plusieurs secondes entités comprennent la pluralité d'EES, et les informations de capacité d'un premier EES indiquent si le premier EES prend en charge l'une ou plusieurs des capacités suivantes :
une capacité d'obtention des identifiants de la pluralité de premiers EAS ;
une capacité d'obtention d'un identifiant d'au moins un premier EAS enregistré auprès du premier EES ;
une capacité d'obtention des identifiants de la pluralité d'EES ;
une capacité de réception d'une indication de déclenchement de notification de relocalisation à partir de l'un de la pluralité de premiers EAS, et d'envoi d'une notification de relocalisation à un autre premier EAS parmi la pluralité de premiers EAS, dans lequel
la notification de relocalisation est utilisée pour déclencher la relocalisation de contexte d'application ; et
le premier EES est l'un de la pluralité d'EES.

9. Procédé selon la revendication 7 ou 8, dans lequel la détermination, par la première entité, d'un scénario de relocalisation de contexte d'application cible correspondant pour au moins l'un de la pluralité de premiers EAS sur la base des informations de capacité de la seconde entité comprend :
lorsque la première entité est le premier EES, la détermination, par le premier EES sur la base des informations de capacité de la seconde entité, d'un scénario de relocalisation de contexte d'application cible correspondant pour au moins un premier EAS parmi la pluralité de premiers EAS et qui est enregistré auprès du premier EES, dans lequel le premier EES est l'un de la pluralité d'EES.

10. Procédé selon la revendication 7 ou 8, dans lequel la détermination, par la première entité, d'un scénario de relocalisation de contexte d'application cible correspondant pour au moins l'un des premiers EAS sur la base des informations de capacité de la seconde entité comprend :
lorsque la première entité est un premier EES, la détermination, par le premier EES, de scénarios de relocalisation de contexte d'application cible correspondants pour la pluralité de premiers EAS sur la base des informations de capacité de la seconde entité, dans lequel
le premier EES est un EES parmi la pluralité d'EES et qui est spécifié par l'AC ou l'EEC ; ou
une troisième indication est préconfigurée dans le premier EES, et la troisième indication indique que le premier EES est un EES parmi la pluralité d'EES et qui est configuré pour déterminer les scénarios de relocalisation de contexte d'application cible correspondants pour la pluralité de premiers EAS ; ou
le premier EES est un EES parmi la pluralité d'EES et auprès duquel un EAS principal est enregistré.

11. Procédé selon l'une quelconque des revendications 7 à 10, dans lequel
lorsque la première entité est le premier EES et que la seconde entité comprend un autre EES parmi la pluralité d'EES, le premier EES reçoit des informations de capacité de l'autre EES à partir de l'autre EES ; et
le premier EES est l'un de la pluralité d'EES.

12. Procédé selon l'une quelconque des revendications 1 ou 2, dans lequel, lorsque la première entité obtient les informations de capacité de la pluralité de premiers EAS, le procédé comprend en outre :
lorsque la première entité est un client d'activation en périphérie, EEC, la réception, par l'EEC d'un serveur d'activation en périphérie, EES, des informations de capacité de la pluralité de premiers EAS transférées par l'EES ; ou
lorsque la première entité est un EES, la réception, par l'EES, d'informations de capacité de chacun de la pluralité de premiers EAS d'un premier EAS correspondant.

13. Appareil de communication (2300), configuré pour réaliser le procédé selon l'une quelconque des revendications 1 à 12.

14. Support de stockage lisible par ordinateur, dans lequel le support de stockage lisible par ordinateur stocke un programme informatique ou des instructions, et lorsque le programme informatique ou les instructions sont exécutés par un appareil de communication, le procédé selon l'une quelconque des revendications 1 à 12 est mis en œuvre.

15. Produit de programme informatique, dans lequel le produit de programme informatique comprend un programme informatique ou des instructions, et lorsque le programme informatique ou les instructions sont exécutés par un appareil de communication, le procédé selon l'une quelconque des revendications 1 à 12 est mis en œuvre.

16. Système de communication, comprenant l'appareil de communication selon la revendication 13 et un client d'application AC, dans lequel l'AC est configuré pour envoyer des informations de capacité de l'AC.
